(19) Europäisches Patentamt
European Patent Office
Office européen des brevets

(11) EP 0 931 805 A1

(12) EUROPEAN PATENT APPLICATION
published in accordance with Art. 158(3) EPC

(43) Date of publication:
28.07.1999 Bulletin 1999/30

(21) Application number: 98911105.9

(22) Date of filing: 30.03.1998

(51) Int. Cl.$^6$: C08G 65/32, C09K 3/18, C08J 5/18, A01G 9/14

(86) International application number:
PCT/JP98/01446

(87) International publication number:
WO 98/44023 (08.10.1998 Gazette 1998/40)

(84) Designated Contracting States:
ES FR IT

(30) Priority: 28.03.1997 JP 7864697
29.09.1997 JP 26301997

(71) Applicant:
Mitsui Chemicals, Inc.
Tokyo 100-6070 (JP)

(72) Inventors:
- OHTA, Seiji
Kuga-gun Yamaguchi-ken 740-0061 (JP)
- FUKUTANI, Kenzaburo
Mitsui chemicals, Inc.
Yamaguchi-ken 740-0061 (JP)
- OHE, Tatsuya
Mitsui chemicals, Inc.
Yamaguchi-ken 740-0061 (JP)
- KURISU, Masayoshi
Mitsui chemicals, Inc.
Yamaguchi-ken 740-0061 (JP)

(74) Representative: HOFFMANN - EITLE
Patent- und Rechtsanwälte
Arabellastrasse 4
81925 München (DE)

# (54) TRIBLOCK OLIGOMERS, THERMOPLASTIC RESIN COMPOSITIONS, AND ANTIFOG MOLDINGS

(57) A triblock oligomer (A) which has a structure represented by the following formula (I) and a weight average molecular weight 100 to 8000 is provided. The triblock oligomer (A) exhibits excellent initial and long term antistatic performance as well as excellent initial and long term antifogging performance. Also provided are a thermoplastic resin composition containing such triblock oligomer (A), and an extruded/molded article wherein ratio of oxygen atom number to carbon atom number on the surface, the average particle diameter of the dispersed particles, ratio of the average particle diameter in the major axis to the average particle diameter in the minor axis, and average distance between gravity center of the dispersed particles are within particular ranges.

$$A—B—C \quad (I)$$

(A: $R^1$ - X -;
B: - $(R^2 - O)_m$ - $(R^3 - O)_n$ -;
C: —$R^4$—Y—$R^5$;
$R^1$: alkyl group, alkenyl group, or a homopolymer or a copolymer of an α-olefin;
X: oxygen atom, OC(=O), C(=O)O, OC(=O)O, NHC(=O), or C(=O)NH;
$R^2$, $R^3$: alkylene group; m: integer of 1 to 30;
n: integer of 0 to 29; $R^4$: alkylene group;
Y: oxygen atom, OC(=O), C(=O)O, OC(=O)O, NHC(=O), or C(=O) NH;
$R^5$: hydrogen atom, alkyl group, alkenyl group, aryl group, or a homopolymer or a copolymer of an α-olefin).

EP 0 931 805 A1

## Description

TECHNICAL FIELD

This invention relates to a novel triblock oligomer, a novel thermoplastic resin composition, and a novel antifog extruded/molded article.

BACKGROUND TECHNOLOGY

Thermoplastic resins such as polyolefins, polyamides, polyesters, polyacetals, polystyrenes, acrylonitrile-butadiene-styrene copolymers, acrylonitrile-styrene copolymers, polymethacrylates, polycarbonates, polyphenylene oxides, polyvinyl chlorides, polyvinylidene chlorides, polyvinyl acetates, ethylene-(meth)acrylate copolymers and the like are provided with excellent workability, chemical resistance, and mechanical properties, and these resins have been widely used in various applications after forming into injection molded articles, blown extruded articles, films, sheets, fibers, and the like. Thermoplastic resins, however, generally have a large contact angle with water, and when they are brought in contact with water, small water droplets are often formed on the resin surface, and water is likely to be repelled by the resin surface. In view of such situation, when a thermoplastic resin is used for an agricultural film, a food wrapping film, or an extruded/molded article, various surfactants have been blended in the resin composition depending on the intended use of the product in order to prevent loss of good appearance, to facilitate wetting of the article, or to impart the article with antifog properties.

Various surfactants are used as the antifogging agents for the thermoplastic resins, and surfactants of different types are selected depending on the particular purpose of their use, for example, to impart the article with antistat and antifog performance immediately after its extrusion or molding, to provide prolonged antistat and antifog performance, and the like.

Among such surfactants, those capable of imparting the article with prolonged antistat and antifog performance are less likely to impart sufficient initial performance, and use of a fast-acting surfactant in an excessive amount to solve such inconvenience is likely to result in the failures such as tackiness, whitening and the like after prolonged use. In consideration of such situation, a surfactant which is an antistatic and antifogging agent of fast-acting type and a surfactant which is an antistatic and antifogging agent exhibiting sustained effects have been used in combination to cope with the case.

It has been, however, difficult to impart an article with continuous antistat and antifog performance for a prolonged period even if the combination of two or more surfactants were used as described above due to the difficulty in controlling migration of the surfactants to the surface of the article. It has been even more difficult to produce an antifog extruded/molded article which can endure the outside weather and large temperature variance without detracting from the stable antifog performance for a prolonged period as required in the case of a film to be used for an agricultural purpose.

SUMMARY OF THE INVENTION

In view of such situation, an object of the present invention is a novel triblock oligomer which is adapted for use as an antifogging agent and which can be blended in a thermoplastic resin to impart excellent antifog performance immediately after the extrusion or molding as well as stable prolonged antifog performance with the article.

Second object of the present invention is to provide a thermoplastic resin composition which can be used in molding and extruding various articles and which exhibits excellent antifog performance as soon as immediately after the extrusion or molding as well as stable prolonged antifog performance.

Third object of the present invention is to provide an antifog article which exhibits excellent antifog performance immediately after the extrusion or molding as well as stable prolonged antifog performance.

In order to accomplish the first object as described above, the present invention provides a triblock oligomer (A) which has a structure represented by the following general formula (I):

$$A—B—C \qquad (I)$$

wherein A has a structure represented by the following general formula (II):

$$R^1—X— \qquad (II)$$

wherein $R^1$ represents a straight chain or branched alkyl group or alkenyl group containing 10 to 40 carbon atoms, or a homopolymer or a copolymer of an $\alpha$-olefin containing 2 to 4 carbon atoms, and X represents oxygen atom,

OC(=O), C(=O)O, OC(=O)O, NHC(=O), or C(=O)NH;

B has a structure represented by the following general formula (III):

$$-\left(R^2-O\right)_m-\left(R^3-O\right)_n- \qquad \cdots\cdots(\mathrm{III})$$

wherein $R^2$ and $R^3$ represent a straight chain or branched alkylene group containing 1 to 4 carbon atoms and $R^2$ and $R^3$ are different from each other, m is an integer of 1 to 30, and n is an integer of 0 to 29 with the proviso that $m + n \leqq 30$; and

C has the structure represented by the following general formula (IV):

$$-R^4-Y-R^5 \qquad (\mathrm{IV})$$

wherein $R^4$ represents a straight chain or branched alkylene group containing 1 to 4 carbon atoms, Y represents oxygen atom, OC(=O), C(=O)O, OC(=O)O, NHC(=O), or C(=O)NH, and $R^5$ represents hydrogen atom, a straight chain or branched alkyl group, alkenyl group, or aryl group containing 1 to 40 carbon atoms, or a homopolymer or a copolymer of an $\alpha$-olefin containing 2 to 4 carbon atoms; and

which has a weight average molecular weight measured by gel permeation chromatography (hereinafter referred to as "GPC") in the range of 100 to 8000.

The present invention also provides a triblock oligomer (A) which has a weight average molecular weight measured by GPC of 500 to 8000.

The present invention also provides a triblock oligomer (A) wherein said triblock oligomer (A) is a reaction product of a higher fatty acid (B) containing 10 to 40 carbon atoms or a polyolefin having a carboxylic acid group (C) with a polyoxyalkylene compound (D) represented by the following general formula (V) or a polyoxyalkylene compound (E) represented by the following general formula (VI):

$$Z-\left(R^2-O\right)_m-\left(R^3-O\right)_n-R^4-O-R^5 \qquad \cdots\cdots(\mathrm{V})$$

wherein $R^2$, $R^3$ and $R^4$ represent a straight chain or branched alkylene group containing 1 to 4 carbon atoms and $R^2$ and $R^3$ are different from each other, $R^5$ represents a straight chain or branched alkyl group, alkenyl group, or aryl group containing 1 to 40 carbon atoms, or a homopolymer or a copolymer of an $\alpha$-olefin containing 2 to 4 carbon atoms, Z represents OH or $NH_2$, m is an integer of 1 to 30, and n is an integer of 0 to 29 with the proviso that $m + n \leqq 30$;

$$Z-\left(R^2-O\right)_m-\left(R^3-O\right)_n-R^4-Z \qquad \cdots\cdots(\mathrm{VI})$$

wherein $R^2$, $R^3$ and $R^4$ represent a straight chain or branched alkylene group containing 1 to 4 carbon atoms and $R^2$ and $R^3$ are different from each other, Z represents OH or $NH_2$, m is an integer of 1 to 30, and n is an integer of 0 to 29 with the proviso that $m + n \leqq 30$.

The present invention also provides a triblock oligomer (A) wherein said higher fatty acid (B) is a higher fatty acid containing 10 to 40 carbon atoms obtained by oxidation or hydrolysis of a natural wax.

The present invention also provides an antifogging agent comprising the triblock oligomer (A).

In order to accomplish the second object as described above, the present invention provides a thermoplastic resin composition characterized in that said composition comprises a thermoplastic resin (F) and 0.1 to 20 parts by weight of the triblock oligomer (A) per 100 parts by weight of the thermoplastic resin (F).

The present invention also provides a thermoplastic resin composition characterized in that said composition comprises a thermoplastic resin (F), 0.1 to 20 parts by weight of the triblock oligomer (A) and 0.01 to 30 parts by weight of a surfactant (G) per 100 parts by weight of the thermoplastic resin (F).

The present invention also provides a thermoplastic resin composition characterized in that said composition comprises a thermoplastic resin (F), 0.1 to 20 parts by weight of the triblock oligomer (A), 0.01 to 30 parts by weight of a surfactant (G), and 0.01 to 30 parts by weight of at least one agent for preventing migration of the antifogging agent (H) selected from the group consisting of a hydrocarbon resin, a modified polyolefin, an oxidized polyolefin and a natural wax per 100 parts by weight of the thermoplastic resin (F).

The present invention also provides a thermoplastic resin composition wherein said thermoplastic resin (F) is at least one thermoplastic resin selected from the group consisting of a polyolefin, a polyvinyl chloride, and an ethylene-vinyl acetate copolymer.

In order to accomplish the third object as described above, the present invention provides an antifog extruded/molded article comprising a thermoplastic resin (F) and an antifogging agent (J) wherein ratio (O/C) of number of oxygen atoms to number of carbon atoms on the surface of the extruded/molded article is at least 10/100, characterized in that

said antifogging agent (J) is dispersed in the surface region of at least 5 μm thick in the conditions such that:
the average particle diameter is in the range of 0.05 to 0.5 μm;
ratio Lw/Lh of average particle diameter in the direction of major axis (Lw) to average particle diameter in the direction of minor axis (Lh) of the dispersed particles is up to 3.0; and
average distance between gravity center of the dispersed particles is up to 1.5 μm.

The present invention also provides an antifog extruded/molded article wherein said antifogging agent (J) contains within its molecule at least one of the functional groups represented by the following formula (J-1) to (J-5):

$$\left( R^6 — O \right)_p R^7 \qquad (J\text{-}1)$$

wherein $R^6$ represents a straight chain or branched alkylene group containing 1 to 4 carbon atoms, $R^7$ represents hydrogen atom or a straight chain or branched alkyl group containing 1 to 22 carbon atoms, and p is an integer of 1 to 30;

$$-OH \qquad (J\text{-}2)$$

$$-SO_3X \qquad (J\text{-}3)$$

wherein X represents hydrogen atom or Na, K or Li;

$$-N^+(R)_3Q^- \qquad (J\text{-}4)$$

wherein the three R in the formula may be the same or different, and may represent hydrogen atom or an alkyl group containing 1 to 3 carbon atoms, and Q represents Cl, Br or I

$$—N^+(R)_2COO^- \qquad (J\text{-}5)$$

wherein the two R in the formula may be the same or different, and may represent hydrogen atom or an alkyl group containing 1 to 3 carbon atoms.

The present invention also provides an antifog extruded/molded article wherein said antifogging agent (J) has a weight average molecular weight measured by GPC of 100 to 8,000, and an absolute value of the difference ($dX = |Xf - Xj|$) between solubility parameter value of said thermoplastic resin (F) (Xf) and solubility parameter value of said antifogging agent (J) (Xj) of 0 to 1 $(cal/ml)^{1/2}$.

The present invention also provides an antifog extruded/molded article wherein said antifogging agent (J) has a weight average molecular weight measured by GPC of 100 to 5,000.

The present invention also provides an antifog extruded/molded article wherein said thermoplastic resin (F) is

a polyolefin, and said antifogging agent (J) has a value of solubility parameter (Xj) of 7 to 9 $(cal/ml)^{1/2}$.

The present invention also provides an antifog extruded/molded article wherein said antifogging agent (J) has a structure represented by the following general formula (I):

$$A—B—C \qquad (I)$$

wherein A has a structure represented by the following general formula (II):

$$R^1—X— \qquad (II)$$

wherein $R^1$ represents a straight chain or branched alkyl group or alkenyl group containing 10 to 40 carbon atoms, or a homopolymer or a copolymer of an α-olefin containing 2 to 4 carbon atoms, and X represents oxygen atom, OC(=O), C(=O)O, OC(=O)O, NHC(=O), or C(=O)NH;

B has a structure represented by the following general formula (III):

$$-\left(R^2-O\right)_m-\left(R^3-O\right)_n- \qquad \cdots\cdots(III)$$

wherein $R^2$ and $R^3$ represent a straight chain or branched alkylene group containing 1 to 4 carbon atoms and $R^2$ and $R^3$ are different from each other, m is an integer of 1 to 30, and n is an integer of 0 to 29 with the proviso that $m + n \leqq 30$; and

C has the structure represented by the following general formula (IV):

$$—R^4—Y—R^5 \qquad (IV)$$

wherein $R^4$ represents a straight chain or branched alkylene group containing 1 to 4 carbon atoms, Y represents oxygen atom, OC(=O), C(=O)O, OC(=O)O, NHC(=O), or C(=O)NH, and $R^5$ represents hydrogen atom, a straight chain or branched alkyl group, alkenyl group, or aryl group containing 1 to 40 carbon atoms, or a homopolymer or a copolymer of an α-olefin containing 2 to 4 carbon atoms; and has a weight average molecular weight measured by GPC in the range of 100 to 8000.

The present invention also provides an antifog extruded/molded article wherein said antifogging agent (J) is a reaction product of a higher fatty acid (B) containing 10 to 40 carbon atoms or a polyolefin having a carboxylic acid group (C) with a polyoxyalkylene compound (D) represented by the following general formula (V) or a polyoxyalkylene compound (E) represented by the following general formula (VI):

$$Z-\left(R^2-O\right)_m-\left(R^3-O\right)_n-R^4-O-R^5 \qquad \cdots\cdots(V)$$

wherein $R^2$, $R^3$ and $R^4$ represent a straight chain or branched alkylene group containing 1 to 4 carbon atoms and $R^2$ and $R^3$ are different from each other, $R^5$ represents a straight chain or branched alkyl group, alkenyl group, or aryl group containing 1 to 40 carbon atoms, or a homopolymer or a copolymer of an α-olefin containing 2 to 4 carbon atoms, Z represents OH or $NH_2$, m is an integer of 1 to 30, and n is an integer of 0 to 29 with the proviso that $m + n \leqq 30$;

$$Z-\left(R^2-O\right)_m-\left(R^3-O\right)_n-R^4-Z \qquad \cdots\cdots(VI)$$

wherein $R^2$, $R^3$ and $R^4$ represent a straight chain or branched alkylene group containing 1 to 4 carbon atoms and $R^2$ and $R^3$ are different from each other, Z represents OH or $NH_2$, m is an integer of 1 to 30, and n is an integer of 0 to 29 with the proviso that $m + n \leqq 30$.

The present invention also provides an antifog extruded/molded article wherein said antifogging agent (J) is a reaction product of a polyolefin having a carboxylic acid group (C) or a higher fatty acid containing at least 16 carbon atoms or a derivative thereof (B-1) with a polyoxyalkylene compound (D) represented by the following formula (D-1):

$$L(R^6\text{-}O)_p\text{-}R^7 \qquad \text{(D-1)}$$

wherein L represents OH or $NH_2$, $R^6$ represents a straight chain or branched alkylene group containing 1 to 4 carbon atoms, $R^7$ represents a straight chain or branched alkyl group containing 1 to 22 carbon atoms, and p is an integer of 1 to 30.

The present invention also provides an antifog extruded/molded article wherein said higher fatty acid (B) is a higher fatty acid containing 10 to 40 carbon atoms obtained by oxidation or hydrolysis of a natural wax.

The present invention also provides an antifog extruded/molded article characterized in that said extruded/molded article comprises a thermoplastic resin (F), and 0.1 to 20 parts by weight of said antifogging agent (J) per 100 parts by weight of the thermoplastic resin (F).

The present invention also provides an antifog extruded/molded article characterized in that said extruded/molded article comprises a thermoplastic resin (F), 0.1 to 20 parts by weight of said antifogging agent (J), and 0.01 to 30 parts by weight of a surfactant (G) per 100 parts by weight of the thermoplastic resin (F).

The present invention also provides an antifog extruded/molded article characterized in that said composition comprises a thermoplastic resin (F), 0.1 to 20 parts by weight of said antifogging agent (J), 0.01 to 30 parts by weight of a surfactant (G), and 0.01 to 30 parts by weight of at least one agent for preventing migration of the antifogging agent (H) selected from the group consisting of a hydrocarbon resin, a modified polyolefin, an oxidized polyolefin and a natural wax per 100 parts by weight of the thermoplastic resin (F).

The present invention also provides an antifog extruded/molded article wherein said thermoplastic resin (F) is at least one thermoplastic resin selected from the group consisting of a polyolefin, a polyvinyl chloride, and an ethylene-vinyl acetate copolymer.

The present invention also provides an antifog extruded/molded article wherein said article is a film.

The present invention also provides an antifog extruded/molded article wherein said film is a film for agricultural purpose.

PREFERRED EMBODIMENTS FOR CARRYING OUT THE INVENTION

Next, the triblock oligomer (A), the antifogging agent, the thermoplastic resin composition, and the antifog extruded/molded article of the present invention are described in detail.

The triblock oligomer (A) of the present invention is represented by the following general formula (I):

$$A{-}B{-}C \qquad \text{(I)}$$

In the formula (I), A has a structure represented by the following general formula (II), B has a structure represented by the following general formula (III), and C has a structure represented by the following general formula (IV):

$$R^1{-}X{-} \qquad \text{(II)}$$

$$-(R^2-O)_m-(R^3-O)_n- \qquad \cdots\cdots\text{(III)}$$

, and

$$-R^4{-}Y{-}R^5 \qquad \text{(IV)}$$

In the formula (II), $R^1$ represents a straight chain or branched alkyl group or alkenyl group containing 10 to 40 carbon atoms, or a homopolymer or a copolymer of an α-olefin containing 2 to 4 carbon atoms.

Exemplary straight chain or branched alkyl groups or alkenyl groups containing 10 to 40 carbon atoms include dodecyl, tetradecyl, hexadecyl, octadecyl and dodecadecyl.

Exemplary α-olefins of the homopolymer or copolymer of an α-olefin containing 2 to 4 carbon atoms include ethylene, propylene, and butene-1.

X represents oxygen atom, OC(=O), C(=O)O, OC(=O)O, NHC(=O), or C(=O)NH. Among these, oxygen atom, OC(=O), C(=O)O , NHC(=O), and C(=O)NH are desirable in view of high resistance to hydrolysis.

In the formula (III), $R^2$ and $R^3$ represent a straight chain or branched alkylene group containing 1 to 4 carbon atoms and $R^2$ and $R^3$ are different from each other. Exemplary alkylene groups for $R^2$ and $R^3$ include $-CH_2-$, $-CH_2CH_2-$, $-CH_2CH(CH_3)-$, and $-CH_2CH(CH_2\ CH_3)-$. Among these, the preferred are $-CH_2CH_2-$ and $-CH_2CH(CH_3)-$ in view of the superior antifog properties of the resulting triblock oligomer.

m is an integer of 1 to 30, and preferably 2 to 20, and more preferably 2 to 10; and n is an integer of 0 to 29, and preferably 0 to 20, and more preferably 0 to 10 with the proviso that $m + n \leqq 30$.

In the formula (IV), $R^4$ represents a straight chain or branched alkylene group containing 1 to 4 carbon atoms. Exemplary alkylene groups for $R^4$ include $-CH_2-$, $-CH_2CH_2-$, $-CH_2CH(CH_3)-$, and $-CH_2CH(CH_2\ CH_3)-$. Among these, the preferred are $-CH_2CH_2-$ and $-CH_2CH(CH_3)-$ in view of the superior antifog properties of the resulting triblock oligomer.

Y represents oxygen atom, OC(=O), C(=O)O, OC(=O)O, NHC(=O), or C(=O)NH. Among these, Y is preferably oxygen atom, C(=O)O, or OC(=O) in consideration of hue, weatherability, and the like.

$R^5$ represents hydrogen atom, a straight chain or branched alkyl group, alkenyl group, or aryl group containing 1 to 40 carbon atoms, or a homopolymer or a copolymer of an α-olefin containing 2 to 4 carbon atoms.

Exemplary straight chain or branched alkyl groups, alkenyl groups, or aryl groups containing 1 to 40 carbon atoms for the $R^5$ include dodecyl, tetradecyl, hexadecyl, octadecyl, dodecadecyl, phenyl, benzyl, methylphenyl, ethylphenyl, n-propylphenyl, i-propylphenyl, n-butylphenyl, sec-butylphenyl, t-butylphenyl and nonylphenyl.

Exemplary α-olefins of the homopolymer or copolymer of an α-olefin containing 2 to 4 carbon atoms include ethylene, propylene, and butene-1.

The triblock oligomer (A) of the present invention generally has a weight average molecular weight measured by GPC in the range of 100 to 8000, preferably 500 to 8000, more preferably 500 to 5000, and most preferably 600 to 3000. It is even more preferable in view of the superior initial properties of antifogging that the average molecular weight measured is less than 1000. The melting point measured by DSC is generally in the range of 30 to 160°C, preferably 40 to 120°C, and more preferably 40 to 110°C.

The triblock oligomer (A) of the present invention is not limited by the production process, and may be any triblock oligomer as long as it has the structure represented by the formula (I). In the present invention, the triblock oligomer (A), however, is preferably a reaction product of a higher fatty acid containing 10 to 40 carbon atoms (B) or a polyolefin having a carboxylic acid group (C) with a polyoxyalkylene compound (D) represented by the following general formula (V), or with a polyoxyalkylene compound (E) represented by the following general formula (VI):

$$Z-\left(R^2-O\right)_m-\left(R^3-O\right)_n-R^4-O-R^5 \qquad \cdots\cdots(V)$$

$$Z-\left(R^2-O\right)_m-\left(R^3-O\right)_n-R^4-Z \qquad \cdots\cdots(VI)$$

In the formula (V) or (VI), $R^2$, $R^3$ and $R^4$ represent a straight chain or branched alkylene group containing 1 to 4 carbon atoms and $R^2$ and $R^3$ are different from each other; and $R^5$ represents a straight chain or branched alkyl group, alkenyl group, or aryl group containing 1 to 40 carbon atoms, or a homopolymer or a copolymer of an α-olefin containing 2 to 4 carbon atoms. Examples of $R^2$, $R^3$, $R^4$ and $R^5$ are the same as those mentioned for the formula (II), (III) or (VI).

m is an integer of 1 to 30, and n is an integer of 0 to 29 with the proviso that $m + n \leqq 30$.

Z represents OH or $NH_2$.

Exemplary higher fatty acids containing 10 to 40 carbon atoms (B) which is used in the preparation of the reaction product constituting a preferable example of the triblock oligomer (A) of the present invention include lauric acid, palmitic acid, stearic acid, behenic acid, and montan acid. Among these, those prepared by oxidizing or hydrolyzing a natural wax are preferred.

In the present invention, a natural wax is a wax secreted by a plant or an animal or a wax extracted from a mineral, which is an ester of a higher fatty acid and a higher alcohol and which is solid at normal temperature.

Exemplary waxes of plant origin include candelilla wax, carnauba wax, rice wax, Japan wax, and jojoba oil.

Exemplary waxes of animal origin include beewax, lanolin (wool grease), and whale wax.

Exemplary mineral waxes include montan wax.

In the present invention, use of a higher fatty acid containing 10 to 40 carbon atoms obtained by oxidation or hydrolysis of the natural wax as described above is preferable in view of the excellent initial antifog properties and prolonged antifog properties of the resulting product.

Production of the higher fatty acid (B) by oxidation or hydrolysis of the natural wax may be conducted by any of the methods known in the art, for example, by oxidizing the natural wax as described above with a chromic acid such as chromium sulfate, or by hydrolyzing the natural wax with an acid catalyst.

In the present invention, the higher fatty acid produced by such method may be used either alone or in combination of two or more such fatty acids.

Among such higher fatty acids, use of the montan acid wax produced by oxidizing montan wax with chromic acid for the higher fatty acid (B) is preferable in the present invention in view of the superior hue, hardness and other properties of the resulting product.

The polyolefin having a carboxylic acid group (C) which is used in the preparation of the reaction product constituting a preferable example of the triblock oligomer (A) of the present invention may be prepared by graft copolymerizing an unsaturated carboxylic acid to a polyolefin.

Exemplary unsaturated carboxylic acids which may be used for this purpose include unsaturated carboxylic acids such as acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hepto-2-ene-5,6-dicarboxylic acid, and derivatives thereof (acid anhydrides, acid halides, amides, imides, esters and the like).

Exemplary unsaturated carboxylic acid derivatives include malenyl chloride, malenylimide, maleic anhydride, itaconic anhydride, citraconic anhydride, tetrahydrophthalic anhydride, bicyclo[2,2,1]hepto-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hepto-2-ene-5,6-dicarboxylate, hydroxyethyl (meth)acrylate, hydroxypropyl (meth)acrylate, glycidyl (meth)acrylate, aminoethyl methacrylate, and aminopropyl methacrylate.

Among these, the preferred are (meth)acrylic acid, maleic anhydride, hydroxyethyl (meth)acrylate, glycidyl (meth)acrylate, and aminopropyl methacrylate.

The content of the grafted unsaturated carboxylic acid in the polyolefin having a carboxylic acid group (C) used in the present invention is generally in the range of 0.1 to 20% by weight, and preferably in the range of 0.5 to 10% by weight. The content of the grafted unsaturated carboxylic acid as used herein designates the content on weight bases of the grafted comonomer in the graft copolymerized polymer. For example, when 1 g of the monomer is graft copolymerized in 100 g of the graft polymer, the content of the grafted monomer is 1% by weight.

Furthermore, the polyolefin having a carboxylic acid group (C) may generally have a weight average molecular weight measured by GPC of 100 to 8000, preferably 500 to 8000, more preferably 500 to 5000, and more preferably 600 to 3000 in order to produce a triblock oligomer adapted for use as an antifogging agent capable of imparting a prolonged antistat and antifog performance.

The polyolefin having a carboxylic acid group (C) may be produced by a known method such as the method disclosed in JP-B 52-22988, and for example, by heating and melting a polyolefin at a temperature higher than its softening point, and simultaneously and sequentially adding dropwise an unsaturated carboxylic acid and a peroxide with stirring to thereby proceed the graft copolymerization reaction.

In the present invention, the polyolefin having a carboxylic acid group (C) may be used either alone or in combination of two or more such polyolefins.

The polyoxyalkylene compound (D) which may be used in the preparation of the reaction product constituting a preferable example of the triblock oligomer (A) of the present invention is an amine or an alcohol compound which has the polyoxyalkylene moiety and which has the structure as represented by the above general formula (V).

Such polyoxyalkylene compound (D) may be prepared by adding an alkylene oxide containing 1 to 4 carbon atoms to an alcohol, and optionally converting the terminal hydroxyl group to amine.

Exemplary such polyoxyalkylene compounds (D) include poly(3 mole)oxyethylene lauryl ether, poly(4 mole)oxyethylene lauryl ether, poly(5 mole)oxyethylene lauryl ether, poly(6 mole)oxyethylene lauryl ether, poly(9 mole)oxyethylene lauryl ether, poly(14 mole)oxyethylene lauryl ether, poly(30 mole)oxyethylene lauryl ether, poly(3 mole)oxyethylene methyl ether, poly(4 mole)oxyethylene methyl ether, poly(5 mole)oxyethylene methyl ether, poly(6

mole)oxyethylene methyl ether, poly(14 mole)oxyethylene methyl ether, poly(30 mole)oxyethylene methyl ether, poly(3 mole)oxyethylene butyl ether, poly(5 mole)oxyethylene butyl ether, poly(14 mole)oxyethylene butyl ether, poly(30 mole)oxyethylene butyl ether, poly(5 mole)oxyethylene nonylphenyl ether, poly(14 mole)oxyethylene nonylphenyl ether, poly(30 mole)oxyethylene nonylphenyl ether, poly(5 mole)oxyethylene phenyl ether, poly(14 mole)oxyethylene phenyl ether, poly(30 mole)oxyethylene phenyl ether, poly(5 mole)oxypropylene lauryl ether, poly(30 mole)oxypropylene lauryl ether, poly(5 mole)oxypropylene methyl ether, poly(30 mole)oxypropylene methyl ether, poly(2 mole)oxypropylene-poly(5 mole) oxyethylene lauryl ether, amino-poly(5 mole)oxyethylene methyl ether, amino-poly(14 mole)oxyethylene methyl ether, amino-poly(30 mole)oxyethylene methyl ether, and amino-poly(2 mole)oxypropylene-poly(5 mole)oxyethylene methyl ether.

Among these, the preferred are poly(3 mole)oxyethylene methyl ether, poly(4 mole)oxyethylene methyl ether, poly(5 mole)oxyethylene methyl ether, poly(6 mole)oxyethylene methyl ether, poly(3 mole)oxyethylene lauryl ether, poly(4 mole)oxyethylene lauryl ether, poly(5 mole)oxyethylene lauryl ether, poly(6 mole)oxyethylene lauryl ether, and amino-poly(5 mole)oxyethylene methyl ether.

The polyoxyalkylene compound (E) which may be used in the preparation of the reaction product constituting a preferable example of the triblock oligomer (A) of the present invention is a compound represented by the above general formula (VI).

Exemplary such polyoxyalkylene compounds (E) include polyethylene glycol, polypropylene glycol, polybutylene glycol, poly(oxyethylene)(oxypropylene), and polyoxyethylenediamine.

The polyoxyalkylene compounds may generally have a molecular weight of 100 to 8000, preferably 100 to 5000, and more preferably 100 to 3000.

In the production of the reaction product constituting a preferable example of the triblock oligomer (A) of the present invention, when the higher fatty acid (B) is reacted with the polyoxyalkylene compound (D) or the polyoxyalkylene compound (E), the higher fatty acid (B) is preferably reacted with 0.1 to 5 molar amount of the polyoxyalkylene compound (D) or the polyoxyalkylene compound (E). In order to accelerate the reaction, the reaction is preferably conducted under reduced pressure. When a compound wherein Z is OH in the formula (V) is used for the polyoxyalkylene compound (D), the reaction may be conducted in the presence of a known esterification catalyst.

The carboxylic acid moiety of the higher fatty acid (B) may be preliminarily esterified with a lower alcohol such as methanol before the reaction.

The reaction between the higher fatty acid (B) and the polyoxyalkylene compound (D) may be conducted after dissolving at least a part of both compounds in a nonpolar solvent, or after melting both compounds.

Exemplary nonpolar solvents used in the reaction include aromatic hydrocarbon solvents such as benzene, toluene, and xylene; aliphatic hydrocarbon solvents such as pentane, hexane, heptane, octane, nonane, and decane; alicyclic solvents such as cyclohexane, methylcyclohexane, and decahydronaphthalene; and chlorinated hydrocarbons such as chlorobenzene, dichlorobenzene, trichlorobenzene, methylene chloride, chloroform, carbon tetrachloride, and tetrachloroethylene.

The reaction is desirably conducted at a reaction temperature in the range of 50 to 250C, and more preferably at a reaction temperature of 80 to 200C.

When the reaction is conducted with the higher fatty acid (B) in molten state, the reaction is preferably conducted at a temperature higher than the melting point of the higher fatty acid (B) and below 300C.

In the production of the reaction product constituting a preferable example of the triblock oligomer (A) of the present invention, when the polyolefin having a carboxylic acid group (C) is reacted with the polyoxyalkylene compound (D) or the polyoxyalkylene compound (E), the polyolefin having a carboxylic acid group (C) is preferably reacted with 0.1 to 5 molar amount in relation to the carboxylic acid group in the polyolefin (C) of the polyoxyalkylene compound (D) or the polyoxyalkylene compound (E). In order to accelerate the reaction, the reaction is preferably conducted under reduced pressure. When a compound wherein Z is OH in the formula (V) is used for the polyoxyalkylene compound (D), the reaction may be conducted in the presence of a known esterification catalyst.

The carboxylic acid moiety of the polyolefin having a carboxylic acid group (C) may be preliminarily esterified with a lower alcohol such as methanol before the reaction.

The reaction between the polyolefin having a carboxylic acid group (C) and the polyoxyalkylene compound (D) or the polyoxyalkylene compound (E) may be conducted after dissolving at least a part of both compounds in a nonpolar solvent, or after melting both compounds.

The reaction is desirably conducted at a reaction temperature in the range of 50 to 250C, and more preferably at a reaction temperature of 80 to 200C.

When the reaction is conducted with the polyolefin having a carboxylic acid group (C) in molten state, the reaction is preferably conducted at a temperature higher than the melting point of the polyolefin having a carboxylic acid group (C) and below 300C.

The thus produced the triblock oligomer (A) has good balance between hydrophobicity and hydrophilicity, and when used as an antifogging agent or an antistatic agent, this triblock oligomer (A) can maintain antifog and antistat

properties for a prolonged period.

The triblock oligomer (A) of the present invention may be used either alone or in combination of two ore more such oligomers.

When the triblock oligomer (A) of the present invention is used as an antifogging agent, the triblock oligomer (A) may be used by adding it to a thermoplastic resin for use as a thermoplastic resin composition, by coextruding the triblock oligomer (A) with a thermoplastic resin, by coating the surface of an article molded from a thermoplastic resin with the triblock oligomer (A) in molten state, or by coating the surface of an article molded from a thermoplastic resin with a dispersion of the triblock oligomer (A) in an organic solvent or water. Among these, use of the triblock oligomer (A) by addition to a thermoplastic resin for use as a thermoplastic resin composition with high antifog properties is preferable in consideration of extrudability and economy (simple procedure).

Exemplary organic solvents used for dispersing the triblock oligomer (A) include hydrocarbon solvents such as hexane, heptane, and decane; aromatic hydrocarbon solvents such as benzene, toluene, and xylene; ketone solvents such as acetone, methyl ethyl ketone, and methyl isobutyl ketone; alcohol solvents such as methanol, ethanol and isopropyl alcohol, and chlorine solvents such as dichloroethane, trichloroethane, and chlorobenzene.

The present invention also provides a thermoplastic resin composition comprising a thermoplastic resin (F) and the triblock oligomer (A) as described above. This resin composition exhibits excellent antifog performance immediately after its extrusion or molding as well as stable antifog performance for a prolonged period.

The thermoplastic resin composition contains 0.1 to 20 parts by weight, preferably 0.5 to 15 parts by weight, and more preferably 1 to 10 parts by weight of the triblock oligomer (A) which has a structure represented by the general formula (I) and a weight average molecular weight measured by GPC in the range of 100 to 8000 per 100 parts by weight of the thermoplastic resin (F).

Examples of the thermoplastic resin (F) constituting the thermoplastic resin composition of the present invention include a polyolefin, a polyamide, a polyester, a polyacetal, a polystyrene, an acrylonitrile-butadiene-styrene copolymer (ABS), a polymethacrylate, a polycarbonate, a polyphenylene oxide, a polyvinyl chloride, a polyvinylidene chloride, a vinyl acetate polymer, and an ethylene-(meth)acrylate copolymers. Among these, at least one thermoplastic resin selected from the polyolefin, the polyvinyl chloride, and the ethylene-vinyl acetate copolymer is preferable in view of the transparency, weatherability and strength.

Exemplary polyolefins which may be used for the thermoplastic resin (F) include olefin homopolymers such as polyethylene, polypropylene, poly-1-butene, polymethylpentene, and polymethylbutene and olefin copolymers such as ethylene-$\alpha$-olefin random copolymer and propylene-ethylene random copolymer. Among these, the preferred are polyethylene, polypropylene and ethylene-$\alpha$-olefin random copolymer. It should be noted that, when the polyolefin is the one prepared from an olefin containing 3 or more carbon atoms, the polymer may be either an isotactic polymer or a syndiotactic polymer. Among these, the particularly preferred are ethylene homopolymer and ethylene-$\alpha$-olefin random copolymer.

Preferable ethylene homopolymer and ethylene-$\alpha$-olefin random copolymer are those having a density in the range of 0.880 to 0.960 g/cm$^3$ and a melt flow rate (MFR; ASTM D1238-65T, at 190C under the load of 2.16 kg) in the range of 0.01 to 100 g/10 min.

Such polyolefin may be produced by any of known processes such as high-pressure radical polymerization, and medium or low-pressure polymerization conducted in the presence of a transition metal compound catalyst such as a Ziegler-Natta catalyst or a metallocene catalyst.

Among such polyolefins, when the thermoplastic resin composition of the present invention is used as a material for producing an agricultural coverage material, use of an ethylene-$\alpha$-olefin copolymer having a density of 0.880 to 0.935 g/cm$^3$ and a MFR of 0.1 to 20 g/10 min. produced by medium or low-pressure polymerization, or a mixture with a high pressure-processed low density polyethylene having a density of 0.910 to 0.935 g/cm$^3$ and a MFR of 0.1 to 20 g/10 min. is preferred in view of the extrudability or moldability, high transmittance, strength and weatherability.

Exemplary polyamides which may be used for the thermoplastic resin (F) include aliphatic polyamides such as nylon-6, nylon-66, nylon-10, nylon 12, and nylon-46; and aromatic polyamides produced from an aromatic dicarboxylic acid and an aliphatic diamine. Among these, the preferred is nylon-6.

Exemplary polyesters which may be used for the thermoplastic resin (F) include aromatic polyesters such as polyethylene terephthalate, polyethylene naphthalate, and polybutylene terephthalate; polycaprolactone, and polyhydroxybutylate. Among these, the preferred is polyethylene terephthalate.

Exemplary polyacetals which may be used for the thermoplastic resin (F) include polyformaldehyde(polyoxymethylene), polyacetaldehyde, polypropionaldehyde, and polybutylaldehyde. Among these, the preferred is polyformaldehyde.

Exemplary polystyrenes which may be used for the thermoplastic resin (F) include styrene homopolymer and bipolymers of styrene with acrylonitrile, methyl methacrylate, or $\alpha$-methylstyrene such as acrylonitrile-styrene copolymer.

Exemplary preferable ABS which may be used for the thermoplastic resin (F) are those containing 20 to 35%

by mole of structural unit derived from acrylonitrile, 20 to 30% by mole of structural unit derived from butadiene, and 40 to 60% by mole of structural unit derived from styrene.

Exemplary preferable polymethacrylates which may be used for the thermoplastic resin (F) include polymethyl methacrylate (PMMA).

Exemplary polycarbonates which may be used for the thermoplastic resin (F) include those obtained from bis(4-hydroxyphenyl)methane, 1,1-bis(4-hydroxyphenyl)ethane, 2,2-bis(4-hydroxyphenyl)propane, and 2,2-bis(4-hydroxyphenyl)butane. Among these, the preferred are the polycarbonates produced from 2,2-bis(4-hydroxyphenyl)propane is preferred.

Exemplary preferable polyphenylene oxides which may be used for the thermoplastic resin (F) is poly(2,6-dimethyl-1,4-phenylene oxide).

The polyvinyl chlorides which may be used for the thermoplastic resin (F) may be either a homopolymer of vinyl chloride or a copolymer of vinyl chloride with vinylidene chloride, ester of acrylic acid, acrylonitrile or propylene.

Exemplary typical polyvinylidene chlorides which may be used for the thermoplastic resin (F) are copolymers of vinylidene chloride with vinyl chloride, acrylonitrile, (meth)acrylate, allyl ester, unsaturated ether, or styrene, which contain at least 85% of the vinylidene chloride unit.

The vinyl acetate polymers which may be used as the thermoplastic resin (F) may be either a homopolymer of vinyl acetate or a copolymer of vinyl acetate with ethylene or vinyl chloride. Among these, the preferred is ethylene-vinyl acetate copolymer.

Exemplary preferable ethylene-(meth)acrylate copolymers which may be used for the thermoplastic resin (F) include ethylene-methyl acrylate copolymer, ethylene-ethyl acrylate copolymer, ethylene-methyl methacrylate copolymer, and ethylene-ethyl methacrylate copolymer.

In the thermoplastic resin composition of the present invention, the thermoplastic resin (F) may be used either alone or in combination of two or more such thermoplastic resins.

The thermoplastic resin composition have various excellent properties inherent to the thermoplastic resin (F), and simultaneously, exhibits the antistat and antifog performance immediately after its extrusion or molding as well as the stable antistat and antifog performance for a prolonged period.

The thermoplastic resin composition of the present invention may be produced by any known method. For example, the thermoplastic resin (F) and the triblock oligomer (A) may be melt kneaded in an extruder, kneader, or the like, and the resulting thermoplastic resin composition may be extruded or molded by injection molding, extrusion, blown extrusion, or the like to produce the antifog article of various configurations.

The thermoplastic resin composition of the present invention may optionally contain a surfactant (G) in an amount of 0.01 to 30 parts by weight, preferably 0.05 to 10 part by weight, and more preferably 0.1 to 5 parts by weight per 100 parts by weight of the thermoplastic resin. Incorporation of the surfactant (G) is effective in further improving the antifog and antistat performance immediately after extrusion or molding and in stably maintaining the performance for a prolonged period.

Exemplary surfactants (G) blended in the thermoplastic resin composition of the present invention include ionic surfactants such as aliphatic sulfonates, higher alcohol sulfates, higher alcohol ethylene oxide adduct sulfates, higher alcohol phosphates, higher alcohol ethylene oxide adduct phosphates, quaternary ammonium salt cationic surfactants, and betain amphoteric surfactants; and nonionic surfactants such as glycerin mono-fatty acid esters, glycerin di-fatty acid esters, glycerin tri-fatty acid esters, diglycerin fatty acid esters, polyethylene glycol fatty acid esters, higher alcohol ethylene oxide adducts, polyhydric alcohol fatty acid esters, N,N-bis(2-hydroxyethyl)aliphatic amines, N,N-bis(2-hydroxyisopropyl)aliphatic amines, N,N-bis(2-hydroxyethyl)aliphatic amides, and N,N-bis(2-hydroxyisopropyl)aliphatic amides.

Exemplary surfactants include:

aliphatic sulfonates such as sodium lauryl sulfonate;
higher alcohol sulfates such as sodium lauryl alcohol sulfate;
higher alcohol ethylene oxide adduct sulfates such as sodium lauryl alcohol EO 4 mole adduct sulfate (EO = ethylene oxide);
higher alcohol phosphates such as sodium octyl alcohol phosphate, sodium lauryl alcohol phosphate, sodium cetyl alcohol phosphate, sodium stearyl alcohol phosphate, and sodium oleyl alcohol phosphate;
higher alcohol ethylene oxide adduct phosphates such as sodium octyl alcohol EO 4 mole adduct phosphate, sodium lauryl alcohol EO 4 mole adduct phosphate, sodium cetyl alcohol EO 4 mole adduct phosphate, sodium stearyl alcohol EO 4 mole adduct phosphate, and sodium oleyl alcohol EO 4 mole adduct phosphate;
quaternary ammonium salt cationic surfactants such as lauryl trimehylammonium methosulfate;
betain amphoteric surfactants such as lauryl dimethyl betain;
glycerin mono-fatty acid esters such as glycerin monolaurate, glycerin monomyristate, glycerin monopalmitate, glycerin monostearate, glycerin monobehenate, and glycerin monooleate;
glycerin di-fatty acid esters such as glycerin dilaurate, glycerin dimyristate, glycerin dipalmitate, glycerin distearate,

glycerin dibehenate, and glycerin dioleate;

glycerin tri-fatty acid esters such as glycerin trilaurate, glycerin trimyristate, glycerin tripalmitate, glycerin tristearate, glycerin tribehenate, and glycerin trioleate;

diglycerin mono-fatty acid esters such as diglycerin monolaurate, diglycerin monomyristate, diglycerin monopalmitate, diglycerin monostearate, diglycerin behenate, and diglycerin monooleate;

polyethylene glycol fatty acid esters such as polyethylene glycol 200 monolaurate, polyethylene glycol 200 monostearate, and polyethylene glycol 200 monooleate;

higher alcohol ethylene oxide adducts such as lauryl alcohol EO 2 mole adduct, lauryl alcohol EO 4 mole adduct, lauryl alcohol EO 6 mole adduct, lauryl alcohol EO 10 mole adduct, nonylphenol EO 4 mole adduct, and nonylphenol EO 10 mole adduct;

polyhydric alcohol fatty acid esters such as sorbitan fatty acid ester, propylene glycol fatty acid ester, sucrose fatty acid ester, citric acid mono- (di- or tri-)stearyl ester, pentaerythritol fatty acid ester, trimethylol propane fatty acid ester, polyoxyethylene glycerin fatty acid ester, polyoxyethylene sorbitan fatty acid ester, polyethylene glycol fatty acid ester, and polypropylene glycol fatty acid ester;

N,N-bis(2-hydroxyethyl)aliphatic amines such as N,N-bis(2-hydroxyethyl)lauryl amine, N,N-bis(2-hydroxyethyl)myristyl amine, N,N-bis(2-hydroxyethyl)palmityl amine, N,N-bis(2-hydroxyethyl)stearyl amine, and N,N-bis(2-hydroxyethyl)oleyl amine;

N,N-bis(2-hydroxyisopropyl)aliphatic amines such as N,N-bis(2-hydroxyisopropyl)lauryl amine, N,N-bis(2-hydroxyisopropyl)myristyl amine, N,N-bis(2-hydroxyisopropyl)palmityl amine, N,N-bis(2-hydroxyisopropyl)stearyl amine, and N,N-bis(2-hydroxyisopropyl)oleyl amine;

N,N-bis(2-hydroxyethyl)aliphatic amides such as N,N-bis(2-hydroxyethyl)lauryl amide, N,N-bis(2-hydroxyethyl)myristyl amide, N,N-bis(2-hydroxyethyl)palmityl amide, N,N-bis(2-hydroxyethyl)stearyl amide, N,N-bis(2-hydroxyethyl)behenyl amide, and N,N-bis(2-hydroxyethyl)oleyl amide;

N,N-bis(2-hydroxyisopropyl)aliphatic amides such as N,N-bis(2-hydroxyisopropyl)lauryl amide, N,N-bis(2-hydroxyisopropyl)myristyl amide, N,N-bis(2-hydroxyisopropyl)palmityl amine, N,N-bis(2-hydroxyisopropyl)stearyl amide, and N,N-bis(2-hydroxyisopropyl)oleyl amide;

mono- or diesters of the N,N-bis(2-hydroxyisopropyl)aliphatic amine as described above with a fatty acid such as lauric acid or stearic acid; and

mineral oils, lauryl alcohol, diethylene glycol monolaurate, polyoxyethylene glycol fatty acid alcohol ether, polyoxyethylene alkylphenyl ether, polyoxypropylene-polyoxyethylene block polymer, polyethylene glycol, and polypropylene glycol.

Among these, use of at least one compound selected from glycerin fatty acid esters, glycerin fatty acid diesters, glycerin fatty acid triesters, polyethylene glycol fatty acid esters, higher alcohol ethylene oxide adducts, N,N-bis(2-hydroxyethyl)aliphatic amines, N,N-bis(2-hydroxyisopropyl)aliphatic amines, N,N-bis(2-hydroxyethyl)aliphatic amides, and N,N-bis(2-hydroxyisopropyl)aliphatic amides is preferable in consideration of performance and price of the resulting compound.

Amount such surfactants, combinations of a glycerin alkyl ester (G-1) represented by the following formula (g-1); a diglycerin alkyl ester (G-2) represented by the following formula (g-2); and a diethanol alkyl amine represented by the following formula (g-3) are preferable

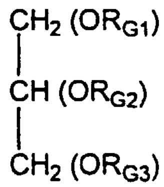

(g-1)

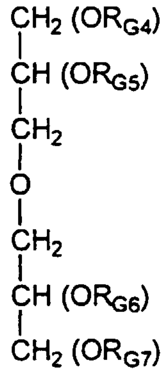

(g-2)

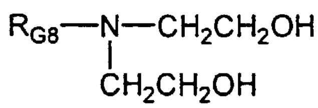

(g-3)

In the formula (g-1), $R_{G1}$, $R_{G2}$ and $R_{G3}$ are independently hydrogen atom, or an acyl group containing 12 to 22 carbon atoms.

In the formula (g-2), $R_{G4}$, $R_{G5}$, $R_{G6}$ and $R_{G7}$ are independently hydrogen atom, or an acyl group containing 12 to 22 carbon atoms.

In the formula (g-3), $R_{G8}$ is an alkyl group containing 12 to 22 carbon atoms.

Examples of such glycerin alkyl ester (G-1), diglycerin alkyl ester (G-2), and a diethanol alkyl amine include glycerin monostearate, glycerin monopalmitate, glycerin monolaurate, glycerin distearate, glycerin dipalmitate, glycerin dilaurate, glycerin tristearate, glycerin tripalmitate, glycerin trilaurate, diglycerin monostearate, diglycerin monopalmitate, diglycerin monolaurate, diglycerin distearate, diglycerin dipalmitate, diglycerin dilaurate, diglycerin tristearate, diglycerin tripalmitate, diglycerin trilaurate, diglycerin tetrastearate, diglycerin tetrapalmitate, diglycerin tetralaurate, N,N-bis(2-hydroxyethyl)stearylamine, N,N-bis(2-hydroxyethyl)palmitylamine, and N,N-bis(2-hydroxyethyl) laurylamine.

In the thermoplastic resin composition of the present invention, the surfactant as described above may be used either alone or in combination of two or more such surfactants.

Furthermore, the thermoplastic resin composition of the present invention may optionally contain an agent for preventing migration of the antifogging agent in an amount of 0.01 to 30 parts by weight, preferably 0.05 to 20 part by weight, and more preferably 0.1 to 15 parts by weight per 100 parts by weight of the thermoplastic resin. Incorporation of the agent for preventing migration of the antifogging agent is effective in further stabilizing the antifog performance for an even longer period.

Exemplary agent for preventing migration of the antifogging agent blended in the thermoplastic resin composition of the present invention include a hydrocarbon resin, a modified polyolefin, an oxidized polyolefin, and a natural wax.

(a) Hydrocarbon resin

The hydrocarbon resin which may be used as the agent for preventing migration of the antifogging agent in the thermoplastic resin composition of the present invention is the one obtained by polymerizing a styrenic monomer (K-1)

represented by the general formula (VII) with at least one monomer selected from a fraction produced as a byproduct in the purification or cracking of petroleum (K-2) containing unsaturated hydrocarbons containing 4 or 5 carbons and an indene monomer (K-3) represented by the general formula (VIII) in the presence of Friedel-Crafts catalyst. The hydrocarbon resin may be a bipolymer, a terpolymer, a tetramer or other multi-element copolymer prepared by combining the styrenic monomer (K-1) represented by the general formula (VII) with the fraction (K-2) containing unsaturated hydrocarbons containing 4 or 5 carbons or the indene monomer (K-3) represented by the general formula (VIII).

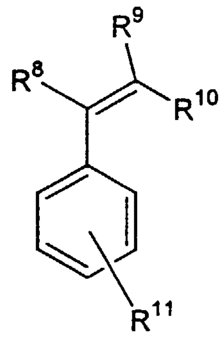

......(VII)

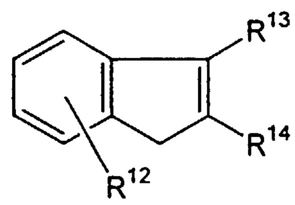

......(VIII)

In the general formula (VII) representing the styrenic monomer (K-1), $R^8$, $R^9$, $R^{10}$ and $R^{11}$ which may be either the same or different are hydrogen atom or an alkyl group containing up to 4 carbon atoms. Exemplary alkyl groups containing up to 4 carbon atoms include methyl group, ethyl group, propyl group, and butyl group.
Exemplary styrenic monomers represented by the general formula (VII) include styrene, vinyltoluene, α-methylstyrene, and isopropenyltoluene, which may be used alone or in combination of two or more.
In the present invention use of styrene, vinyltoluene, α-methylstyrene, and isopropenyltoluene is preferred in consideration of availability, price, and the like.
The fraction (K-2) containing unsaturated hydrocarbons containing 4 or 5 carbons may comprise any fraction selected from the fractions produced as a byproduct in the purification or cracking of petroleum containing unsaturated hydrocarbons containing 4 or 5 carbons.
The fractions produced as a byproduct in the purification or cracking of petroleum containing unsaturated hydrocarbons containing 4 or 5 carbons (hereinafter referred to as C4 and C5 fractions) are generally fractions whose boiling point under normal pressure is in the range of from -15C to +45C containing polymerizable monomers such as 1-butene, isobutene, 2-butene, 1,3-butadiene, 1-pentene, 2-methyl-1-butene, 3-methyl-1-butene, 2-pentene, isoprene, 1,3-pentadiene, and cyclopentadiene. In the present invention, any fraction containing the polymerizable monomers selected from the C4 and the C5 fractions may be employed, and the fractions which may be employed are not limited to the C4 and C5 fractions, and the C4 fraction, C4 fraction from which butadiene has been removed, the C5 fraction, C5 fraction from which isoprene has been removed, C5 fraction from which cyclopentadiene has been removed, and the like may be employed.
In the general formula (VIII) representing the indene monomer (K-3), $R^{12}$, $R^{13}$ and $R^{14}$ which may be either the same or different are hydrogen atom or an alkyl group containing up to 6 carbon atoms. Exemplary alkyl groups containing up to 6 carbon atoms include methyl group, ethyl group, propyl group, butyl group, pentyl group, and hexyl group.
Exemplary indene monomers include indene, methyl indene, and ethyl indene, which may be used alone or in combination of two or more.
In the present invention use of indene is preferred in consideration of availability, price, and the like.
The content of the styrenic monomer (K-1) represented by the general formula (VII) in the hydrocarbon resin

is in the range of 30 to 99% by mole and preferably in the range of 45 to 99% by mole in consideration of the good compatibility with the thermoplastic resin (F) and the improved sustainability of the antistat and antifog properties of the resulting composition.

The content of the fraction (K-2) containing unsaturated hydrocarbons containing 4 or 5 carbons is in the range of 1 to 70% by mole, and preferably in the range of 1 to 55% by mole.

The content of the indene monomer (K-3) is in the range of 0 to 60% by mole, and preferably in the range of 0 to 50% by mole.

The content of each monomer in the hydrocarbon resin used for the agent for preventing the antifogging agent migration may be measured by quantitating the monomer remaining in the solution after the reaction by gas chromatography.

The production of the hydrocarbon resin may be accomplished by reacting the styrenic monomer (K-1) with at least one member selected from the fraction (K-2) containing unsaturated hydrocarbons containing 4 or 5 carbons and the indene monomer (K-3) in the presence of a catalyst for copolymerization.

The catalyst used for the copolymerization is the one generally known as a Friedel-Crafts catalyst, and exemplary such catalysts include aluminum chloride, aluminum bromide, dichloromonoethyl aluminum, titanium tetrachloride, tin tetrachloride, and boron trifluoride.

The catalyst is used in an amount of 0.01 to 5.0% by weight, and preferably in an amount of 0.05 to 3.0% by weight in relation to the total amount of the monomers.

With regard to the polymerization reaction, the reaction is preferably conducted in at least one hydrocarbon solvent selected from aromatic hydrocarbons, aliphatic hydrocarbons, and alicyclic hydrocarbons to thereby facilitate removal of the reaction heat and prevent increase of the viscosity. Preferable hydrocarbon solvents include aromatic hydrocarbons such as toluene, xylene, ethylbenzene, mesitylene, cumene, and cymene; mixtures thereof, mixtures of such aromatic hydrocarbon solvent with an aliphatic hydrocarbon such as pentane, hexane, heptane, or octane and/or an alicyclic hydrocarbon such as cyclopentane, cyclohexane or methylcyclohexane. In the polymerization, the amount of the hydrocarbon solvent is preferably adjusted so that the initial concentration of the monomers in the reaction mixture is in the range of 10 to 70% by weight.

The polymerization temperature may vary depending on the type and the amount of the monomers and the catalyst used. The polymerization temperature, however, is generally in the range of -30 to 50°C.

The polymerization period is generally from about 0.5 to 5 hours, and the polymerization is usually completed in about 1 to 2 hours.

The polymerization may be conducted either by batchwise or continuous process, or alternatively, by multistage polymerization.

The hydrocarbon resin used as the agent for preventing the antifogging agent migration in the present invention may preferably have an average molecular weight in the range of 300 to 5000, and more preferably 500 to 3000 in consideration of the good compatibility with the thermoplastic resin (A) and the improved sustainability of the antistat and antifog properties of the resulting composition.

In the present invention, the hydrocarbon resin as described above may be used either alone or in combination of two or more such resins.

(b) Modified polyolefin

The modified polyolefin which may be used as the agent for preventing the antifogging agent migration in the present invention is the polyolefin having graft copolymerized thereto at least one monomer selected from the group consisting of an unsaturated carboxylic acid, a derivative thereof, and an ethylenic unsaturated monomer having at least one group selected from hydroxyl group, amino group and sulfone group.

Exemplary unsaturated carboxylic acids which may be used for the monomer include acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hepto-2-ene-5,6-dicarboxylic acid, and derivatives thereof (acid anhydrides, acid halides, amides, imides, esters and the like).

Exemplary unsaturated carboxylic acid derivatives include malenyl chloride, malenylimide, maleic anhydride, itaconic anhydride, citraconic anhydride, tetrahydrophthalic anhydride, bicyclo[2,2,1]hepto-2-ene-5,6-dicarboxylic anhydride, dimethyl maleate, diethyl maleate, diethyl fumarate, dimethyl itaconate, diethyl citraconate, dimethyl tetrahydrophthalate, dimethyl bicyclo[2,2,1]hepto-2-ene-5,6-dicarboxylate, hydroxyethyl (meth)acrylate, hydroxypropyl (meth)acrylate, glycidyl (meth)acrylate, aminoethyl methacrylate, and aminopropyl methacrylate.

Among these, the preferred are (meth)acrylic acid, maleic anhydride, hydroxyethyl (meth)acrylate, glycidyl (meth)acrylate, and aminopropyl methacrylate.

The modified polyolefin which may be used as the agent for preventing the antifogging agent migration in the present invention has good affinity with the antistatic agent or the surfactant when the content of the grafted unsaturated

carboxylic acid is 0.1 to 20% by weight, and preferably, 0.5 to 10% by weight.

The content of grafted unsaturated carboxylic acid as used herein designates the content on weight bases of the grafted comonomer in the graft copolymerized polymer. For example, when 1 g of the monomer is graft copolymerized in 100 g of the graft polymer, the content of the grafted monomer is 1% by weight.

The modified polyolefin is preferably the one exhibiting a limiting viscosity [$\eta$] measured in decaline solvent at 135°C of 0.01 to 3 dl/g, preferably 0.02 to 1.8 dl/g, and more preferably 0.05 to 0.3 dl/g in consideration of the improved sustainability of the antistat and antifog properties of the resulting composition.

The modified polyolefin may be produced by a known method such as the method disclosed in JP-B 52-22988, and for example, by heating and melting a polyolefin at a temperature higher than its softening point, and simultaneously and sequentially adding dropwise an unsaturated carboxylic acid and a peroxide with stirring to thereby proceed the graft copolymerization reaction.

The modified polyolefin used for the agent for preventing the antifogging agent migration in the composition of the present invention may be used either alone or in combination of two or more such polyolefins.

(c) Oxidized polyolefin

The oxidized polyolefin which may be used for the agent for preventing the antifogging agent migration in the present invention is preferably the one produced by oxidizing a polyolefin by using an oxygen-containing gas.

The polyolefin which is the main component of the oxidized polyolefin is either a homopolymer comprising one $\alpha$-olefin containing 2 to 12 carbon atoms or a copolymer comprising two or more such $\alpha$-olefin.

Exemplary $\alpha$-olefins containing 2 to 12 carbon atoms include ethylene, propylene, butene-1, pentene-1, 2-methylbutene-1, 3-methylbutene-1, 3,3-dimethylbutene-1, heptene-1, methylhexene-1, dimethylpentene-1, trimethylbutene-1, ethylpentene-1, octene-1, methylpentene-1, dimehylhexene-1, trimethylpentene-1, ethylhexene-1, methylethylpentene-1, diethylbutene-1, propylpentene-1, decene-1, methylnonene-1, dimethyloctene-1, trimethylheptene-1, ethyloctene-1, methylethylheptene-1, diethylhexene-1, dodecene-1, and hexadodecene-1.

The polyolefin is preferably the one exhibiting a limiting viscosity [$\eta$] measured in decaline solvent at 135C of 0.01 to 3 dl/g, and preferably 0.02 to 1.8 dl/g.

Such polyolefin may be produced by any of known processes such as high-pressure radical polymerization, and medium or low-pressure polymerization conducted in the presence of a transition metal compound catalyst such as a Ziegler catalyst or a metallocene catalyst.

An exemplary method for producing the oxidized polyolefin by oxidization of the polyolefin is the method disclosed in JP-B 48-37991 wherein the polyolefin in molten state is brought in contact with an oxygen-containing gas, for example, by heating the polyolefin to a temperature higher than its softening point, and bubbling the oxygen-containing gas into the molten polyolefin with stirring.

The oxygen-containing gas used for the oxidation of the polyolefin may be adequately selected from pure oxygen, air, and the like.

The oxidized polyolefin used for the agent for preventing the antifogging agent migration in the present invention is preferably the one having an acidity of 0.1 to 100 mgKOH/g, and preferably 0.5 to 80 mgKOH/g in consideration of the good affinity with the antistatic agent or the surfactant and the good sustainability of the antistatic or antifog properties of the resulting composition.

The oxidized polyolefin used is preferably the one exhibiting a limiting viscosity [$\eta$] measured in decaline solvent at 135C of 0.01 to 3 dl/g, preferably 0.02 to 1.8 dl/g, and more preferably 0.05 to 0.5 dl/g.

The oxidized polyolefin may be used either alone or in combination of two or more such polyolefins.

(d) Natural wax

The natural wax which may be used for the agent for preventing the antifogging agent migration in the present invention may be a wax of plant origin, a wax of animal origin, or a mineral wax. The wax used is not particularly limited as long as it is an ester of a higher fatty acid and a higher alcohol or a derivative of such ester, and it is solid at normal temperature.

Exemplary waxes of vegetable origin include candelilla wax, carnauba wax, rice wax, Japan wax, and jojoba oil, and exemplary waxes of animal origin include beewax, lanolin (wool grease), and whale wax. Exemplary mineral waxes include montan wax.

The wax as mentioned above may be the one which is partly or totally saponified, and such wax may be used either alone or in combination of two or more.

In the present invention, among the agent for preventing the antifogging agent migrations as described above, the modified polyolefin (b), and in particular, the modified polyolefin graft modified with an unsaturated carboxylic acid exhibits most prominent effect in imparting the prolonged antifog properties.

The thermoplastic resin composition of the present invention may include a compatibilizer such as a metal salt of higher fatty acid, a polyolefin wax, a hydrogenated petroleum resin, and an antistatic agent other than those described above, as well as various additives such as a thermal stabilizer, a weathering agent, a hindered amine stabilizer, a nucleating agent, a metal inactivator, a lubricant, an antiblocking agent, a slipping agent, a thermostatic agent, an antimist agent, a mold release agent, an inorganic filler, a pigment-dispersing agent, a pigment, a die, and a cross-linking agent in an amount which does not adversely affect the object of the present invention, and such additives may be added in the production of the resin composition.

Thermal stabilizers which may be used in the present invention include phenolic stabilizers, phosphorus-based stabilizers and sulfur-based stabilizers.

The phenolic stabilizer which may be used in the present invention is not limited to any particular type, and the one which has been used as a stabilizer may be used. Exemplary phenolic stabilizers include the compounds as listed below:

2,6-di-t-butyl-4-methylphenol, 2,6-di-t-butyl-4-ethylphenol, 2,6-dicyclohexyl-4-methylphenol, 2,6-di-t-amyl-4-methylphenol, 2,6-di-t-octyl-4-propylphenol, 2,6-dicyclohexyl-4-n-octylphenol, 2-isopropyl-4-methyl-6-t-butylphenol, 2-t-butyl-2-ethyl-6-t-ocytylphenol, 2-isobutyl-4-ethyl-6-t-hexylphenol, 2-cyclohexyl-4-n-butyl-6-isopropylphenol, dl-α-tocopherol, t-butylhydroquinone, 2,2'-methylenebis(4-methyl-6-t-butylphenol), 4,4'-butylidenebis(3-methyl-6-t-butylphenol), 4,4'-thiobis(3-methyl-6-t-butylphenol), 2,2-thiobis(4-methyl-6-t-butylphenol), 4,4'-methylenebis(2,6-di-t-butylphenol), 2,2'-methylenebis[6-(1-methylcyclohexyl)-p-cresol)], 2,2'-ethylidenebis(4,6-di-t-butylphenol), 2,2'-butylidenebis(2-t-butyl-4-methylphenol), 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,1,3-tris-(2-methyl-4-hydroxy-5-t-butylphenyl)butane, triethylene glycol-bis[3-(3-t-butyl-5-methyl-4-hydroxyphenyl) propionate], 1,6-hexanediol-bis[3-(3,5-di-t-butyl-4-hydroxyphenyl) propionate, 2,2-thiodiethylenebis[3-(3,5-di-t-butyl-4-hydroxyphenyl) propionate, N,N'-hexamethylenebis(3,5-di-t-butyl-4-hydroxy-hydrocynnamide), 3,5-di-t-butyl-4-hydroxybenzylphosphonate-diethylester, tris(2,6-dimethyl-3-hydroxy-4-t-butylbenzyl) isocyanurate, tris(3,5-di-t-butyl-4-hydroxybenzyl) isocyanurate, tris[(3,5-di-t-butyl-4-hydroxyphenyl)propionyloxyethyl] isocyanurate, tris(4-t-butyl-2,6-dimethyl-3-hydroxybenzyl) isocyanurate, 2,4-bis(n-octylthio)-6-(4-hydroxy-3,5-di-t-butylanilino)-1,3,5-triazine, tetrakis[methylene-3-(3,5-di-t-butyl-4-hydroxyphenyl)propionate]methane, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,1-dimethyl-2-{β-(3-t-butyl-4-hydroxy-5-methylphenyl)propionyloxy}ethyl]-2,4,8,10-tetraoxaspiro[5,5]undecane, 2,2-bis[4-(2-(3,5-di-t-butyl-4-hydroxyhydrocynnamoyloxy))ethoxyphenyl]propane, and β-(3,5-di-t-butyl-4-hydroxyphenyl)propionyl stearate.

Among these, the preferred are β-(3,5-di-t-butyl-4-hydroxyphenyl)propionyl stearate, tetrakis[methylene-3-(3,5-di-t-butyl-4-hydroxyphenyl)propionate]methane, tris(3,5-di-t-butyl-4-hydroxybenzyl) isocyanurate, 1,3,5-trimethyl-2,4,6-tris(3,5-di-t-butyl-4-hydroxybenzyl)benzene, dl-α-tocopherol, tris(2,6-dimethyl-3-hydroxy-4-t-butylbenzyl) isocyanurate, tris[(3,5-di-t-butyl-4-hydroxyphenyl)propionyloxyethyl] isocyanurate, and 3,9-bis[1,1-dimethyl-2-{β-(3-t-butyl-4-hydroxy-5-methylphenyl)propionyloxy}ethyl]-2,4,8,10-tetraoxaspiro[5,5]undecane.

Commercially available phenolic stabilizers may also be used such as Irganox 1010 (Ciba-Geigy, trade mark), Irganox 1076 (Ciba-Geigy, trade mark), Irganox 1330 (Ciba-Geigy, trade mark), Irganox 3114 (Ciba-Geigy, trade mark), Irganox 3125 (Ciba-Geigy, trade mark), BHT (Takeda Chemical Industries K.K., trade mark), Cyanox 1790 (Cyanamide, trade mark), Sumilizer GA-80 (Sumitomo Chemical K.K., trade mark), and Vitamin E (Eizai Co., Ltd.).

Such phenolic stabilizers may be used either alone or in combination of two or more such stabilizers.

When a phenolic stabilizer is blended as thermal stabilizer in the thermoplastic resin composition of the present invention, it is desirable to blend the phenolic stabilizer in an amount of 0.005 to 2 parts by weight, preferably 0.01 to 1 part by weight, and more preferably 0.05 to 0.5 part by weight per 100 parts by weight of the thermoplastic resin (F).

When the content of the phenolic stabilizer is within such range per 100 parts by weight of the thermoplastic resin, stability such as resistance to heat and aging is sufficiently improved, and cost of the stabilizer is minimized without detracting from tensile strength and other properties of thermoplastic resin.

The phosphorus-based stabilizer which may be used in the present invention is not limited to any particular type, and the one which has been used as a stabilizer may be used. Exemplary phosphorus-based stabilizers include the compounds as listed below:

trioctyl phosphite, trilauryl phosphite, tridecyl phosphite, octyl-diphenyl phosphite, tris(2,4-di-t-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxyphenyl)butane diphosphite, tetra(tridecyl)-1,1,3-tris(2-methyl-5-t-butyl-4-hydroxyphenyl)butane diphosphite, tetra($C_{12}$ to $C_{13}$ mixed alkyl)-4,4'-isopropylidene diphenyl phosphite, tetra(tridecyl)-4,4'-butylidene bis(3-methyl-6-t-butylphenol) diphosphite, tris(3,5-di-t-butyl-4-hydroxyphenyl) phosphite, tris(mono-/di- mixed nonylphenyl) phosphite, hydrogenated-4,4'-isopropylidenediphenol polyphosphite, bis(octylphenyl)/bis[4,4'-butylidene bis(3-methyl-6-t-butylphenol)]/1,6-hexanediol diphosphite, phenyl • 4,4'-isopropylidene diphenol • pentaerythritol diphosphite, tris[4,4'-isopropylidene bis(2-t-butylphenol)] phosphite, phenyl • diisodecyl phosphite, di(nonylphenyl)pentaerythritol diphosphite, tris(1,3-distearoyloxyisopropyl) phosphite, 4,4'-isopropylidenebis(2-t-butylphenol) • di(nonylphenyl) phosphite, 9,10-di-hydro-9-oxa-9-oxa-10-phosphaphenanthrene-10-oxide, bis(2,4-di-t-butyl-6-methylphenyl) • ethyl phosphite, and 2-[{2,4,8,10-tetrakis(1,1-dimethylethyl)dibenzo(D,F)(1,3,2)-dioxaphosphefin-6-yl}oxy]-N,N-bis-[2-[{2,4,8,10-tetrakis(1,1-dimethylethyl)dibenzo(D,F)(1,3,2)- dioxaphosphefin-6-yl}oxy]ethyl]ethaneamine.

The bis(dialkylphenyl)pentaerythritol diphosphite ester may be of spiro type as represented by the following general formula (IX) or cage type as represented by the following general formula (X), and a mixture of both isomers is generally used in view of the economy in the production of the phosphite ester.

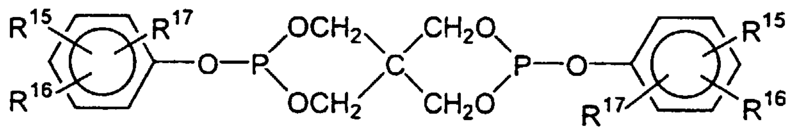

······(IX)

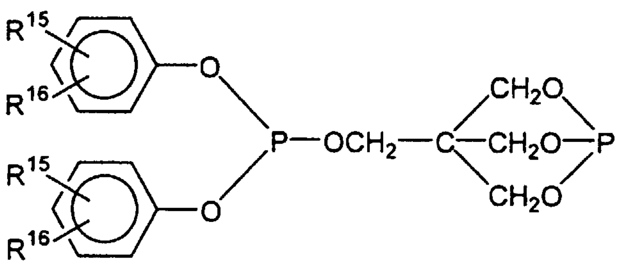

······(X)

In the formulae (IX) and (X), $R^{15}$, $R^{16}$ and $R^{17}$, which may be the same or different, are hydrogen or an alkyl group containing 1 to 9 carbon atoms. The alkyl group is preferably a branched alkyl group, and most preferably tert-butyl group, and the phenyl group is most preferably substituted at 2, 4 or 6 position. The phosphite esters which may be preferably used in the present invention include bis(2,4-di-t-butylphenyl)pentaerythritol diphosphite and bis(2,6-di-t-butyl-4-methylphenyl)pentaerythritol diphosphite, and also phosphonite compound having a structure wherein a carbon is binded directly to phosphorus, for example, tetrakis (2,4-di-t-butylphenyl)-4,4'-biphenylenephospfonite and the like.

Commercially available phosphorus-based stabilizers may also be used such as Irgafos 160 (Ciba-Geigy, trade mark), Irgafos 12 (Ciba-Geigy, trade mark), Irgafos 38 (Ciba-Geigy, trade mark), Mark 329K (Asahi Denka Kogyo K.K., trade mark), Mark PEP36 (Asahi Denka Kogyo K.K., trade mark), Mark PEP-8 (Asahi Denka Kogyo K.K., trade mark), Sandstab P-EPQ (Clariant, trade mark), Weston 618 (General Electric, trade mark), Weston 619G (General Electric, trade mark), and Weston-624 (General Electric, trade mark).

Such phosphorus-based stabilizers may be used either alone or in combination of two or more such stabilizers.

When a phosphorus-based stabilizer is blended as thermal stabilizer in the thermoplastic resin composition of the present invention, it is desirable to blend the phosphorus-based stabilizer in an amount of 0.005 to 2 parts by weight, preferably 0.01 to 1 part by weight, and more preferably 0.05 to 0.5 part by weight per 100 parts by weight of the thermoplastic resin (F).

When the content of the phosphorus-based stabilizer is within such range per 100 parts by weight of the thermoplastic resin, stability such as resistance to heat and aging is sufficiently improved, and cost of the stabilizer is minimized without detracting from tensile strength and other properties of the thermoplastic resin.

The sulfur-based stabilizer which may be used in the present invention is not limited to any particular type, and the one which has been used as a stabilizer may be used. Exemplary sulfur-based stabilizers include the compounds as listed below:

dialkyl thiodipropionates such as dilauryl-, dimyristyl, and distearyl thiodipropionates, polyhydric alcohol (such as glycerin, trimethylol ethane, trimethylol propane, pentaerythritol, trishydroxyethyl isocyanurate) esters of an alkyl thiopropionic acid such as butyl-, octyl-, lauryl-, or stearyl thiopropionic acid (such as pentaerythritol tetralauryl thiopropionate); and more illustratively, dilauryl thiodipropionate, dimyristyl thiodipropionate, distearyl thiodipropionate, and lauryl stearyl thiodipropionate, distearyl thiodibutylate.

Commercially available sulfur-based stabilizers may also be used such as DSTP (Yoshitomi Pharmaceutical K.K., trade mark), DTLP (Yoshitomi Pharmaceutical K.K., trade mark), DLTOIB (Yoshitomi Pharmaceutical K.K., trade mark), DMTP (Yoshitomi Pharmaceutical K.K., trade mark), Seenox 412S (Shiraishi Calcium K.K., trade mark), and Cyanox 1212 (Cyanamide, trade mark).

Such sulfur-based stabilizers may be used either alone or in combination of two or more such stabilizers.

When a sulfur-based stabilizer is blended as thermal stabilizer in the thermoplastic resin composition of the present invention, it is desirable to blend the sulfur-based stabilizer in an amount of 0.005 to 2 parts by weight, preferably 0.01 to 1 part by weight, and more preferably 0.05 to 0.5 part by weight per 100 parts by weight of the thermoplastic resin.

When the content of the sulfur-based stabilizer is within such range per 100 parts by weight of the thermoplastic resin, stability such as resistance to heat and aging is sufficiently improved, and cost of the stabilizer is minimized without detracting from tensile strength and other properties of the thermoplastic resin.

The weathering agent optionally blended in the thermoplastic resin composition of the present invention may be any of the conventional compounds which have been used for the purpose of improving the weatherability such as a weathering agent, a light stabilizer and a UV absorbing agent.

Exemplary weathering agents include the compounds as listed below:

2,4-dihydroxybenzophenone,
2-hydroxy-5-chlorobenzophenone,
2-(2'-hydroxy-5'-methylphenyl)benzotriazol,
2-hydroxy-4-methoxybenzophenone,
2,2'-dihydroxy-4- methoxybenzophenone,
2,2',4,4'-tetrahydroxybenzophenone,
2-hydroxy-4-methoxy-4'-chlorobenzophenone,
p-tert-butylphenylsalicylate,
2,2'-dihydroxy-4,4'-dimethoxybenzophenone,
ethyl-2-cyano-3,3-diphenylacrylate,
2-hydroxy-4-benzyloxybenzophenone,
2-(2'-hydroxy-3'-tert-butyl-5'-methylphenyl)-5-chlorobenzotriazol,
2-(2'-hydroxy-3',5,-di-tert-butylphenyl)benzotriazol,
2-(2'-hydroxy-4'-tert-octylphenyl)benzotriazol,
p-octylphenylsalicylate,
2-hydroxy-4-n-octoxybenzophenone,
2,2'-dihydroxy-4-n-octoxybenzophenone,
2-(2'-hydroxy-4'-octoxyphenyl)benzotriazol,
2-(3,5-di-tert-amyl-2-hydroxyphenyl)benzotriazol,
2-(2'-hydroxy-3',5'-di-tert-butylphenyl)-5-chlorobenzotriazol,
2-ethyl-2'-ethoxy-5'-tert-butyl-N,N'-diphenyloxamide,
2-ethyl-2'-ethoxy-N,N'-diphenyloxamide,
2-hydroxy-4-dodecyloxybenzophenone,
2,4-di-tert-butylphenyl-3,5-di-tert-butyl-4-hydroxybenzoate,
3,5-di-tert-butyl-4-hydroxymyristylbenzoate,
bis(2,2',6,6'-tetramethyl-4-pyperidine)cebacate,
(2,2'-thiobis(4-tert-octylphenolate)]-tert-butylaminonickel (II),
nickel bis(3,5-di-tert-butyl-4-hydroxybenzoylphoshoric acid monoethylester),
nickel bis(3,5-di-tert-butyl-4-hydroxybenzoylphoshoric acid monooctylester),
nickel(II) 2,2-thiobis(4,4-alkylphenol),
condensate of dimethyl succinate [2-(4-hydroxy-2,2,6,6-tetramethyl-1-piperidyl)ethanol],
poly[{6-(1,1,3,3-tetramethylbutyl)imino}-1,3,5-triazine-2,4-diyl{4-(2,2,6,6-tetramethylpiperidyl)imino}hexamethylene],
4-benzoyloxy-2,2,6,6-tetramethylpiperidine,
tetrakis(2,2,6,6-tetramethyl-4-piperidyl)-1,2,3,4-butane tetracarboxylate,
1-[2[{3-(3,5-di-tert-butyl-4-hydroxyphenyl)propionyloxy}ethyl]-4-[3-(3,5-di-tert-butyl-4-hydroxyphenyl)propionyloxy]-2,2,6,6-tetramethylpiridine,
polymethyl-propyl-3-oxy-{1-(2,2,6,6-tetramethyl)piperidinyl}siloxane,
N,N'-bis(3-aminopropyl)ethylenediamine-2,4-bis[N-butyl-N-(1,2,2,6,6-pentamethyl-4-piperidinyl)amino]-6-chloro-1,3,5-triazine,
2-(3,5-di-tert-butyl-4-hydroxybenzyl)-2-n-butyl-malonic acid (1,2,2,6,6-pentamethyl)-4-piperidyl),

1,1'-(1,2-ethanediyl)bis(3,3,5,5-tetramethylpiperadinone),
[2,2'-thiobis(4-tert-octylphenolate)]-2-ethylhexylamine-nickel II,
3,3'-methylenebis(2-hydroxy-4-methoxybenzophenone),
2,4-dibenzoylresorcinol,
1,3-bis(4-benzoyl-3-hydroxyphenoxy)-2-propyl methacrylate,
8-acetyl-7,7,9,9-tetramethyl-3-octyl-1,3,8-triazaspiro[4,5]undecane-2,4-dione,
3-hydoxyphenyl benzoate,
2,4,5-trihydroxybutylophenone,
2-ethylhexyl-2-cyano-3,3-diphenylacrylate,
8-benzyl-7,7,9,9-tetramethyl-3-octyl-1,3,8-triazaspiro[4,5]undecane-2,4-dione,
1,3-bis(4-benzoyl-3-hydroxyphenoxy)-2-propyl acrylate,
2-(4-octoxy-2-hydroxyphenyl)benzotriazol,
phenyl salicylate,
2,2'-methylenebis(6-tert-butyl-4-methylphenol),
bis(1,2,2,6,6-pentamethyl-4-piperidyl) cebacate,
1,2,2,6,6-pentamethyl-4-piperidine methyl methacrylate, and
octadecene • N-(2,2,6,6-tetramethylpiperidinyl)-N-maleimideoxamide copolymer.

The hindered amine stabilizer optionally blended in the present invention is not particularly limited, and may be any conventional compound which has a structure wherein all of the hydrogen atoms binding to the carbon atoms at positions 2 and 6 of piperidine are substituted with methyl group. Exemplary hindered amine stabilizers include the compounds as listed below:

(1) bis(2,2,6,6-tetramethyl-4-piperidyl) cebacate,
(2) polycondensate of dimethyl-1-(2-hydroxyethyl)-4-hydroxy-2,2,6,6-tetramethyl-4-piperidine succinate,
(3) poly{[6-(1,1,3,3-tetramethylbutyl)imino-1,3,5-triazine-2-4-diyl][(2,2,6,6-tetramethyl-4-piperidyl)imino]hexamethylene [(2,2,6,6-tetramethyl-4-piperidyl)imino]},
(4) tetrakis(2,2,6,6-tetramethyl-4-piperidyl)-1,2,3,4-butane tetracarboxylate,
(5) 2,2,6,6-tetramethyl-4-piperidinyl benzoate,
(6) bis-(1,2,6,6-pentamethyl-4-piperidinyl)-2-(3,5-di-t-butyl-4-hydroxybenzyl)-2-n-butyl malonate,
(7) bis-(N-methyl-2,2,6,6-tetramethyl-piperidinyl) cebacate,
(8) 1,1'-(1,2-etanediyl)bis(3,3,5,5-tetramethylpiperadinone),
(9) (mixed 2,2,6,6-tetramethyl-4-piperidyl/tridecyl)-1,2,3,4-butane tetracarboxylate,
(10) (mixed 1,2,2,6,6-pentamethyl-4-piperidyl/tridecyl)-1,2,3,4-butane tetracarboxylate,
(11) mixed {2,2,6,6-tetramethyl-4-piperidyl/β, β, β', β'-tetramethyl-3-9-[2,4,8,10-tetraoxaspiro(5,5)undecane]diethyl}-1,2,3,4-butane tetracarboxylate,
(12) mixed {1,2,2,6,6-pentamethyl-4-piperidyl/β, β, β', β'-tetramethyl-3-9-[2,4,8,10-tetraoxaspiro(5,5)undecane]diethyl}-1,2,3,4-butane tetracarboxylate,
(13) polycondensate of N,N'-bis(3-aminopropyl)ethylenediamine-2-4-bis[N-butyl-N-(1,2,2,6,6- pentamethyl-4-piperidyl)amino]-6-chloro-1,3,5-triazine,
(14) poly{[6-N-morpholyl-1,3,5-triazine-2-4-diyl][(2,2,6,6-tetramethyl-4-piperidyl)imino]hexamethylene[(2,2,6,6-tetramethyl-4-piperidyl)imino]},
(15) polycondensate of N,N'-(bis(2,2,6,6-tetramethyl-4-piperidyl)hexamethylenediamine and 1,2-dibromoethane, and
(16) [N-(2,2,6,6-tetramethyl-4-piperidyl)-2-methyl-2-(2,2,6,6-tetramethyl-4-piperidyl)imino]propionamide.

Among these, use of the compounds (1), (2), (3), (4), (8), (10), (11), (14) and (15) are preferred.

Such hindered amine stabilizer may be used either alone or in combination of two or more.

When a hindered amine stabilizer is blended in the thermoplastic resin composition of the present invention, the hindered amine stabilizer may be blended in an amount of 0.005 to 2 parts by weight, preferably 0.01 to 1 part by weight, and more preferably 0.05 to 0.5 part by weight per 100 parts by weight of the thermoplastic resin.

When the content of the hindered amine stabilizer is within such range per 100 parts by weight of the thermoplastic resin, stability such as resistance to heat and aging is sufficiently improved, and cost of the stabilizer is minimized without detracting from tensile strength and other properties of thermoplastic resin.

The nucleating agent optionally blended in the thermoplastic resin composition of the present invention may be an organic phosphate nucleating agent, a sorbitol nucleating agent, an aromatic carboxylic acid nucleating agent, a high melting point polymer nucleating agent, an inorganic nucleating agent, or a resin acid nucleating agent, which may be used alone or in combination or two or more.

Examples of the organic phosphate nucleating agents optionally blended as a nucleating agent in the thermoplastic resin composition of the present invention are the compounds represented by the following general formula (XI):

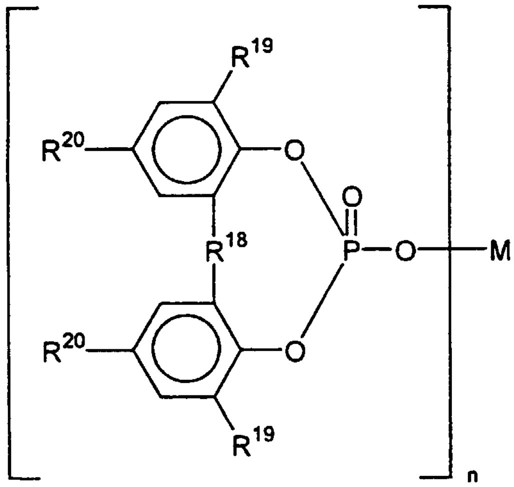

......(XI)

In the formula (XI), $R^{18}$ is oxygen, sulfur or a hydrocarbon group containing 1 to 10 carbon atoms; the two $R^{19}$ and the two $R^{20}$ are hydrogen or a hydrocarbon group containing 1 to 10 carbon atoms, $R^{19}$ and $R^{20}$ may be either the same or different, and $R^{19}$ and $R^{19}$ or $R^{20}$ and $R^{20}$ may together represent a cyclic moiety; M is a monovalent, divalent, or trivalent metal atom; and n is an integer of 1 to 3.

Exemplary compounds represented by the general formula (XI) include sodium-2,2'-methylene-bis(4,6-di-t-butylphenyl) phosphate, sodium-2,2'-ethylidene-bis(4,6-di-t-butylphenyl) phosphate, lithium-2,2'-methylene-bis(4,6-di-t-butylphenyl) phosphate, lithium-2,2'-ethylidene-bis(4,6-di-t-butylphenyl) phosphate, sodium-2,2'-ethylidene-bis(4-i-propyl-6-t-butylphenyl) phosphate, lithium-2,2'-methylene-bis(4-methyl-6-t-butylphenyl) phosphate, lithium-2,2'-methylene-bis(4-ethyl-6-t-butylphenyl) phosphate, calcium bis[2,2'-thiobis(4-methyl-6-t-butylphenyl)phosphate], calcium bis[2,2'-thiobis(4-ethyl-6-t-butylphenyl)phosphate], calcium bis[2,2'-thiobis(4,6-di-t-butylphenyl)phosphate], magnesium bis[2,2'-thiobis(4,6-di-t-butylphenyl)phosphate], magnesium bis[2,2'-thiobis(4-t-octylphenyl)phosphate], sodium-2,2'-butylidene-bis(4,6-di-methylphenyl)phosphate, sodium-2,2'-butylidene-bis(4,6-di-t-butylphenyl)phosphate, sodium-2,2'-t-octylmethylene-bis(4,6-di-methylphenyl)phosphate, sodium-2,2'-t-octylmethylene-bis(4,6-di-t-butylphenyl)phosphate, calcium-bis[2,2'-methylene-bis(4,6-di-t-butylphenyl)phosphate], magnesium-bis[2,2'-methylene-bis(4,6-di-t-butylphenyl)phosphate], barium-bis[2,2'-methylene-bis(4,6-di-t-butylphenyl)phosphate], sodium-2,2'-methylene-bis(4-methyl-6-t-butylphenyl)phosphate, sodium-2,2'-methylene-bis(4-ethyl-6-t-butylphenyl)phosphate, sodium (4,4'-dimethyl-5,6'-di-t-butyl-2,2'-biphenyl)phosphate, calcium-bis[(4,4'-dimethyl-6,6'-di-t-butyl-2,2'-biphenyl)phosphate, sodium-2,2'-ethylidene-bis(4-m-butyl-6-t-butylphenyl)phosphate, sodium-2,2'-methylene-bis(4,6-dimethylphenyl)phosphate, sodium-2,2'-methylene-bis(4,6-diethylphenyl)phosphate, potassium-2,2'-ethylidene-bis(4,6-di-t-butylphenyl)phosphate, calcium-bis[2,2'-ethylidene-bis(4,6-di-t-butylphenyl)phosphate], magnesium-bis[2,2'-ethylidene-bis(4,6-di-t-butylphenyl)phosphate], barium-bis[2,2'-ethylidene-bis(4,6-di-t-butylphenyl)phosphate], aluminum-tris[2,2'-methylene-bis(4,6-di-t-butylphenyl)phosphate], aluminum-tris[2,2'-ethylidene-bis(4,6-di-t-butylphenyl)phosphate], and a mixture of two or more such compound. The most preferred is sodium-2,2'-methylene-bis(4,6-di-t-butylphenyl)phosphate.

Examples of the preferable organic phosphate nucleating agents are the compounds represented by the following general formula (XII):

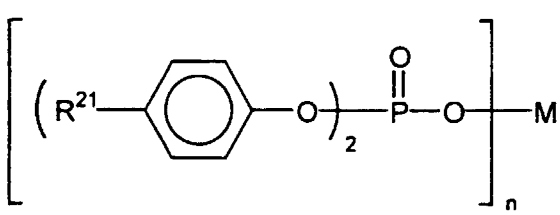

......(XII)

In the formula (XII), $R^{21}$ is hydrogen or a hydrocarbon group containing 1 to 10 carbon atoms; M is a monovalent, divalent, or trivalent metal atom; and n is an integer of 1 to 3.

Exemplary compounds represented by the general formula (XII) include sodium-bis(4-t-butylphenyl) phosphate, sodium-bis(4-methylphenyl) phosphate, sodium-bis(4-ethylphenyl) phosphate, sodium-bis(4-i-propylphenyl) phosphate, sodium-bis(4-t-octylphenyl) phosphate, potassium-bis(4-t-butylphenyl) phosphate, calcium-bis(4-t-butylphenyl) phosphate, magnesium-bis(4-t-butylphenyl) phosphate, lithium-bis(4-t-butylphenyl) phosphate, aluminum-bis(4-t-butylphenyl) phosphate, and mixtures of two or more such compounds. The most preferred is sodium-bis(4-t-butylphenyl) phosphate.

Examples of the preferable sorbitol nucleating agents among the sorbitol nucleating agents optionally blended as a nucleating agent in the thermoplastic resin composition of the present invention are the compounds represented by the following general formula (XIII):

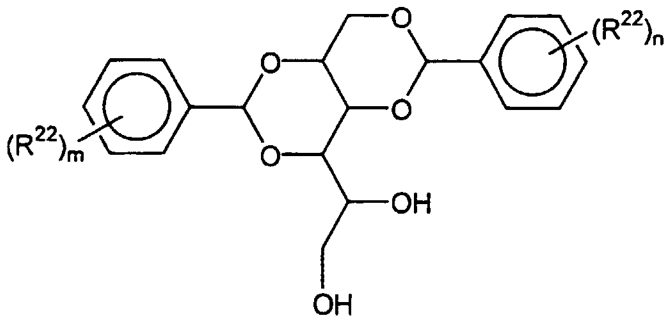

......(XIII)

In the formula (XIII), $R^{21}$ which may be the same or different from each other is hydrogen, a halogen such as chlorine, or a hydrocarbon group containing 1 to 10 carbon atoms; and m and n are respectively an integer of 0 to 5.

Exemplary compounds represented by the general formula (XIII) include 1,3,2,4-dibenzylidene sorbitol, 1,3-dibenzylidene-2,4-p-methylbenzylidene sorbitol, 1,3-dibenzylidene-2,4-p-ethylbenzylidene sorbitol, 1,3-p-methylbenzylidene-2,4-benzylidene sorbitol, 1,3-p-ethylbenzylidene-2,4-benzylidene sorbitol, 1,3-p-methylbenzylidene-2,4-p-ethylbenzylidene sorbitol, 1,3-p-ethylbenzylidene-2,4-p-methylbenzylidene sorbitol, 1,3,2,4-di(p-methylbenzylidene) sorbitol, 1,3,2,4-di(p-ethylbenzylidene) sorbitol, 1,3,2,4-di(p-n-propylbenzylidene) sorbitol, 1,3,2,4-di(p-i-propylbenzylidene) sorbitol, 1,3,2,4-di(p-n-butylbenzylidene) sorbitol, 1,3,2,4-di(p-s-butylbenzylidene) sorbitol, 1,3,2,4-di(p-t-butylbenzylidene) sorbitol, 1,3,2,4-di(2',4'-dimethylbenzylidene) sorbitol, 1,3,2,4-di(p-methoxybenzylidene) sorbitol, 1,3,2,4-di(p-ethoxybenzylidene) sorbitol, 1,3-benzylidene-2-4-p-chlorobenzylidene sorbitol, 1,3-p-chlorobenzylidene-2-4-benzylidene sorbitol, 1,3-p-chlorobenzylidene-2-4-p-methylbenzylidene sorbitol, 1,3-p-chlorobenzylidene-2-4-p-ethylbenzylidene sorbitol, 1,3-p-methylbenzylidene-2-4-p-chlorobenzylidene sorbitol, 1,3-p-ethylbenzylidene-2-4-p-chlorobenzylidene sorbitol, 1,3,2,4-di(p-chlorobenzylidene) sorbitol, and mixtures of two or more such compounds. Among these, the preferred are 1,3,2,4-dibenzylidene sorbitol, 1,3,2,4-di(p-methylbenzylidene) sorbitol, 1,3,2,4-di(p-ethylbenzylidene) sorbitol, 1,3-p-chlorobenzylidene-2-4-p-methylbenzylidene sorbitol, 1,3,2,4-di(p-chlorobenzylidene) sorbitol, and mixtures of two or more such compounds.

Examples of the preferable sorbitol nucleating agents are the compounds represented by the following general formula (XIV):

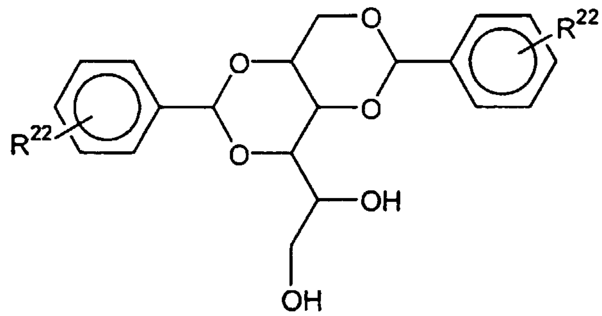

······(XIV)

In the formula (XIV), $R^{22}$ which may be the same or different from each other is an alkyl group containing 1 or 2 carbon atoms.

Examples of the preferable aromatic carboxylic acid nucleating agent optionally blended in the thermoplastic resin composition of the present invention are the aluminum hydroxy di-para-t-butyl benzoate represented by the following general formula (XV):

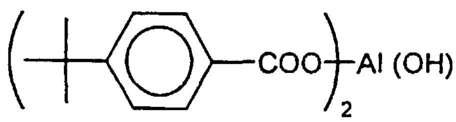

······(XV)

In addition to those described above, a high melting point polymer, a metal salt of an aromatic carboxylic acid other than those described above, a metal salt of an aliphatic carboxylic acid, and an inorganic compound may be blended as a nucleating agent in the present invention. Exemplary high melting point polymers include polyvinylcycloalkanes such as polyvinylcyclohexane and polyvinylcyclopentane; poly 3-methylpentene, poly 3-methylbutene-1, polyalkenylsilanes. Exemplary metal salts include aluminum benzoate, aluminum p-t-butylbenzoate, sodium adipate, sodium thiophene carboxylate, and sodium pyrrole carboxylate. Exemplary inorganic compounds include silica, diatomaceous earth, alumina, titanium oxide, magnesium oxide, pumice powder, pumice balloon, aluminum hydroxide, magnesium hydroxide, basic magnesium carbonate, dromite, calcium sulfate, potassium titanate, barium sulfate, calcium sulfite, talk, clay, mica, asbestos, glass fiber, glass flake, glass beads, calcium silicate, montmorillonite, bentonite, graphite, aluminum powder, and molybdenum sulfate. In addition to such compounds, bromated biphenyl ether and cyclic triethylene glycol terephthalate may also be employed.

In the thermoplastic resin composition of the present invention, well known resin acids may be used for the nucleating agent. Exemplary such resin acid nucleating agents include, partial metal salts of a resin acid such as partial sodium salt of a resin acid, partial potassium salt of a resin acid, and partial magnesium salt of a resin acid.

The resin acid nucleating agent is preferably a partial metal salt of a resin acid selected from natural rosins, modified rosins and purified products thereof; and more preferably, the partial metal salt of resin acid is a partial metal salt of at least one resin acid selected from dehydroabietic acid, dihydroabietic acid, dihydropimaric acid, and derivatives thereof; and most preferably, at least one partial metal salt of a resin acid selected from a partial metal salt of the resin acid represented by the following general formula (XVIa) and a partial metal salt of the resin acid represented by the following general formula (XVIb).

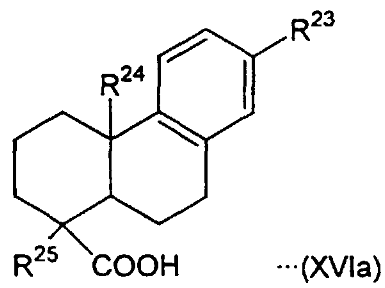 ···(XVIa) 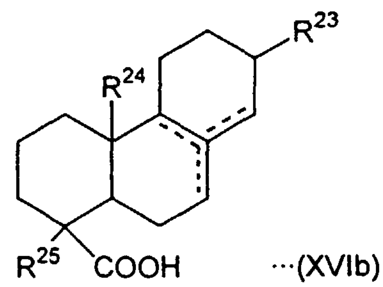 ···(XVIb)

In the formulae (XVIa) and (XVIb), $R^{23}$, $R^{24}$ and $R^{25}$, which may be the same or different from each other, may be hydrogen atom, an alkyl group, a cycloalkyl group or an aryl group.

Exemplary alkyl groups include alkyl groups containing 1 to 8 carbon atoms such as methyl, ethyl, n-propyl, i-propyl, n-butyl, i-butyl, tert-butyl, pentyl, heptyl, and octyl which may be substituted with a substituent such as hydroxyl group, carboxyl group, an alkoxy group or a halogen.

Exemplary cycloalkyl groups include cycloalkyl groups containing 5 to 8 carbon atoms such as cyclopentyl, cyclohexyl, and cycloheptyl which may be substituted with a substituent such as hydroxyl group, carboxyl group, an alkoxy group or a halogen.

Exemplary aryl groups include aryl groups containing 6 to 10 carbon atoms such as phenyl, tolyl, and naphtyl which may be substituted with a substituent such as hydroxyl group, carboxyl group, an alkoxy group or a halogen.

It should be noted that the term, partial metal salts of a resin acid as used herein designate the reaction product of the resin acid and the metal compound, and includes both the mixture of the metal resinate and the resin acid which failed to react, and the metal resinate which is free from the resin acid which failed to react.

The metal compounds which forms a metal salt upon reaction with the resin acid are the compounds which contains a metal elements such as sodium, potassium or magnesium and which forms a metal salt with the resin acid, and exemplary such metal compounds include chloride, nitrate, acetate, sulfate, carbonate, oxide, hydroxide and the like of the above-mentioned metal.

Exemplary resin acids include natural rosins such as gum rosin, tall oil rosin, and wood rosin; modified rosins such as disproportionated rosin, hydrogenated rosin, dehydrogenated rosin, polymerized rosin, and $\alpha$, $\beta$-ethylenically unsaturated carboxylic acid-modified rosin; and purification products of the above-mentioned natural rosin and purification products of the above-mentioned modified rosin.

It should be noted that a natural rosin generally contains a plurality of resin acids such as pimaric acid, sandarac pimaric acid, parastric acid, isopimaric acid, abietic acid, dehydroabietic acid, neoabietic acid, dihydropimaric acid, dihydroabietic acid, and tetrahydroabietic acid.

Exemplary unsaturated carboxylic acids which may be used in preparing the $\alpha$, $\beta$-ethylenically unsaturated carboxylic acid-modified rosin include maleic acid, maleic anhydride, fumaric acid, itaconic anhydride, citraconic acid, acrylic acid, and methacrylic acid.

Among the resin acid as mentioned above, the preferred are at least one resin acid selected from disproportionated rosin, hydrogenated rosin and dehydrogenated rosin, and the most preferred are at least one resin acid selected from dehydroabietic acid, dihydroabietic acid, dihydropimaric acid, and derivatives thereof.

Exemplary partial metal salts of a resin acid include partial sodium salt of the above-mentioned resin acids, partial potassium salt of the above-mentioned resin acids, and partial magnesium salt of the above-mentioned resin acids.

In the present invention, use of a compound represented by the general formula (XVIa) [compound (XVIa)], and a compound represented by the general formula (XVIb) [compound (XVIb)] are preferred.

Of the compounds (XVIa) and (XVIb), those wherein $R^{23}$, $R^{24}$ and $R^{25}$ are an alkyl group which may be the same or different from each other are the preferred, and those wherein $R^{23}$ is i-propyl group and $R^{24}$ and $R^{25}$ are methyl group are the most preferred.

A partial metal salt of such compound exhibits particularly prominent effect of improving the crystallization speed of the crystalline resin.

Typical example of the compound (XVIa) is dehydroabietic acid, and typical example of the compound (XVIb) is dihydroabietic acid.

Of the compounds (XVIa) and compounds (XVIb), the dehydroabietic acid represented by the formula (XVIa) is obtained by disproportionating or dehydrogenating a natural rosin such as gum rosin, tall oil rosin, or wood rosin and

purifying the product.

The metal salt of the compound (XVIa) may be the compound represented by the general formula (XVIIa) [compound (XVIIa)] and the metal salt of the compound (XVIb) may be the compound represented by the general formula (XVIIb) [compound (XVIIb)].

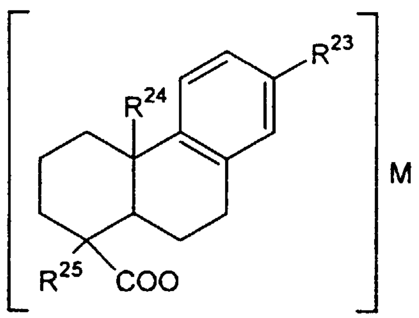
···(XVIIa)

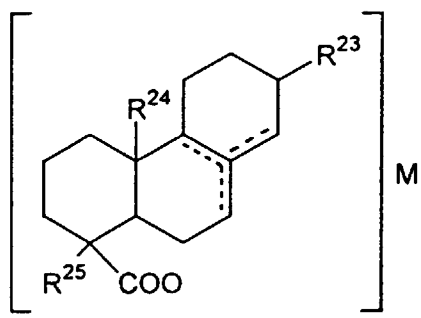
···(XVIIb)

In the general formulae (XVIIa) and (XVIIb), $R^{23}$, $R^{24}$ and $R^{25}$ are the same as the general formula (XVIa) and the general formula (XVIb).

M is a monovalent, divalent or trivalent metal ion, which is typically a monovalent metal ion such as lithium, sodium, potassium, rubidium, and cesium; a divalent metal ion such as beryllium, magnesium, calcium, strontium, barium, and zinc; and a trivalent metal ion such as aluminum. Among these, the preferred are divalent metal ions which are typically sodium ion, potassium ion, and magnesium ion.

n is an integer which is the same as the valence of the metal ion M as described above in the range of 1 to 3.

Of the compounds represented by the formulae (XVIIa) and (XVIIb), a compound wherein $R^{23}$, $R^{24}$ and $R^{25}$ are alkyl groups which are the same or different from each other, and M is a monovalent or a divalent metal ion is preferable; a compound wherein $R^{23}$ is i-propyl group, and $R^{24}$ and $R^{25}$ are methyl group, or a compound wherein M is sodium ion, potassium ion or magnesium ion are more preferable; and a compound wherein $R^{23}$ is i-propyl group, $R^{24}$ and $R^{25}$ are methyl group, and M is sodium ion, potassium ion or magnesium ion is most preferable.

Exemplary compounds represented by the formula (XVIIa) include metal dehydroabietates such as lithium dehydroabietate, sodium dehydroabietate, potassium dehydroabietate, beryllium dehydroabietate, magnesium dehydroabietate, calcium dehydroabietate, zinc dehydroabietate, and aluminum dehydroabietate among which use of sodium dehydroabietate, potassium dehydroabietate, and magnesium dehydroabietate are preferable.

Exemplary compounds represented by the formula (XVIIb) include metal dihydroabietates such as lithium dihydroabietate, sodium dihydroabietate, potassium dihydroabietate, beryllium dihydroabietate, magnesium dihydroabietate, calcium dihydroabietate, zinc dihydroabietate, and aluminum dihydroabietate among which use of sodium dihydroabietate, potassium dihydroabietate, and magnesium dihydroabietate are preferable.

In the present invention, two or more resin acid partial metal salts may be used for the nucleating agent, and the two or more resin acid partial metal salts may comprise two or more resin acid partial metal salts wherein the resin acid is the same and the metal is different; two or more resin acid partial metal salts wherein the resin acid is different and the metal is the same; or two or more resin acid partial metal salts wherein the resin acid is different and the metal is different. The two or more resin acid partial metal salts may contain 5 to 100% by weight in total of the metal resinates, and preferably, 10 to 100% by weight in total of the metal resinates.

Content ratio of the metal resinates in the two or more resin acid partial metal salts is not particularly limited, and the two or more resin acid partial metal salts are desirably combined such that the content of one metal resinate in the total content of the metal resinates in the two or more resin acid partial metal salts is in excess of 0% by mole, and preferably 5 to 95% by mole, and the content of the other metal resinate is less than 100% by mole, and preferably 95 to 5% by mole.

A preferable combination of the two or more resin acid partial metal salts is partial potassium salt of the resin acid with partial sodium salt of the resin acid or partial magnesium salt of the resin acid. The content of the potassium resinate in the total content of the metal resinates in the two resin acid partial metal salts is at least 20% by mole, and preferably 40 to 95% by mole, and more preferably 45 to 80% by mole; and the content of the sodium resinate or the

magnesium resinate in the total content of the metal resinates in the two resin acid partial metal salts is up to 80% by mole, and preferably 60 to 5% by mole, and more preferably 55 to 20% by mole.

The resin acid partial metal salts containing at least two metals as described above has a higher dispersibility into to the thermoplastic resin compared to the resin acid partial metal salts containing only one metal.

The metal inactivator optionally blended in the thermoplastic resin of the present invention is not particularly limited, and any conventional compound which has been used for the purpose of improving the deterioration of the resin by various metals may be used for the metal inactivator.

Exemplary metal inactivators include:

hydrazine compounds such as N,N'-bis[3-(3,5-di-t-butyl-4-hydroxyphenyl)propionyl]hydrazine (manufactured by Ciba-Geigy, Trade name: Irganox MD 1024), distearylhydrazine, dilauroylhydrazine, dicaproylhydrazine, dioctanoylhydrazine, N,N'-bis(2-ethylhexanoyl)hydrazine, salicitoyl-benzoylhydrazine, and salicylidenesalicyloylhydrazine (manufactured by Ciga-Geigy, Trade name: Chel-180);

hydrazide compounds such as isophthalic acid bis($\alpha$-phenoxypropionyl)hydrazide, oxalo-bis-12-hydroxybenzylidenehydrazide (manufactured by Eastman-Kodak, Trade name, Eastman Inhibitor OABH), bis-salicyloyl ($\beta$,$\beta$ '-thiodipropionic acid)hydrazide, bis-acetoadipic acid hydrazide (manufactured by Ciga-Geigy, Trade name: GI09-367), and decamethylenedicarboxylic acid disalicyloylhydrazide (manufactured by Adeca Argus, Trade name: Adecastab CDA-6); and

nitrogen-containing aromatic compounds such as 3-(N-salicyloyl)amino-1,2,4-triazole (manufactured by Adeca Argus, Trade name: Adecastab CDA-1), benzotriazole, 3-amino-1,2,4-triazole, 1,3-diphenyltriazine, and 5-phenyltetrazole.

In addition to the compounds as mentioned above, N-salicyloyl-N'-aldehydradine, N,N-dibenzal(oxalhydrazide), N,N-bis(3,5-di-t-butyl-hydroxyhydrocynnamate), and 2,2'-oxamide-bis-ethyl-3-(3,5-di-t-butyl-4-hydroxyphenyl)propionate may be used for the metal inactivator.

The metal inactivator as described above may be used either alone or in combination of two or more.

Of the metal inactivators described above, the preferred are N,N'-bis[3-(3,5-di-t-butyl-4-hydroxyphenyl)propionyl]hydrazine (manufactured by Ciga-Geigy, Trade name: Irganox MD 1024), isophthalic acid bis($\alpha$-phenoxypropionyl)hydrazide, 3-(N-salicyloyl)amino-1,2,4-triazole (manufactured by Adeca Argus, Trade name: Adecastab CDA-1), and 2,2'-oxamide-bis-ethyl-3-(3,5-di-t-butyl-4-hydroxyphenyl)propionate (manufactured by Uniroyal, trade name: Naugard XL-1).

When the metal inactivator as described above is blended in the thermoplastic resin composition of the present invention, deterioration by metals such as copper, cobalt, iron, vanadium, nickel, titanium, calcium, silver, zinc, aluminum, magnesium, lead, chromium, manganese, cadmium, tin, zirconium, and hafnium is prevented, and the production of a polyolefin polymer composition, and in particular, a propylene polymer composition which exhibits high resistance to deterioration by metals, and in particular, high resistance to deterioration by metals at high temperature is enabled. As a consequence, the thermoplastic resin composition of the present invention does not undergo change in its properties when kept in direct contact with a metal, and exhibits high stability for a prolonged period.

In the present invention, when one or two of magnesium hydroxide, aluminum hydroxide, and calcium hydroxide is added in addition to the metal inactivator as described above, metal deterioration is greatly avoided by the synergetic effect of the hydroxide and the metal inactivator. Such hydroxide is desirably blended in an amount of 0.1 to 20 parts by weight, and preferably 0.1 to 5 parts by weight per 100 parts by weight of the thermoplastic resin.

The lubricant optionally blended in the thermoplastic resin of the present invention is not particularly limited, and any conventional compound which has been used as the resin lubricant may be used for the lubricant. Exemplary lubricants include the compounds as listed below:

synthetic hydrocarbons such as Tropsch wax and polyethylene wax; synthetic modified waxes such as montan wax derivative, paraffin wax derivative, and microcrystalline wax derivative; synthetic hydrogenated waxes such as hardened castor oil, derivative of hardened castor oil, hardened rapeseed oil, and hardened soy bean oil; synthetic metal soaps such as Ca stearate, Ba stearate, Zn stearate, and Li stearate; synthetic higher fatty acids such as stearic acid and 12-hydroxystearic acid; synthetic fatty acid amides such as oleic acid amide, stearic acid amide, erucic acid amide, ethylenebisstearic acid amide, and EBS; and synthetic fatty acid esters such as butyl stearate and long chain fatty acid ester; and synthetic higher alcohols such as cetanol and stearyl alcohol.

Commercially available lubricants may also be used such as Armoslip CP (manufactured by Lion K.K., trade mark), Neutron 2 (manufactured by Nippon Seika K.K., trade mark), Arflo-P-10 (manufactured by Nippon Oils & Fats K.K., trade mark), and Armowax EBS (Lion-Armor K.K., trade mark).

Such lubricants may be used either alone or in combination of two or more such lubricants.

When a lubricant is blended in the thermoplastic resin composition of the present invention, it is desirable to blend the lubricant in an amount of 0.005 to 2 parts by weight, preferably 0.01 to 1 part by weight, and more preferably 0.05 to 1 part by weight per 100 parts by weight of the thermoplastic resin.

When the content of the lubricant is within such range per 100 parts by weight of the thermoplastic resin, flow properties upon extrusion or molding of the propylene polymer composition of the present invention is improved, and adhesion to the extruder or the mold is suppressed and the mold release of the molded article is improved. When the composition is extruded into a film, slip properties as required in the opening of the tube or bag is improved without detracting from the properties inherent to thermoplastic resins such as tensile strength. A metal salt of a higher fatty acid such as Ca stearate has the effect of a rust-preventive agent in addition to the effect as the lubricant, and therefore, the propylene polymers composition having such metal salt of a higher fatty acid blended therein exhibits excellent mold release, and rust of the exturuder and the like is thus prevented.

The antiblocking agent optionally blended in the thermoplastic resin of the present invention may be, for example, synthetic or natural silica, silicon dioxide, talc, and zeolite.

Such antiblocking agent may preferably have an average particle size of up to 5 m, and more preferably up to 4 m. When the average particle size is within such range, the resulting article exhibits good transparency and scratch resistance.

When an antiblocking agent is blended in the thermoplastic resin composition of the present invention, water content of the antiblocking agent is preferably up to 15% by weight, and preferably up to 5% by weight. Use of an antiblocking agent having a water content in such range is preferable since bubbling in the extrusion or molding of the product is prevented.

The antiblocking agent is preferably used in an amount of 0.01 to 0.5 parts by weight, and more preferably in an amoun of 0.05 to 0.2 parts by weight per 100 parts by weight of the thermoplastic resin (F).

The slipping agent optionally blended in the thermoplastic resin of the present invention may comprise, for example, a straight chain monocarboxylic acid monoamide compound or a straight chain monocarboxylic acid bisamide compound, which may be used alone or in combination of two or more.

Exemplary straight chain monocarboxylic acid monoamide compounds include oleic acid amide, stearic acid amide, erucic acid amide, palmitic acid amide, behenic acid amide, and lauric acid amide.

Exemplary straight chain monocarboxylic acid bisamide compounds include ethylenebisoleic acid amide, ethylenebisstearic acid amide, and methylenebisstearic acid amide.

Use of a straight chain monocarboxylic acid monoamide compounds alone is preferable in view of the slip properties of the product during the molding or extrusion and the slip properties of the product after the molding or extrusion. In the case of the polypropylene film laminate of the present invention as will be described later, use of a straight chain monocarboxylic acid bisamide compound and a straight chain monocarboxylic acid monoamide compound in combination is preferable in consideration of the slip properties after the lamination.

When a slipping agent is blended in the thermoplastic resin composition of the present invention, it is desirable to blend the slipping agent in an amount of 0.01 to 1.0 part by weight, preferably 0.03 to 0.5 part by weight, and more preferably 0.05 to 0.2 part by weight per 100 parts by weight of the thermoplastic resin (F). When the straight chain monocarboxylic acid monoamide compound and the straight chain monocarboxylic acid bisamide compound are used in combination, the weight ratio of the straight chain monocarboxylic acid monoamide compound /the straight chain monocarboxylic acid bisamide compound is preferably 20/80 to 80/20, and more preferably 30/70 to 70/30.

In the thermoplastic resin composition of the present invention, an inorganic filler such as silica, a magnesium compound or a hydrotalcite; or a water absorbing resin such as ethylene-vinyl alcohol copolymer may be added for the purpose of improving the heat insulation properties. Among these, use of a hydrotalcite compound is preferred.

The hydrotalcite compounds which may be used in the present invention include the following structures.

(1) Hydrotalcite group:

Water-containing carbonate mineral represented by the general formula: $Mg_6R_2(OH)_{16}CO_3/4H_2O$ (R = Al, Cr or Fe).

(A natural mineral produced in a small amount in Ural in the USSR or Snalum in Norway.)

(2) Synthetic hydrotalcites as described below:

$$M^{2+}{}_{1-x}Al_x(OH)_2(A^{n-})_{x/n} \cdot mH_2O \text{ (wherein } 0 < x < 0.5,\ 0 \leqq m \leqq 2\text{).}$$

$M^{2+}$: a divalent metal ion selected from Mg, Ca and Zn;

$A^{n-}$: an n-valent anion such as $Cl^-$, $Br^-$, $I^-$, and $NO_3^-$, $C1O4^-$, $SO_4^{2-}$, $CO_3^{2-}$, $SiO_3^{2-}$, $HPO_4^{2-}$, $HBO_3^{2-}$, $PO_4^{3-}$, $Fe(CN)_6^{3-}$, $Fe(CN)_4^{4-}$, $CH_3COO^-$, $C_6H_4(OH)COO^-$, $(OOC\text{-}COO)^{2-}$ and the like.

Average particle size of such hydrotalcite compound is not particularly limited so long as no adverse effects are found on the film appearance, strength, elongation, extrudability and the like. The average particle size is generally up to 10 m, preferably up to 5 m, and more preferably up to 3 m.

The hydrotalcite compound is preferably treated with a surface treating agent before its use in order to improve its dispersibility. Exemplary such surface treating agents include paraffin, fatty acids, higher alcohols, polyhydric alcohols, thionate coupling agents, and silane coupling agents.

When a hydrotalcite compound is blended in the thermoplastic resin composition of the present invention, the hydrotalcite compound is used in a weight ratio of the thermoplastic resin (F) / the hydrotalcite compound of 98 to 60 / 2 to 40, and more preferably, at a weight ratio of 98 to 75 / 2 to 25.

The antimist agent optionally blended in the thermoplastic resin of the present invention may be, for example, a fluorosurfactant which is a surfactant wherein hydrogen atoms bonded to the carbon atom of the hydrophobic group of a conventional surfactant are partly or totally substituted with fluorine, and in particular, which has a perfluoroalkyl group or a perfluoroalkenyl group.

Typical fluorosurfactants which may be used for the antimist agent in the present invention include the following surfactants.

(a) Anionic fluorosurfactants

(1) -COOM fluorosurfactants

$R_fCOOM$
$R_fSO_2N(R')_2CH_2COOM$

(2) $-OSO_3M$ fluorosurfactants

$R_fBNR'YOSO_3M$

(3) $-SO_3M$ fluorosurfactants

$R_fSO_3M$
$R_fCH_2O(CH_2)_mSO_3M$
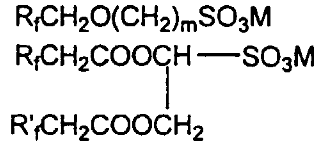

(4) $-OPO(OM)_2$ fluorosurfactants

$R_fBNR'YOP(=O)(NM)_2$

In the formulae as mentioned above, $R_f$ and $R'_f$ are a fluoroalkyl group wherein hydrogen atoms of the alkyl group are partly or totally substituted with fluorine atom, and B is -CO-, $-CO_2-$, or $-SO_2-$, and R' is hydrogen atom or a lower alkyl group, M is hydrogen atom, $-NH_4$, an alkaline metal or an alkaline earth metal.

Exemplary desirable fluoroalkyl groups are polyfluoroalkyl groups having the following structures:

$CF_3—(CF_2)_l—$

wherein l is an integer of 2 to 19;

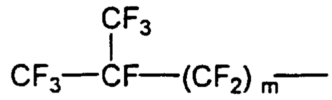

wherein m is an integer of 0 to 17; and

$HCF_2—(CF_2)_n—$

wherein n is an integer of 2 to 19.

$R_f$ and $R'_f$ may also be a branched polyfluoroalkyl group synthesized by oligomerizing $CF_2=CF_2$ or $CF_2$-$CF_2=CF_2$, or $C_3F_7O$-$(C_3F_6O)_kCO$- (wherein k is an integer of 0 to 5) in addition to the fluoroalkyl group as described above.

(b) Cationic fluorosurfactants

(1)

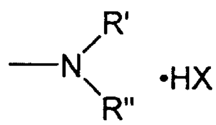

fluorosurfactant

(2)

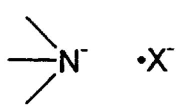

fluorosurfactants

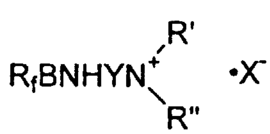

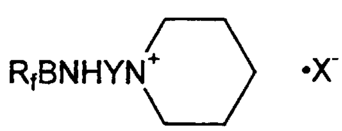

In the formulae, $R_f$, B and Y are as defined above, R' and R'' represent hydrogen atom or a lower alkyl group, HX represents an acid, and X represents a halogen or acid radical.

(c) Amphoteric fluorosurfactants

(1) $N^+(R')_2$-$COO^-$ fluorosurfactants

$R_fBNHYN^-(R')_2(CH_2)_mCOO^-$

In the formula, $R_f$, B, R'and Y are as defined above.

(d)nonionic fluorosurfactnts

(1) $^{-}$OH fluorosurfactnts
$R_fOH$
(2) -O- fluorosurfactant

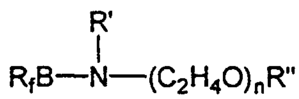

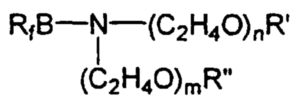

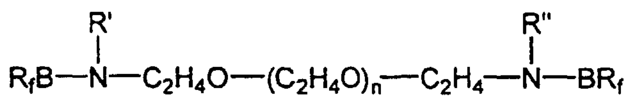

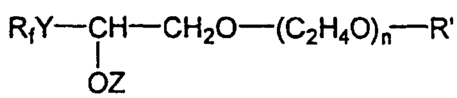

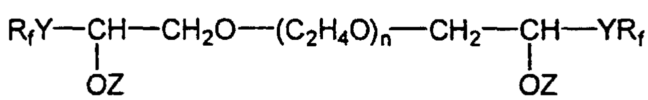

s

In the formula, $R_f$, B, R' and R" are as defined above, Y represents $-CH_2-$ or $-C_2H_4OCH_2-$, and Z represents hydrogen atom, -C(=O)R, or -C(=O)NHR wherein R represents hydrogen atom or a lower alkyl group (the same also applies to the following description).

Exemplary preferable fluorosurfactants of the above mentioned and other fluorosurfactants include the following surfactants.

(i) $C_nF_{2n+1}COOM$
In the formula, M is hydrogen atom, an alkaline metal, or $-NH_4$; n is 5 to 12, and preferably 6 to 10, and examples are:

$C_9F_{19}COONa$, and
$C_5F_{17}COOLi$.

(ii) $C_nF_{2n+1}CONH(C_2H_4O)_mH$
In the formula, n is 5 to 12, and preferably 6 to 10, and m is 1 to 30, and preferably 2 to 20, and an example is:
$C_9F_{19}CONH(C_2H_4O)_3H$.
(iii)

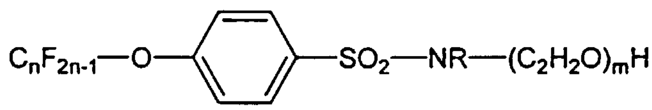

In the formula, R is hydrogen atom or a lower alkyl group, n is an integer of 6 to 12, and preferably 9; m is an integer of 2 to 30, and preferably 3 to 20.

Among such compounds, the preferred are the compounds represented by the following formula:.

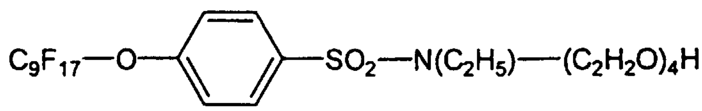

(iv) $C_nF_{2n+1}CONHC_3H_6N^+(CH_3)_2C_2H_4COO^-$

In the formula, n is an integer of 5 to 12, and preferably an integer of 6 to 10, and an exemplary such compound is:

$C_9F_{17}CONHC_3H_6N^+(CH_3)_2C_2H_4COO^-$

(v) $C_nF_{2n+1}CONHC_3H_6N^+(CH_3)_2 \cdot X^-$

In the formula, X is a halogenoacid radical, and n is an integer of 5 to 12, and preferably an integer of 6 to 10, and an exemplary such compound is:

$C_8F_{17}CONHC_3H_6N^+(CH_3)_2 \cdot I^-$

(vi) $C_nF_{2n+1}(CH_2)_mCOOM$

In the formula, M is hydrogen atom, an alkaline metal, or $-NH_4$; n is an integer of 3 to 12, and preferably an integer of 5 to 10; and m is an integer of 1 to 16, and preferably an integer of 2 to 10, and exemplary such compounds are:

$C_7F_{15}(CH_2)_5COONa$

$C_8F_{17}(CH_2)_4COOK$

(vii) $C_nF_{2n+1}SO_2N(C_2H_5)C_2H_4OPO(OH)_2$

In the formula, n is an integer of 5 to 12, and preferably an integer of 6 to 10, and an exemplary such compound is:

$C_8F_{17}SO_2N(C_2H_5)C_2H_4OPO(OH)_2$

(viii) $C_nF_{2n+1}SO_2N(C_2H_5)CH_2COOM$

In the formula, M is hydrogen atom, an alkaline metal, or $-NH_4$; and n is an integer of 5 to 12, and preferably an integer of 6 to 10; and an exemplary such compound is:

$C_8F_{17}SO_2N(C_2H_5)CH_2COOK$

(ix) $C_nF_{2n+1}SO_2N(C_2H_5)C_2H_4OSO_3H$

In the formula, n is an integer of 5 to 12, and preferably an integer of 6 to 10, and an exemplary such compound is:

$C_8F_{17}SO_2N(C_2H_5)C_2H_4OSO_3H$

(x) $C_nF_{2n+1}SO_2N(C_2H_5)(C_2H_4O)_mH$

In the formula, n is an integer of 5 to 12, and preferably an integer of 6 to 10; and m is an integer of 1 to 30, and preferably an integer of 2 to 20, and an exemplary such compound is:

$C_9F_{17}SO_2N(C_2H_5)(C_2H_4O)_{14}H$

(xi) $C_nF_{2n+1}CON(C_2H_5)(C_2H_4O)_mH$

In the formula, n is an integer of 5 to 12, and preferably an integer of 6 to 10; and m is an integer of 1 to 30, and preferably an integer of 2 to 20, and an exemplary such compound is:

$C_8F_{17}CON(C_2H_5)(C_2H_4O)_1$

(xii)

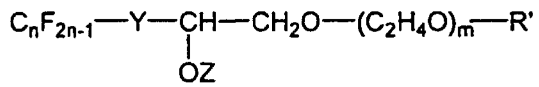

In the formula, n is an integer of 5 to 12, and preferably an integer of 6 to 10; m is an integer of 1 to 30, and preferably an integer of 2 to 20; Y represents - $CH_2$- or -$C_2H_4OCH_2$-; and Z represents hydrogen atom, -C(=O)R, or -C(=O)NHR, and exemplary such compounds include:

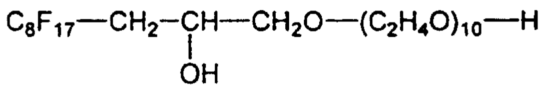

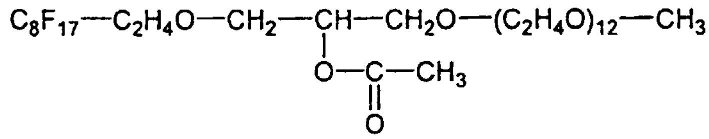

(xiii)

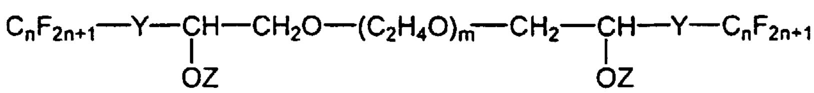

In the formula, n is an integer of 5 to 12, and preferably an integer of 6 to 10; m is an integer of 1 to 30, and preferably an integer of 2 to 20; and Y represents -$CH_2$- or -$C_2H_4OCH_2$-; and Z represents hydrogen atom, -C(=O)R, or -C(=O)NHR, and an exemplary such compound is:

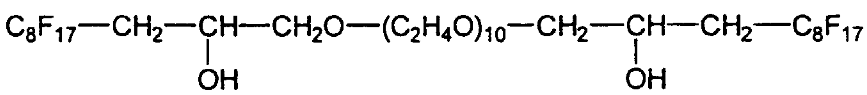

(xiv) $C_nF_{2n+1}SO_2N(C_2H_5)(C_2H_4O)_mC_2H_4N(C_2H_5)SO_2C_nF_{2n+1}$

In the formula, n is an integer of 5 to 12, and preferably an integer of 6 to 10; and m is an integer of 1 to 30, and preferably an integer of 2 to 20, and an exemplary such compound is:

$C_8F_{17}SO_2N(C_2H_5)(C_2H_4O)_{14}C_2H_4N(C_2H_5)SO_2C_8F_{17}$

(xv)

$$C_nF_{2n-1}-SO_2-\underset{\displaystyle (C_2H_4O)_lH}{\underset{|}{N}}-(C_2H_4O)_mH$$

In the formula, n is an integer of 5 to 12, and preferably an integer of 6 to 10; m is an integer of 1 to 30, and preferably an integer of 2 to 20; and l is an integer of 1 to 30, and preferably an integer of 2 to 20, and an exemplary such compound is:

$$C_8F_{17}-SO_2-\underset{\displaystyle (C_2H_4O)_{12}H}{\underset{|}{N}}-(C_2H_4O)_{12}H$$

The fluorine surfactant as described above may be used either alone or in combination of two or more such surfactants.

When a fluorine surfactant is blended in the thermoplastic resin composition of the present invention, amount of the fluorine surfactant added is not critical, and the fluorine surfactant may be added in a wide range of amount depending on the type of the fluorine surfactant and the type of the resin. The amount of the fluorine surfactant added is generally at least 0.01 part by weight per 100 parts by weight of the resin to which the fluorine surfactant is blended. Upper limit of the amount blended is not strictly limited. However, an excessively large amount of the fluorine surfactant may result in bleedout or turbidity, and the fluorine surfactant in an amount of 2.0 parts by weight is generally sufficient.

The thermoplastic resin composition of the present invention is used for a film, a sheet, and an injection molded product, wherein prolonged antifog properties and prolonged antistat properties are required, and for a masterbatch of the antifogging agent and a masterbatch of the antistatic agent.

Next, the present invention also provides an antifog extruded/molded article comprising a thermoplastic resin (F) and an antifogging agent (J) wherein ratio (O/C) of number of oxygen atoms to number of carbon atoms on the surface of the extruded/molded article is at least 10/100, characterized in that

said antifogging agent (J) is dispersed in the surface region of at least 5 μm thick in the conditions such that:
the average particle diameter is in the range of 0.05 to 0.5 μm;
ratio Lw/Lh of average particle diameter in the direction of major axis (Lw) to average particle diameter in the direction of minor axis (Lh) of the dispersed particles is up to 3.0; and
average distance between gravity center of the dispersed particles is up to 1.5 μm. (Such an antifog extruded/molded article is hereinafter referred to as "the antifog extruded/molded article of the present invention".)

The thermoplastic resin (F) which is the resin material constituting the antifog extruded/molded article of the present invention is not particularly limited, and the resins the same as those described in detail as the component constituting the thermoplastic resin composition of the present invention may be used.

Particularly preferable thermoplastic resins (F) which may be used for the resin material constituting the article in the antifog extruded/molded article of the present invention are polyolefins including olefin homopolymers such as polyethylene, polypropylene, poly-1-butene, polymethylpentene, and polymethylbutene and olefin copolymers such as ethylene-vinyl acetate copolymers, ethylene-α-olefin random copolymers and propylene-ethylene random copolymers. Among these, the preferred are polyethylene, polypropylene and ethylene-α-olefin random copolymers. It should be noted that, when the polyolefin is the one prepared from an olefin containing 3 or more carbon atoms, the polymer may be either an isotactic polymer or a syndiotactic polymer. Among these, the particularly preferred are ethylene homopolymers and ethylene-α-olefin random copolymers.

In the antifog extruded/molded article of the present invention, the ratio (O/C) of number of oxygen atoms to number of carbon atoms on the surface of the extruded/molded article is at least 10/100, and preferably at least 15/100. The extruded/molded article wherein the ratio (O/C) of number of oxygen atoms to number of carbon atoms on the surface is at least 10/100 exhibits excellent initial antifog properties as well as excellent prolonged antifog properties. In the present invention, the ratio of oxygen atom number to carbon atom number on the surface is the value measured by X-ray photoelectron spectroscopy (XPS), and more illustratively, the value measured by X-ray photoelectron spectroscopy instrument Model ESCA-750 (manufactured by Shimadzu Seisakusho K.K.) under the vacuum of less than $7 \times 10^{-8}$ Torr using K$\alpha$ ray (1486.6 eV) of Al for the X-ray source at the photoelectron emission angle of 90. Of the carbon number peaks, C1s peak (285 eV) was used to determine the atom number ratio. The photoionization cross section was 1.00 for C1s and 2.93 for O1s.

The antifog extruded/molded article of the present invention has an important characteristic that:

the antifogging agent (J) is dispersed in the surface region of at least 5 μm thick in the conditions satisfying the relations such that:
the average particle diameter is in the range of 0.05 to 0.5 μm, and preferably in the range of 0.05 to 0.3 μm;
the ratio Lw/Lh of average particle diameter in the direction of major axis (Lw) to average particle diameter in the direction of minor axis (Lh) of the dispersed particles is up to 3.0, and preferably up to 2.5; and
the average distance between gravity center of the dispersed particles is up to 1.5 μm, and preferably up to 1.0 μm.

In the present invention, the average particle diameter of the dispersed particles of the antifogging agent (J) in the surface region of at least 5 μm thick from the article surface; the ratio Lw/Lh of average particle diameter in the direction of major axis (Lw) to average particle diameter in the direction of minor axis (Lh) of the dispersed particles; and the average distance between gravity center of the dispersed particles are determined, for example, when the article is a film, by embedding the film in epoxy resin, preparing a ultra-thin section of about 100 nm thick in frozen state, staining the resulting section with $RuO_4$, taking a micrograph with transmission electron microscope (manufactured by Hitachi, Ltd.), and conducting the measurement by using image processor (IP-1000) manufacured by Asahi Chemical Industry Co., Ltd.

The antifogging agent (J) used in the antifog extruded/molded article of the present invention is not particularly limited, and any universal antifogging agent may be used as long as it satisfies the requirements for the ratio (O/C) of oxygen atom number to carbon atom number on the surface, the average particle diameter of the dispersed particles of the antifogging agent (J) in the surface region of at least 5 μm thick from the article surface; the ratio Lw/Lh of average particle diameter in the direction of major axis (Lw) to average particle diameter in the direction of minor axis (Lh) of the dispersed particles; and the average distance between gravity center of the dispersed particles as described above.

Among the antifogging agents which may be used in the antifog extruded/molded article of the present invention, the preferred are the compounds including within their molecule at least one functional group represented by the following (J-1) to (J-5):

$$-(R^6-O)_p-R^7, \qquad (J-1)$$

$$-OH, \qquad (J-2)$$

$$-SO_3X, \qquad (J-3)$$

$$-N^+(R)_3Q^-, \text{ and} \qquad (J-4)$$

$$-N^+(R)_2COO^-. \qquad (J-5)$$

In the formula (J-1), $R^6$ represents a straight-chain or branched alkylene group containing 1 to 4 carbon atoms; $R^7$ represents hydrogen atom or a straight-chain or branched alkyl group containing 1 to 22 carbon atoms; and p represents an integer of 1 to 30. Exemplary straight-chain or branched alkylene groups containing 1 to 4 carbon atoms include $-CH_2-$, $-CH_2CH_2-$, $-CH_2CH(CH_3)-$, and $-CH_2CH(CH_2CH_3)-$. Among these, preferred are $-CH_2CH_2-$ and $-CH_2CH(CH_3)-$.

In the formula (J-3), X represents hydrogen atom, or Na, K or Li.

In the formula (J-4), the three R, which may be the same or different, may represent hydrogen atom or an alkyl group containing 1 to 3 carbon atoms; and Q represents Cl, Br or I. Exemplary alkyl groups containing 1 to 3 carbon atoms include $-CH_3$, $-CH_2CH_3$, and $-CH_2CH_2CH_3$.

In the formula (J-5), the two R, which may be the same or different, may represent hydrogen atom or an alkyl group containing 1 to 3 carbon atoms. Exemplary alkyl groups containing 1 to 3 carbon atoms include $-CH_3$, $-CH_2CH_3$, and $-CH_2CH_2CH_3$.

Examples of the antifogging agents (J) include ionic surfactants and nonionic surfactants (J1), modified polyolefins (J2), and the triblock oligomers (A) as described above.

Examples are as described below.

The surfactants (J1) which may be used for the antifogging agents (J) in the present invention include ionic surfactants such as aliphatic sulfonates, higher alcohol sulfates, higher alcohol ethylene oxide adduct sulfates, higher alcohol phosphates, higher alcohol ethylene oxide adduct phosphates, quaternary ammonium salt cationic surfactants, and betain amphoteric surfactants; and nonionic surfactants such as glycerin mono-fatty acid esters, glycerin di-fatty acid esters, glycerin tri-fatty acid esters, diglycerin fatty acid esters, polyethylene glycol fatty acid esters, higher alcohol ethylene oxide adducts, polyhydric alcohol fatty acid esters, N,N-bis(2-hydroxyethyl)aliphatic amines, N,N-bis(2-hydroxyisopropyl)aliphatic amines, N,N-bis(2-hydroxyethyl)aliphatic amides, and N,N-bis(2-hydroxyisopropyl)aliphatic amides. Examples of the surfactant (J1) are the same as those described as the surfactants which may be blended in the thermoplastic resin composition of the present invention.

The modified polyolefin (J2) which may be used as the antifogging agent (J) in the antifog extruded/molded article of the present invention is a polyolefin which contains at least one olefin selected from α-olefins containing 2 to 8 carbon atoms as its main component, and includes a functional group represented by the formula (J-1), (J-2), (J-3), (J-4) or (J-5). Such modified polyolefin (J2) may be the one produced by a conventional known method, for example, by reacting a homopolymer of an α-olefin containing 2 to 8 carbon atoms or a copolymer of such an α-olefin with an unsaturated compound containing the functional group represented by the formula (J-1), (J-2), (J-3), (J-4) or (J-5) in the presence or in the absence of a radical initiator.

Exemplary unsaturated compounds containing the functional group represented by the formula (J-1), (J-2), (J-3), (J-4) or (J-5) include, for example, ester compounds of acrylic acid containing the group represented by the following formula:

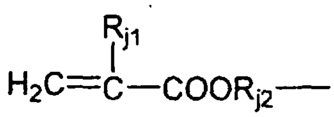

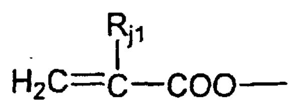

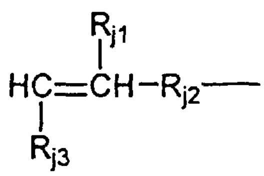

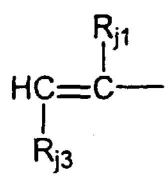

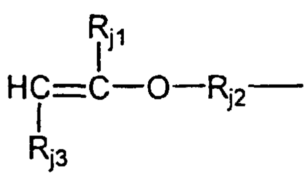

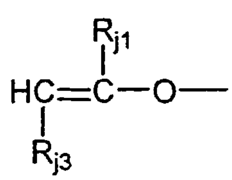

In the formulae, $R_{j1}$ and $R_{j3}$ are hydrogen atom or methyl group, and $R_{j2}$ is an alkylene group containing 1 to 10 carbon atoms.

The triblock oligomer (A) which may be used as the antifogging agent (J) in the antifog extruded/molded article of the present invention is the oligomer having the structure represented by the general formula (I) as described above.

Among the antifogging agent (J) which may be used in the antifog extruded/molded article of the present invention, the preferred are the reaction products of a higher fatty acid (B) or a polyolefin having a carboxylic acid group (C) with a polyoxyalkylene compound (D) represented by the formula (v) or a polyoxyalkylene compound (E) represented by the formula (vI). Examples of the higher fatty acid (B), the polyolefin having a carboxylic acid group (C), the polyoxyalkylene compound (D), and the polyoxyalkylene compound (E) are the compounds as described above.

Among the antifogging agent (J), use of the reaction products between a higher fatty acid (B) and a polyoxyalkylene compound (D) represented by the formula (v) or a polyoxyalkylene compound (E) is preferable in the present

invention since use of such antifogging agent enables production by normal extrusion/molding of an antifog extruded/molded article wherein the requirements as described above for the O/C ratio on the surface of the article and the dispersion of the antifogging agent (J) are satisfied. Among such compounds, the most preferred are the reaction products of at least one (B-1) selected from higher fatty acids containing at least 16 carbon atoms and derivatives thereof with the polyoxyalkylene compound (D) represented by the following formula (XVIII):

$$L\left(R^6-O\right)_p R^7 \qquad \text{(XVIII)}$$

In the formula (XVIII), L represents OH or $NH_2$, $R^6$ represents a straight-chain or branched alkylene group containing 1 to 4 carbon atoms, $R^7$ represents a straight-chain or branched alkylene group containing 1 to 22 carbon atoms, and p represents an integer of 1 to 30.

The preferable polyolefins having a carboxylic acid group (C) which may be used in such production are those prepared by conducting (1) graft polymerization of an unsaturated carboxylic acid to a homopolymer wax of an α-olefin containing 2 to 8 carbon atoms or a copolymer wax of two or more α-olefins, or (2) radical polymerization of an α-olefin containing 2 to 8 carbon atoms with an unsaturated carboxylic acid at a high pressure.

The antifogging agent (J) used in the antifog extruded/molded article of the present invention may generally have an average molecular weight measured by GPC of 100 to 8,000, preferably 100 to 5,000, and more preferably 200 to 4,000. Use of the antifogging agent having an average molecular weight of less than 1,000 is preferable for improving initial antifog properties.

The antifog extruded/molded article of the present invention may generally have an absolute value of the difference ($dX = |Xf - Xj|$) between solubility parameter value of the thermoplastic resin (F) (Xf) and solubility parameter value of the antifogging agent (B) (Xj) of 0 to 1 $(cal/ml)^{1/2}$, and preferably 0.2 to 0.6 $(cal/ml)^{1/2}$. When the thermoplastic resin (F) is a polyolefin, the antifogging agent (J) may preferably have a solubility parameter value of (Xj) of 7 to 9 $(cal/ml)^{1/2}$ in view of the good compatibility with the thermoplastic resin. In the present invention, the solubility parameter is calculated from molecular volume ($\Delta V_1$) and energy of vaporization ($\Delta e_1$) of each of the functional groups constituting the molecule by the equation: $Xj = (\Sigma\Delta e_i/\Sigma\Delta V_1)^{1/2}$. Details of this calculation is described in "Toso Gijutsu (Coating Technology)", June issue, 1990, page 161.

The antifog extruded/molded article of the present invention may be of any form as long as its surface satisfies the requirements as described above, and the article is typically a film, a sheet, a bottle, a panel, a board, or the like.

Furthermore, the antifog extruded/molded article of the present invention is not limited in terms of its production method, and may be produced by any of the various known methods such as injection molding, extrusion, blown film extrusion, and the like.

When the article is a film, the film may be produced by using a single screw extruder, a kneading extruder, a ram extruder, a gear extruder or the like and extruding the molten thermoplastic resin composition from T die under any of the conventional known extrusion conditions. The film may be optionally stretched, and the stretched film may be prepared by using the sheet or film comprising the thermoplastic resin composition as described above in a stretcher of conventional known type by tentering (lengthwise, and then in transverse direction, or (in transverse direction, and then lengthwise), simultaneous biaxial stretching, monoaxial stretching, or the like. The film may be also prepared by blown film extrusion.

Next, the antifog extruded/molded article of the present invention is described by referring to a film having antifog properties (hereinafter referred to as "the antifog film of the present invention") as a typical example of the antifog extruded/molded article of the present invention.

The antifog film of the present invention may be either a film comprising a single layer or a multi-layer film. In the case of the film comprising a single layer, either one surface or both surfaces of the film should satisfy the requirement of the O/C ratio, the average particle diameter of the dispersed particles of the antifogging agent (J) in the surface region of at least 5 μm thick from the article surface; the ratio Lw/Lh of average particle diameter in the direction of major axis (Lw) to average particle diameter in the direction of minor axis (Lh) of the dispersed particles; and the average distance between gravity center of the dispersed particles. In the case of the multi-layer film, either the interior surface, or both the interior surface and the exterior surface satisfy the requirements as described above. For example, in the case of a multi-layer film comprising three layers, namely, the outer layer, the intermediate layer, and the inner layer, the inner layer or both the interior and the outer layers may satisfy the requirements as described above.

A preferable embodiment of the three layer laminate film is described below as an example of the antifog film of the present invention. The three layer laminate film as described below comprises an outer layer of an ethylene-α-olefin copolymer (a), an intermediate layer of an ethylene-α-olefin copolymer (b), and an inner layer of the thermoplastic

resin composition as described above.

The ethylene-α-olefin copolymer (a) constituting the outer layer is a copolymer of ethylene and an α-olefin containing 4 to 12 carbon atoms, and exemplary such α-olefins containing 4 to 12 carbon atoms include 1-butene, 1-pentene, 1-hexene, 4-methyl-1-pentene, 1-octene, 1-decene, and 1-dodecene. Among these, an α-olefin containing 4 to 10 carbon atoms, and in particular, α-olefin containing 4 to 6 carbon atoms are preferable.

It is desirable that the ethylene-α-olefin copolymer (a) has a density in the range of 0.925 to 0.940 g/cm$^3$, and preferably 0.927 to 0.935 g/cm$^3$; a melt flow rate (MFR; ASTM D1238-65T, 190°C, load of 2.16 kg) in the range of 0.1 to 10 g/10 min, preferably 0.1 to 5 g/10 min, and more preferably 0.5 to 2 g/10 min; and a molecular weight distribution (Mw/Mn; Mw = weight average molecular weight, Mn = number average molecular weight) measured by GPC in the range of 1.5 to 3.5, and preferably 2.0 to 3.0

It should be noted that the density is measured by using the strand obtained in the measurement of the melt flow rate at 190°C under the load of 2.16 kg and heat treating the strand at 120°C for 1 hour, gradually cooling to room temperature in 1 hour, and measuring the density in a density gradient tube.

The weight average molecular weight and the molecular weight distribution (Mw/Mn) is measured as described below by GPC-150C manufactured by Millipore.

The separation column used is TSK GNH HT having a column size of 72 mm in diameter and 600 mm in length. The column temperature is 140°C, and o-dichlorobenzene (manufactured by Wako Pure Chemicals K.K.) and 0.025% by weight of BHT (manufactured by Takeda Chemical Industries, Ltd.) as the antioxidant are used for the mobile phase which is moved at 1.0 ml/min. The sample concentration is 0.1% by weight, and the amount of the sample injected is 500 microliters. A differential refractometer was used for the detector. The standard polystyrenes used were the one manufactured by TOSO K.K. for the molecular weight of $Mw \leqq 1000$ and $Mw \geqq 4 \times 10^6$, and the one manufactured by Pressure Chemical for the molecular weight of $1000 \langle Mw \langle 4 \times 10^6$.

It is also desirable that the ethylene-α-olefin copolymer (a) has a percentage of the n-decane soluble content (W, % by weight) of up to 1%, and preferably up to 0.5%.

It should be noted the percentage of the n-decane soluble content (note that the smaller n-decane soluble content indicates narrower compositional distribution) is measured by adding about 3 g of the ethylene-α-olefin copolymer in 450 ml of n-decane, dissolving the copolymer at 145°C and cooling the solution to 23°C, removing the n-decane insoluble content by filtration, collecting the n-decane soluble content from the filtrate, and measuring the n-decane soluble content.

The outer layer comprising such ethylene-α-olefin copolymer (a) is excellent in mechanical properties, and the thickness of the outer layer of the multi-layer film can be reduced, and as a consequence, the multi-layer film may have a reduced weight. Such outer layer also undergoes a very slightly decrease in the light transmission with lapse of time, and when the multi-layer film having such outer layer is used for agricultural purpose, the film can be used for a prolonged period.

Such ethylene-α-olefin copolymer (a) may be prepared by copolymerizing ethylene and an α-olefin containing 4 to 12 carbon atoms in the presence of a conventional known catalyst such as olefin polymerizing metallocene catalyst so that the resulting copolymer has a density of 0.925 to 0.940 g/cm$^3$.

The ethylene-α-olefin copolymer (a) as described above may also have blended therein a high-pressure method low density polyethylene (d).

The high-pressure method low density polyethylene (d) which may be blended in the ethylene-α-olefin copolymer (a) may preferably have a MFR (ASTM D1238, 190°C, load of 2.16 kg) in the range of 0.1 to 100 g/10 min, a density in the range of 0.915 to 0.935 g/cm$^3$, and a swell ratio of up to 60%.

It should be noted that the density of the high-pressure method low density polyethylene (d) may be determined by the same process as the density measurement of the ethylene-α-olefin copolymer (a) as described above.

The swell ratio is determined as described below.

Diameter of the strand at the position 5 mm from the tip of the strand is measured with a micrometer, and this diameter is designated as the sample diameter (mm), and swell ratio is calculated by the following equation:

$$\text{Swell ratio (\%)} = [(L_1/L_0) - 1] \times 100$$

$L_1$: sample diameter (mm)
$L_0$: orifice diameter (= 2.0955 mm)

The high-pressure method low density polyethylene (d) as described above may be prepared by the conventional known high-pressure method.

The high-pressure method low density polyethylene (d) may be used generally in an amount of 1 to 40% by weight, and preferably 1 to 20% by weight per 100% by weight of the total of the ethylene-α-olefin copolymer (a) and the high-pressure method low density polyethylene (d).

The ethylene-α-olefin copolymer (a) may also have blended therein conventional known additives such as a weathering agent, an antimist agent, an inorganic compound and a heat stabilizer in an amount which does not adversely affect the object of the present invention.

The weathering agent may be categorized into UV absorbing agents and light stabilizers. When the laminate film is used for an agricultural purpose, use of the light stabilizer is more effective and addition of such a light stabilizer is effective in improving the weatherability.

The light stabilizer used may by a conventional known light stabilizer, and among such stabilizers, use of a hindered amine light stabilizer (HALS) is preferable. Such light stabilizer may be used either alone or in combination or two or more. The light stabilizer is used in an amount of 0.005 to 5 parts by weight, preferably 0.005 to 2 parts by weight, and more preferably 0.01 to 1 part by weight per 100 parts by weight of the ethylene-α-olefin copolymer (a) (and per 100 parts by weight of the total of the (a) and the (d) when a high-pressure method low density polyethylene (d) is blended).

Exemplary UV absorbing agents include salicylic acid UV absorbing agents, benzophenone UV absorbing agents, benxotriaxole UV absorbing agents and cyanoacrylate UV absorbing agents. The UV absorbing agent may be used in an amount of 0.005 to 5 parts by weight, preferably 0.005 to 2 parts by weight, and more preferably 0.01 to 1 part by weight per 100 parts by weight of the ethylene-α-olefin copolymer (a) (and per 100 parts by weight of the total of the (a) and the (d) when a high-pressure method low density polyethylene (d) is blended).

Exemplary inorganic compounds include, inorganic compounds containing at least one atom selected from Mg, Ca, Al and Si, inorganic hydroxides, and hydrotalcites. Typical such compounds are $SiO_2$, $Al_2O_3$, MgO, CaO, $Al(OH)_3$, $Mg(OH)_2$, $Ca(OH)_3$, and hydrotalcite. The inorganic compound may have an average particle size of up to 10 μm, preferably up to 5 μm, and more preferably up to 3 μm. When the average particle size of the inorganic compound is within such range, the resulting multi-layer film will have sufficient transparency.

The inorganic compound as described above is effective as a heat retaining agent, and such inorganic compound may be used either alone or in combination of two or more. The inorganic compound may be used in an amount of 1 to 20 parts by weight, preferably 1 to 18 parts by weight, and more preferably 2 to 15 parts by weight per 100 parts by weight of the ethylene-α-olefin copolymer (a) (and per 100 parts by weight of the total of the (a) and the (d) when a high-pressure method low density polyethylene (d) is blended).

The ethylene-α-olefin copolymer (b) constituting the intermediate layer is a copolymer of ethylene and an α-olefin containing 4 to 12 carbon atoms which is the same as the ethylene-α-olefin copolymer (a) except that the density is in the range of 0.880 to 0.910 $g/cm^3$, and preferably 0.890 to 0.905 $g/cm^3$. When the ethylene-α-olefin copolymer (b) has a density in excess of 0.910 $g/cm^3$, the resulting film will be too rigid, and when such film is used for agricultural purpose, elongation will be insufficient and the film will suffer from such inconveniences as difficulty in spreading out and stretching of the film and insufficient wrinkle resistance of the thus stretched film.

The ethylene-α-olefin copolymer (b) as described above may be produced as in the case of producing the ethylene-α-olefin copolymer (a) by copolymerizing ethylene with an α-olefin containing 4 to 12 carbon atoms in the presence of an olefin polymerizing metallocene catalyst so that the resulting copolymer has a density of 0.880 to 0.910 $g/cm^3$.

The ethylene-α-olefin copolymer (b) as described above may have blended therein a high-pressure method low density polyethylene (d) as described above, and other conventional known additives such as a weathering agent, an antimist agent, an inorganic compound and a heat stabilizer may also be added in an amount which does not adversely affect the object of the present invention. The amount of the high-pressure method low density polyethylene (d) and the amount of the additives blended are as in the case of the ethylene-α-olefin copolymer (a).

The inner layer is formed from the thermoplastic resin composition as described above, and for example, from 100 parts by weight of an ethylene-α-olefin copolymer (c), and 0.1 to 20 parts by weight, preferably 0.5 to 15 parts by weight, and more preferably 1 to 10 parts by weight of a triblock oligomer (A).

In another embodiment, the inner layer may further comprise 0.01 to 30 parts by weight, preferably 0.05 to 10 parts by weight, and more preferably 0.05 to 10 parts by weight of a surfactant (G). In a further embodiment, 0.01 to 30 parts by weight, preferably 0.05 to 20 parts by weight, and more preferably 0.1 to 15 parts by weight of an agent for preventing the antifogging agent migration (H) may be used in combination with the triblock oligomer (A) and/or the surfactant. Such triblock oligomer, surfactant, and agent for preventing the antifogging agent migration may be used in the intermediate layer or the outer layer depending on the specification of the antifog film.

The ethylene-α-olefin copolymer (c) is a copolymer of ethylene and an α-olefin containing 4 to 12 carbon atoms which is the same as the ethylene-α-olefin copolymer (a) except that the density is in the range of 0.905 to 0.930 $g/cm^3$, and preferably 0.910 to 0.920 $g/cm^3$.

When the ethylene-α-olefin copolymer (c) has a density below 0.905 $g/cm^3$, the interior surface of the resulting film will be tacky, and when such film is used for agricultural pipe house, lubrication between the film and the pipe of the pipe house will be insufficient and it will be difficult to spread out and stretch the film.

The ethylene-α-olefin copolymer (c) as described above may be produced as in the case of producing the ethylene-α-olefin copolymer (c) by copolymerizing ethylene with an α-olefin containing 4 to 12 carbon atoms in the presence of an olefin polymerizing metallocene catalyst so that the resulting copolymer has a density of 0.905 to 0.930 g/$cm^3$.

The ethylene-α-olefin copolymer (c) as described above may also have blended therein a high-pressure method low density polyethylene (d) as described above, and other conventional known additives such as a weathering agent, an antimist agent, an inroganic compound and a heat stabilizer may also be added in an amount which does not adversely affect the object of the present invention. The amount of the high-pressure method low density polyethylene (d) and the amount of the additives blended are as in the case of the ethylene-α-olefin copolymer (a).

The multi-layer film as described above is useful as a film for agricultural purpose, and this film exhibits prolonged antifog properties as well as dust preventive properties and toughness superior than those of the conventional agricultural (multi-layer) films. This multi-layer film is also a lightweight film which exhibits reduced tackiness owing to the low content of the low molecular weight components in the polymer, and therefore, have the merits of improved efficiency in spreading out and stretching the film as well as reduced melt fusion between the films at elevated temperatures.

The multi-layer film which has the merits as described above may be utilized in growing various useful crops for a prolonged period of time by using the film in various agricultural and horticultural facilities such as a green house, tunnel, and the like.

The multi-layer film as described above which is an embodiment of the antifog film of the present invention may be prepared by mixing various components such as the polyethylene resin which is used in each layer of the multi-layer film and the additives as described above, kneading the components in molten state in a Bambury mixer, a roll mill, or an extruder, and laminating the outer layer, the intermediate layer, and the inner layer by coextrusion inflation process or coextrusion T-die process.

When the thermoplastic resin composition of the present invention is used for the masterbatch, the triblock oligomer (A) as described above may be blended in an amount of 2 to 30 parts by weight, and preferably 5 to 30 parts by weight per 100 parts by weight of the thermoplastic resin (F).

The masterbatch may be produced by any of the known processes such as melt kneading of the thermoplastic resin (F) and the triblock oligomer (A) in an extruder, kneader or the like.

In the production of the masterbatch, a compatibilizer such as a higher fatty acid metal salt, a polyolefin wax or a hydrogenated petroleum resin may be used as desired.

The masterbatch may contain various additives such as a cross-linking agent, a thermal stabilizer, a weathering agent, a lubricant, a mold release agent, an inorganic filler, a pigment-dispersing agent, a pigment, and a die in an amount which does not adversely affect the object of the present invention.

The masterbatch contains the triblock copolymer at a high concentration, and the masterbatch is used by blending it with a thermoplastic resin which contains no antistatic agent or no antifogging agent or with a thermoplastic resin which contains the antistatic agent or the antifogging agent at a low concentration.

In producing the thermoplastic resin composition by blending the masterbatch with the thermoplastic resin, the production may be conducted by any desired process including the process wherein the masterbatch and the thermoplastic resin are melt kneaded in an extruder, kneader or the like.

Use of such masterbatch facilitates easier kneading and improved dispersibility compared to the direct mixing of the thermoplastic resin (F) and the triblock oligomer (A).

## EXAMPLES

Next, the present invention is described in further detail by referring the Examples which by no means limit the scope of the present invention.

In the Examples and the Comparative Examples, evaluation of the extrudability in the production of the multi-layer films by blown film extrusion was conducted in accordance with the following criteria:

Criteria

○ : A stable bubble was formed and a good film with uniform thickness was produced.
Δ: a film could be formed, but the film formed was inconsistent in its thickness.
X: The bubble was unstable, and the film could not be produced.

The antifog properties of the multilayer film produced in the Examples and the Comparative Examples were evaluated as described below.

〈Initial antifog properties〉

A beaker of 100 cc was filled with 70 cc of water, and the beaker was covered with the sample film with the inner layer facing downward. The thus covered beaker was immersed in a water bath at a constant temperature of 50°C and allowed to stand in a room at a constant temperature of 20°C. The sample film was evaluated for the degree of fogging in its inner surface after 24 hours.

Criteria

○ : No water droplets were recognized because of the flowing of the droplets.
Δ: Water droplets of large size were found in some parts of the film surface.
X: Water droplets of small size were found on substantially all over the film surface.

〈Prolonged antifog properties〉

The sample film was immersed in warm water at 60°C, and the film was removed from the warm water after 40 days. After drying, the film was evaluated for the antifog properties after 24 hours by repeating the procedure as described above.

〈Evaluation of dispersion〉

The average particle size, the Lw/Lh, and the average distance between gravity center of the dispersed antifogging agent particles on the surface of the extruded/molded article in the Examples and Comparative Examples as described below were measured by taking a micrograph of the film section with a transmission electron microscope and conducting the analysis with an image processor (IP-1000) manufactured by Asahi Chemical Industry K.K.

The value of solubility parameter (Xj) of the antifogging agent in the Examples and Comparative Examples was calculated from molecular volume ($\Delta V_1$) and energy of vaporization ($\Delta e_1$) of each of the functional groups constituting the molecule by the following equation:

$$Xj = (\Sigma \Delta e_i / \Sigma \Delta V_1)^{1/2}$$

〈Production Example 1〉

Preparation of ethylene/1-hexene copolymer

[Preparation of catalyst for olefin-polymerization]

5.0 kg of silica dried at 250°C for 10 hours was suspended in 80 liters of toluene, and the suspension was cooled to 0°C. To this suspension was added dropwise 28.7 liters of toluene solution of methylaluminoxane (Al: 1.33 mole/liter), and the temperature of the reaction system was maintained at 0°C during the addition. The reaction was allowed to proceed at 0°C for 60 minutes, and the temperature was elevated to 95°C in 1.5 hours. The reaction was allowed to proceed at this temperature for 20 hours. The temperature was then reduced to 60°C, and the supernatant was removed by decantation.

The thus obtained solid content was washed twice with toluene, and suspended in 80 liters of toluene. To the reaction system were added dropwise 7.4 liters of toluene solution of bis (1,3-n-butylmethylcyclopentadienyl)zirconium dichloride (Zr: 34.0 mmole/liter) and 1.0 liter of toluene solution of bis(1,3-dimethylcyclopentadienyl)zirconium dichloride (Zr: 28.1 mmole/liter) at 80°C for 30 minutes, and the reaction was allowed to proceed at 80°C for 2 hours. The supernatant was removed, and the residue was washed twice with hexane to obtain the solid catalyst containing 3.6 mg of zirconium per 1 g.

[Preparation of preliminarily polymerized catalyst]

To 85 liter of hexane containing 1.7 mole of triisobutylaluminum were added 0.85 kg of the solid catalyst and 255 g of 1-hexene, and preliminarily polymerization of ethylene was conducted at 35°C for 12 hours to obtain the preliminarily polymerized catalyst wherein 10 g of polyethylene is preliminarily polymerized per 1 g of the solid catalyst. This ethylene polymer had a limiting viscosity [η] of 1.74 dl/g.

[Polymerization]

ethylene was copolymerized with 1-hexene in the presence of the above-described preliminarily polymerized catalyst by using two continuous fluidized bed gas phase polymerizers connected in tandem to obtain ethylene • 1-hexene copolymer (i).

The thus obtained ethylene • 1-hexene copolymer (i) had a 1-hexene content of 7.5% by weight, a density of 0.928 g/$cm^3$, a MFR (ASTM D1238-65T, 190°C under the load of 2.16 kg) of 1.63 g/10min. , and a molecular weight distribution (Mw/Mn) measured by GPC of 3.5.

The copolymer also had percentage of the n-decane soluble content [W] of 0.25% by weight, and solubility parameter (Xf) determined by calculation of the copolymer was 8.48.

⟨Production Example 2 ⟩

Ethylene/1-hexene copolymer (ii) as shown in Table 1 was prepared by the procedure similar to that of Production Example 1.

Table 1

| | Production Example 1 | Production Example 2 | Low density polyethylene produced by high-pressure method |
|---|---|---|---|
| Polymer | i | ii | iii |
| Density (g/$cm^2$) | 0.928 | 0.908 | 0.923 |
| MFR (g/10 min) | 1.63 | 1.95 | 0.51 |
| Mw/Mn | 3.5 | 3.0 | - |
| W (wt%) | 0.25 | 0.54 | - |
| Comonomer type | 1-hexene | 1-hexene | - |
| content (wt%) | 7.5 | 13.5 | - |
| Swell ratio | - | - | 40 |

⟨Production Example 3 ⟩

[Synthesis of polyolefin containing carboxylic acid group]

A glass separable flask (inner volume, 2 liters) was charged with 500 g of polyethylene wax (weight average molecular weight, 900; density, 0.950 g/$cm^3$) in nitrogen atmosphere, and the temperature was raised to 160°C to melt the wax. To the molten wax were added dropwise 26.3 g of maleic anhydride and 5.2 g of di-tert-butylperoxide separately from different conduits in 5 hours.

After completing the addition, the reaction was allowed to proceed for another 1 hour by maintaining the temperature at 160°C.

After the completion of the reaction, the system was evacuated to 5 mmHg, and the reaction residue was removed for 30 minutes.

The reaction product in molten state was collected, and allowed to cool to room temperature to obtain a polyolefin containing a carboxylic acid group (MPO-1).

The thus obtained MPO-1 had a maleic anhydride content of 5% by weight and a weight average molecular weight of 1500.

⟨Production Example 4 ⟩

The procedure of Production Example 3 was repeated except that the polyethylene used was the one having a weight average molecular weight of 2000 and a density of 0.970 g/$cm^3$ to obtain a polyolefin containing a carboxylic acid group (MPO-2).

The thus obtained MPO-2 had a maleic anhydride content of 5% by weight and a weight average molecular

weight of 4500.

(Production Example 5 )

The procedure of Production Example 3 was repeated except that the polyethylene used was the one having a weight average molecular weight of 5500 and a density of 0.970 g/cm$^3$ to obtain a polyolefin containing a carboxylic acid group (MPO-3).

The thus obtained MPO-3 had a maleic anhydride content of 5% by weight and a weight average molecular weight of 8500.

(Example 1)

A glass separable flask (inner volume, 2 liters) was charged with 578 g of montan acid wax (manufactured by Hoechst under the trade name of Hoechst Wax S), 422 g of polyoxyethylene lauryl ether (containing 5 moles of oxyethylene unit) and 2.5 g of methanesulfonic acid in nitrogen atmosphere, and the temperature was raised to 190°C with stirring to melt the reaction mixture.

The reaction system was then evacuated to 5 mmHg, and the reaction was allowed to proceed for 4 hours with stirring.

After the completion of the reaction, the reaction product in molten state was recovered, and allowed to cool to room temperature to obtain a triblock oligomer (hereinafter referred to as "TBO-1").

Infrared absorption spectrum of the thus obtained triblock oligomer TBO-1 was measured that adsorption band by C=O stretching vibration assigned to a carboxylic acid group was completely quenced and changed to adsorption band by C=O stretching vibration assigned to carboxylic acid ester, and was identificated have a structure represented by the formulae;$C_{32}H_{65}COO(C_2H_4)$-$C_{12}H_{25}$.

The thus obtained triblock oligomer TBO-1 had a weight average molecular weight measured by GPC of 670.

The results are shown in Table 2.

(Examples 2 to 17)

The procedure of Example 1 was repeated except that the higher fatty acid or the polyolefin containing carboxylic acid group and the polyoxyalkylene compound or the polyoxyalkylene shown in Table 2 were used to synthesize the triblock oligomers. The thus obtained triblock oligomers were confirmed for their triblock oligomer structure as in the case of Example 1.

The results are shown in Table 2.

(Comparative Examples 1 to 4)

The procedure of Example 1 was repeated except that the higher fatty acid or the poyolefin containing carboxylic acid group and the polyoxyalkylene compound or the polyoxyalkylene shown in Table 2 were used to synthesize the triblock oligomers.

The results are shown in Table 2.

Table 2-1

| | Higher fatty acid or polyolefin containing carboxylic acid group | | Polyoxyalkylene compound or polyoxyalkylene | | Methane-sulfonic acid | Physical properties of triblock oligomer | | |
|---|---|---|---|---|---|---|---|---|
| | Type | Amount Added (g) | Type | Amount Added (g) | Amount Added (g) | Mw | Melting point (°C) | Abbre-viation |
| Example 1 | Montan acid wax | 578 | $HO-(C_2H_4O)_5-C_{12}H_{25}$ | 422 | 2.5 | 670 | 48.0 | TBO-1 |
| Example 2 | Montan acid wax | 578 | $HO-(C_2H_4O)_5-CH_3$ | 262 | 2.5 | 660 | 60.0 | TBO-2 |
| Example 3 | Montan acid wax | 578 | $HO-(C_2H_4O)_5-C_6H_5$ | 326 | 2.5 | 670 | 59.2 | TBO-3 |
| Example 4 | Montan acid wax | 578 | $HO-(C_2H_4O)_5-C_6H_4-C_4H_9$ | 384 | 2.5 | 680 | 52.5 | TBO-4 |
| Example 5 | Montan acid wax | 578 | $HO-(C_2H_4O)_5-C_4H_9$ | 305 | 2.5 | 670 | 52.5 | TBO-5 |
| Example 6 | Montan acid wax | 578 | $HO-(C_2H_4O)_3-CH_3$ | 170 | 2.5 | 650 | 60.1 | TBO-6 |
| Example 7 | Montan acid wax | 578 | $HO-(C_2H_4O)_9-CH_3$ | 444 | 2.5 | 680 | 59.7 | TBO-7 |
| Example 8 | Montan acid wax | 578 | $HO-(C_2H_4O)_{14}-CH_3$ | 673 | 2.5 | 690 | 59.4 | TBO-8 |
| Example 9 | Montan acid wax | 578 | $HO-(C_2H_4O)_9-C_{12}H_{25}$ | 604 | 2.5 | 690 | 47.1 | TBO-9 |
| Example 10 | Montan acid wax | 200 | $HO-(C_2H_4O)_{30}-C_{12}H_{25}$ | 534 | 0.85 | 740 | 45.7 | TBO-10 |

Table 2-2

| | Higher fatty acid or polyolefin containing carboxylic acid group | | Polyoxyalkylene compound or polyoxyalkylene | | Methane-sulfonic acid | Physical properties of triblock oligomer | | |
|---|---|---|---|---|---|---|---|---|
| | Type | Amount Added (g) | Type | Amount Added (g) | Amount Added (g) | Mw | Melting point (°C) | Abbre-viation |
| Example 11 | MPO-1 | 600 | $HO-(C_2H_4O)_5-C_{12}H_{25}$ | 100 | 0.59 | 2100 | 105.3 | TBO-11 |
| Example 12 | MPO-2 | 600 | $HO-(C_2H_4O)_5-C_{12}H_{25}$ | 100 | 0.59 | 5000 | 103.9 | TBO-12 |
| Example 13 | Montan acid wax | 578 | Polyethylene glycol (Mw 300) | 311 | 2.5 | 670 | 65.0 | TBO-13 |
| Example 14 | Montan acid wax | 578 | Polyethylene glycol (Mw 600) | 623 | 2.5 | 690 | 64.3 | TBO-14 |
| Example 15 | Montan acid wax | 200 | $H_2N-(C_2H_4O)_{29}-CH_2-NH_2$ | 468 | 0.85 | 660 | 62.3 | TBO-15 |
| Example 16 | Montan acid wax | 578 | $HO-(C_3H_6O)_4-C_6H_4-C_4H_9$ | 396 | 2.5 | 680 | 74.4 | TBO-16 |
| Example 17 | Montan acid wax | 578 | $HO-(C_3H_6O)_5-C_6H_5$ | 459 | 2.5 | 690 | 76.1 | TBO-17 |
| Comparative Example 1 | Montan acid wax | 200 | $HO-(C_2H_4O)_{40}-C_{12}H_{25}$ | 690 | 0.85 | 890 | 44.0 | TBO-18 |
| Comparative Example 2 | MPO-1 | 600 | $HO-(C_2H_4O)_{40}-C_{12}H_{25}$ | 477 | 0.59 | 3400 | 102.8 | TBO-19 |
| Comparative Example 3 | MPO-3 | 600 | $HO-(C_2H_4O)_5-C_{12}H_{25}$ | 477 | 0.59 | 8900 | 103.0 | TBO-20 |
| Comparative Example 4 | Caprylic acid | 400 | $HO-(C_2H_4O)_5-C_{12}H_{25}$ | 904 | 5.3 | 400 | 38.5 | TBO-21 |

(Examples 18 to 35)

The compositions having the constitution as shown in Table 3 were prepared by blending the resins as shown in Table 1 under the conditions as shown below, and the compositions were blown extruded under the conditions as shown below to produce trilayer films of 100 μm thick (outer layer/intermediate layer/inner layer = 20 μm/60 m/20 μm). The resulting films were evaluated, and the results are shown in Table 4.

[Conditions of Mixing]

Extruder: twin screw extruder of 30 mm diameter manufactured by Plako K.K.; Mixing temperature: 190°C. [Conditions of blown extrusion]
Extruder: 3 layer extruder manufactured by Alpine; die diameter: 400 mm; extrusion temperature: 200°C.; foled width: 1500 mm.

[Additives]

Weathering agent: Cimasorb 944TM (manufactured by Ciba-Geigy, Hals stabilizer)
Hydrotalcite: DHT-4A (manufactured by Kyowa Chemical K.K.)
Surfactant (a) (SF-1): a mixture of 20% of glycerin monostearate, 60% of diglycerin mono- and distearates, and 20% of polyoxyethylene sorbitan mono- and distearates.
Surfactant (b): a mixture of 25% of glycerin monostearate, 70% of diglycerin stearate, and 5% of diethanol stearylamine.
Antimist agent: fluorine-containing surfactant (manufactured by Asahi Glass K.K., KC-14)
UV absorbent: benzotriazole absorbent (or benzophenol absorbent) (manufactured by Ciba-Geigy)

Table 3-1

| | | Ex. 18 | Ex. 19 | Ex. | 20 Ex. | 21 Ex. 22 |
|---|---|---|---|---|---|---|
| Outer layer | Resin blend ratio | i/iii | ← | ← | ← | ← |
| | (wt/wt) | =85/15 | | | | |
| | Weathering agent (wt%) | 0.2 | ← | ← | ← | ← |
| | Hydrotalcite (wt%) | 3.0 | ← | ← | ← | ← |
| | Layer thickness (μm) | 20 | ← | ← | ← | ← |
| Intermediate layer | Resin blend ratio | ii/iii | ← | ← | ← | ← |
| | (wt/wt) | =85/15 | | | | |
| | Weathering agent (wt%) | 0.2 | ← | ← | ← | ← |
| | Hydrotalcite (wt%) | 7.0 | ← | ← | ← | ← |
| | Layer thickness (μm) | 60 | ← | ← | ← | ← |
| Inner layer | Resin blend ratio | ii/iii | ← | ← | ← | ← |
| | (wt/wt) | =85/15 | | | | |
| | Antifogging agent (wt%) | TBO-1 | TBO-2 | TBO-3 | TBO-4 | TBO-5 |
| | | 5.0 | 5.0 | 5.0 | 5.0 | 5.0 |
| | Weathering agent (wt%) | 0.1 | ← | ← | ← | ← |
| | Hydrotalcite (wt%) | 0 | ← | ← | ← | ← |
| | Layer thickness (μm) | 20 | ← | ← | ← | ← |

Table 3-2

| | | Ex. 23 | Ex. 24 | Ex. 25 | Ex. 26 | Ex. 27 |
|---|---|---|---|---|---|---|
| Outer layer | Resin blend ratio (wt/wt) | i/iii =85/15 | ← | ← | ← | ← |
| | Weathering agent (wt%) | 0.2 | ← | ← | ← | ← |
| | Hydrotalcite (wt%) | 3.0 | ← | ← | ← | ← |
| | Layer thickness (μm) | 20 | ← | ← | ← | ← |
| Intermediate layer | Resin blend ratio (wt/wt) | ii/iii =85/15 | ← | ← | ← | ← |
| | Weathering agent (wt%) | 0.2 | ← | ← | ← | ← |
| | Hydrotalcite (wt%) | 7.0 | ← | ← | ← | ← |
| | Layer thickness (μm) | 60 | ← | ← | ← | ← |
| Inner layer | Resin blend ratio (wt/wt) | ii/iii =85/15 | ← | ← | ← | ← |
| | Antifogging agent (wt%) | TBO-6 5.0 | TBO-7 5.0 | TBO-8 5.0 | TBO-9 5.0 | TBO-10 5.0 |
| | Weathering agent (wt%) | 0.1 | ← | ← | ← | ← |
| | Hydrotalcite (wt%) | 0 | ← | ← | ← | ← |
| | Layer thickness (μm) | 20 | ← | ← | ← | ← |

Table 3-3

| | | Ex. 28 | Ex. 29 | Ex. 30 | Ex. 31 | Ex. 32 |
|---|---|---|---|---|---|---|
| Outer layer | Resin blend ratio (wt/wt) | i/iii =85/15 | ← | ← | ← | ← |
| | Weathering agent (wt%) | 0.2 | ← | ← | ← | ← |
| | Hydrotalcite (wt%) | 3.0 | ← | ← | ← | ← |
| | Layer thickness (μm) | 20 | ← | ← | ← | ← |
| Intermediate layer | Resin blend ratio (wt/wt) | ii/iii =85/15 | ← | ← | ← | ← |
| | Weathering agent (wt%) | 0.2 | ← | ← | ← | ← |
| | Hydrotalcite (wt%) | 7.0 | ← | ← | ← | ← |
| | Layer thickness (μm) | 60 | ← | ← | ← | ← |

Table 3-3 (continued)

| | | Ex. 28 | Ex. 29 | Ex. 30 | Ex. 31 | Ex. 32 |
|---|---|---|---|---|---|---|
| Inner layer | Resin blend ratio (wt/wt) | ii/iii =85/15 | ← | ← | ← | ← |
| | Antifogging agent (wt%) | TBO-11 5.0 | TBO-12 5.0 | TBO-13 5.0 | TBO-14 5.0 | TBO-15 5.0 |
| | Weathering agent (wt%) | 0.1 | ← | ← | ← | ← |
| | Hydrotalcite (wt%) | 0 | ← | ← | ← | ← |
| | Layer thickness (μm) | 20 | ← | ← | ← | ← |

Table 3-4

| | | Ex. 33 | Ex. 34 | Ex. 35 | Ex. 36 |
|---|---|---|---|---|---|
| Outer layer | Resin blend ratio (wt/wt) | I/iii =85/15 | ← | ← | ← |
| | Antifogging agent (wt%) | 0 | 0 | TBO-1 5.0 | |
| | Weathering agent (wt%) | 0.2 | ← | ← | ← |
| | Hydrotalcite (wt%) | 3.0 | ← | ← | ← |
| | Layer thickness (μm) | 20 | ← | ← | ← |
| Intermediate layer | Resin blend ratio (wt/wt) | ii/iii =85/15 | ← | ← | ← |
| | Antifogging agent (wt%) | 0 | 0 | TBO-1 5.0 | |
| | Weathering agent (wt%) | 0.2 | ← | ← | ← |
| | Hydrotalcite (wt%) | 7.0 | ← | ← | ← |
| | Layer thickness (μm) | 60 | ← | ← | ← |
| Inner layer | Resin blend ratio (wt/wt) | ii/iii =85/15 | ← | ← | ← |
| | Antifogging agent (wt%) | TBO-16 5.0 | TBO-17 5.0 | TBO-1 5.0 | TBO-1 5.0 |
| | Weathering agent (wt%) | 0.1 | ← | ← | ← |
| | Hydrotalcite (wt%) | 0 | ← | ← | ← |
| | Layer thickness (μm) | 20 | ← | ← | ← |

Table 3-5

| | | C.E.5 | C.E.6 | C.E.7 | C.E.8 | C.E.9 |
|---|---|---|---|---|---|---|
| Outer layer | Resin blend ratio | i/iii | ← | ← | ← | ← |
| | (wt/wt) | =85/15 | | | | |
| | Weathering agent (wt%) | 0.2 | ← | ← | ← | ← |
| | Hydrotalcite (wt%) | 3.0 | ← | ← | ← | ← |
| | Layer thickness (μm) | 20 | ← | ← | ← | ← |
| Intermediate layer | Resin blend ratio | ii/iii | ← | ← | ← | ← |
| | (wt/wt) | =85/15 | | | | |
| | Weathering agent (wt%) | 0.2 | ← | ← | ← | ← |
| | Hydrotalcite (wt%) | 7.0 | ← | ← | ← | ← |
| | Layer thickness (μm) | 60 | ← | ← | ← | ← |
| Inner layer | Resin blend ratio | ii/iii | ← | ← | ← | ← |
| | (wt/wt) | =85/15 | | | | |
| | Antifogging agent (wt%) | TBO-18 | TBO-19 | TBO-20 | TBO-21 | SF-1 |
| | | 5.0 | 5.0 | 5.0 | 5.0 | 3.0 |
| | Weathering agent (wt%) | 0.1 | ← | ← | ← | ← |
| | Hydrotalcite (wt%) | 0 | ← | ← | ← | ← |
| | Layer thickness (μm) | 20 | ← | ← | ← | ← |

(Example 36)

The composition shown for the inner layer in Table 3 was mixed under the conditions as described above, and a monolayer film of 100 μm thick was formed by blown extrusion by repeating the procedure of Example 18.
The resulting films were evaluated, and the results are shown in Table 4.

(Comparative Examples 5 to 9)

The procedure of Example 18 was repeated except that the constitution was as shown in Table 3 to produce trilayer films.
The resulting trilayer films were evaluated, and the results are shown in Table 4.

Table 4-1

| | Ex. 18 | Ex. 19 | Ex. 20 | Ex. 21 | Ex. 22 | Ex. 23 |
|---|---|---|---|---|---|---|
| Extrudability | ○ | ○ | ○ | ○ | ○ | ○ |
| Initial antifog properties | ○ | ○ | △ | △ | ○ | ○ |
| Prolonged antifog properties | △~○ | ○ | △ | △ | ○ | ○ |
| | Ex. 24 | Ex. 25 | Ex. 26 | Ex. 27 | Ex. 28 | Ex. 29 |
| Extrudability | ○ | △~○ | ○ | △ | ○ | ○ |
| Initial antifog properties | ○ | ○ | ○ | ○ | △~○ | △~○ |
| Prolonged antifog properties | ○ | ○ | △~○ | △~○ | △~○ | △~○ |

Table 4-2

| | Ex. 30 | Ex. 31 | Ex. 32 | Ex. 33 | Ex. 34 | Ex. 35 |
|---|---|---|---|---|---|---|
| Extrudability | ○ | △~○ | △ | ○ | ○ | ○ |
| Initial antifog properties | ○ | ○ | ○ | △ | △ | ○ |
| Prolonged antifog properties | ○ | ○ | ○ | △ | △ | ○ |
| | Ex. 36 | C.E.5 | C.E.6 | C.E.7 | C.E.8 | C.E.9 |
| Extrudability | ○ | X | X | ○ | ○ | ○ |
| Initial antifog properties | ○ | - | - | X | ○ | ○ |
| Prolonged antifog properties | ○ | - | - | X | X | X |

(Examples 37 to 42)

The procedure of Examples 18 to 35 was repeated except that the modified polyolefin synthesized as described below was used as the agent for preventing migration of the antifogging agent. The film prepared was evaluated for extrudability, initial antifog properties and prolonged antifog properties. The results are shown in Tables 5 and 6.

A 1.5 liter glass reaction vessel was charged with 600 g of high density polyethylene wax having a limiting viscosity [η] of 0.13 dl/g and a density of 0.920 g/cm$^3$, and the wax was melted by heating to 160°C. The temperature was maintained, and 19 g of maleic anhydride and 4 g of di-tert-butylperoxide were added dropwise for 3 hours. After completing the addition, the reaction was allowed to proceed for another 1 hour, and the reaction mixture in the molten state was degassed to remove the volatile content under vacuum of 10 mmHg for 1 hour. The degassed reaction mixture was cooled to room temperature to obtain modified polyolefin (herein after abbreviated as "W-3"). The resulting modified polyolefin had a limiting viscosity [η] of 0.16 dl/g and a grafted maleic anhydride content of 2.9% by weight.

Table 5

| | | Ex. 37 | Ex. 38 | Ex. 39 | Ex. 40 | Ex. 41 | Ex. 42 |
|---|---|---|---|---|---|---|---|
| Outer layer | Resin blend ratio | i/iii | ← | ← | ← | ← | ← |
| | (wt/wt) | =85/15 | | | | | |
| | Surfactant (wt%) | 3.0 | 3.0 | 3.0 | 3.0 | 3.0 | 3.0 |
| | Antifogging agent- | W-3 | W-3 | - | - | W-3 | - |
| | migration-preventing agent (wt%) | 2.0 | 2.0 | - | - | 2.0 | - |
| | Antifogging agent | TBO-1 | TBO-1 | TBO-1 | TBO-1 | - | - |
| | (wt%) | 3.0 | 5.0 | 3.0 | 3.0 | - | - |
| | Weathering agent (wt%) | 0.2 | ← | ← | ← | ← | ← |
| | Hydrotalcite (wt%) | 3.0 | ← | ← | ← | ← | ← |
| | Layer thickness (μm) | 20 | ← | ← | ← | ← | ← |

Table 5 (continued)

| | | Ex. 37 | Ex. 38 | Ex. 39 | Ex. 40 | Ex. 41 | Ex. 42 |
|---|---|---|---|---|---|---|---|
| Intermediate layer | Resin blend ratio (wt/wt) | ii/iii =85/15 | ← | ← | ← | ← | ← |
| | Surfactant (wt%) | 3.0 | 3.0 | 3.0 | 3.0 | 3.0 | 3.0 |
| | Antifogging agent-migration-preventing agent (wt%) | W-3 2.0 | W-3 2.0 | - - | - - | W-3 2.0 | - - |
| | Antifogging agent (wt%) | TBO-1 3.0 | TBO-1 5.0 | TBO-1 3.0 | TBO-1 5.0 | - - | - - |
| | Weathering agent (wt%) | 0.2 | ← | ← | ← | ← | ← |
| | Hydrotalcite (wt%) | 7.0 | ← | ← | ← | ← | ← |
| | Layer thickness (μm) | 60 | ← | ← | ← | ← | ← |
| Inner layer | Resin blend ratio (wt/wt) | ii/iii =85/15 | ← | ← | ← | ← | ← |
| | Surfactant (wt%) | 3.0 | 3.0 | 3.0 | 3.0 | 3.0 | 3.0 |
| | Antifogging agent-migration-preventing agent (wt%) | W-3 2.0 | W-3 2.0 | - - | - - | W-3 2.0 | - - |
| | Antifogging agent (wt%) | TBO-1 3.0 | TBO-1 5.0 | TBO-1 3.0 | TBO-1 5.0 | TBO-1 3.0 | TBO-1 3.0 |
| | Weathering agent (wt%) | 0.1 | ← | ← | ← | ← | ← |
| | Hydrotalcite (wt%) | 0 | ← | ← | ← | ← | ← |
| | Layer thickness (μm) | 20 | ← | ← | ← | ← | ← |

Table 6

| | Ex. 37 | Ex. 38 | Ex. 39 | Ex. 40 | Ex. 41 | Ex. 42 |
|---|---|---|---|---|---|---|
| Extrudability | ○ | ○ | ○ | ○ | ○ | ○ |
| Initial antifog properties | ○ | ○ | ○ | ○ | ○ | ○ |
| Prolonged antifog properties | ○ | ○ | ○ | △ | △ | △ |

(Examples 43 to 46)

The procedure of Example 1 was repeated except that the higher fatty acid or the poyolefin containing carboxylic acid group and the polyoxyalkylene compound shown in Table 7 were used to synthesize the triblock oligomers.

The results are shown in Table 8.

Table 7

| | Ex. 43 | Ex. 44 | Ex. 45 | Ex. 46 |
|---|---|---|---|---|
| Higher fatty acid or polyolefin containing carboxylic acid (g) | montan acid wax 775 | montan acid wax 276 | montan acid wax 169 | ethylene-methacrylic acid copolymer wax (AC5120 manufactured by Allied) 360 |
| Polyoxyalkylene compound (g) | POA-2 225 | POA-3 724 | POA-4 831 | POA-3 240 |
| Methanesulfonic acid (g) | 3.3 | 1.2 | 0.7 | 1.5 |
| Mw | 430 | 740 | 1400 | 2500 |
| Solubility parameter (Xj) | 8.62 | 9.11 | 9.32 | 8.74 |
| Abbreviation | TBO-22 | TBO-23 | TBO-24 | TBO-25 |

*

| Abbreviation | Polyoxyalkylene compound |
|---|---|
| POA-2 | $HO-(C_2H_4O)_3-CH_3$ |
| POA-3 | $HO-(C_2H_4O)_{30}-C_{12}H_{25}$ |
| POA-4 | $HO-(C_2H_4O)_{70}-C_6H_4-C_4H_9$ |

(Examples 47 and 48)

The procedure of Example 1 was repeated by using the composition of the constitution as shown in Table 8 to produce trilayer films (outer layer/intermediate layer/inner layer = 20 μm/60 μm/20 μm) by blown extrusion. The films prepared were evaluated, and the results are shown in Table 8.

(Comparative Examples 10 to 12)

The procedure of Example 1 was repeated except that the composition of the constitution as shown in Table 8 was used to produce the films. The films prepared were evaluated, and the results are shown in Table 8.

Table 8

| | Ex.47 | Ex.48 | C.E. 10 | C.E. 11 | C.E. 12 |
|---|---|---|---|---|---|
| Thermoplastic resin (F) | Polymer ii | Polymer ii | Polymer ii | Polymer ii | Polymer ii |

Table 8 (continued)

| | Ex.47 | Ex.48 | C.E. 10 | C.E. 11 | C.E. 12 |
|---|---|---|---|---|---|
| (parts by weight) | 100 | 100 | 100 | 100 | 100 |
| Antifogging agent (J) | TBO-1 | TBO-22 | TBO-23 | TBO-24 | TBO-25 |
| (parts by weight) | 5.3 | 5.3 | 5.3 | 5.3 | 5.3 |
| Average particle diameter (m) | 0.23 | 0.21 | 0.50 | 0.48 | 0.28 |
| Lw/Lh | 1.33 | 1.29 | 3.17 | 2.00 | 3.20 |
| Average distance between gravity center (m) | 0.83 | 0.80 | 1.96 | 2.66 | 0.89 |
| Oxygen atom number/carbon atom number ratio | 20 | 22 | 8 | 6 | 12 |
| Initial antifog properties | ○ | ○ | X | X | ○ |
| Prolonged antifog properties | ○ | ○ | X | X | X |

(Examples 49 to 62)

The procedure of Examples 37 to 42 was repeated except that each layer were of the constitution as shown in Table 9 to produce trilayer films by blown extrusion. The films prepared were evaluated, and the results are shown in Table 10.

Table 9-1

| | | Ex.49 | Ex.50 | Ex.51 | Ex.52 | Ex.53 |
|---|---|---|---|---|---|---|
| Outer layer | Resin blend ratio | i/iii | i/iii | i/iii | i/iii | i/iii |
| | (wt/wt) | =85/15 | =85/15 | =85/15 | =85/15 | =85/15 |
| | Surfactant (a) (wt%) | - | - | - | - | - |
| | Surfactant (b) (wt%) | 3.0 | 3.0 | 3.0 | 3.0 | 3.0 |
| | Antifogging agent-migration-preventing agent (wt%) | W-3 | W-3 | - | - | W-3 |
| | | 2.0 | 2.0 | - | - | 2.0 |
| | Antifogging agent (wt%) | TBO-1 | TBO-1 | TBO-1 | TBO-1 | - |
| | | 3.0 | 5.0 | 3.0 | 5.0 | - |
| | Weathering agent (wt%) | 0.2 | 0.2 | 0.2 | 0.2 | 0.2 |
| | Hydrotalcite (wt%) | 3.0 | 3.0 | 3.0 | 3.0 | 3.0 |
| | Antimist agent (wt%) | - | - | - | - | - |
| | UV absorbent (wt%) | - | - | - | - | - |
| | Layer thickness (µm) | 20 | 20 | 20 | 20 | 20 |

Table 9-1 (continued)

| | | Ex.49 | Ex.50 | Ex.51 | Ex.52 | Ex.53 |
|---|---|---|---|---|---|---|
| Intermediate layer | Resin blend ratio | ii/iii | ← | ← | ←- | ← |
| | (wt/wt) | =85/15 | | | | |
| | Surfactant (a) (wt%) | - | - | - | - | - |
| | Surfactant (b) (wt%) | 3.0 | 3.0 | 3.0 | 3.0 | 3.0 |
| | Antifogging agent-migration-preventing agent (wt%) | W-3 | W-3 | - | - | W-3 |
| | | 2.0 | 2.0 | - | - | 2.0 |
| | Antifogging agent (wt%) | TBO-1 | TBO-1 | TBO-1 | TBO-1 | - |
| | | 3.0 | 5.0 | 3.0 | 5.0 | - |
| | Weathering agent (wt%) | 0.2 | 0.2 | 0.2 | 0.2 | 0.2 |
| | Hydrotalcite (wt%) | 7.0 | 7.0 | 7.0 | 7.0 | 7.0 |
| | Antimist agent (wt%) | - | - | - | - | - |
| | UV absorbent (wt%) | - | - | - | - | - |
| | Layer thickness (μm) | 60 | 60 | 60 | 60 | 60 |
| Inner layer | Resin blend ratio | ii/iii | ← | ← | ← | ← |
| | (wt/wt) | =85/15 | | | | |
| | Surfactant (a) (wt%) | - | - | - | - | - |
| | Surfactant (b) (wt%) | 3.0 | 3.0 | 3.0 | 3.0 | 3.0 |
| | Antifogging agent-migration-preventing agent (wt%) | W-3 | W-3 | - | - | W-3 |
| | | 2.0 | 2.0 | - | - | 2.0 |
| | Antifogging agent (wt%) | TBO-1 | TBO-1 | TBO-1 | TBO-1 | TBO-1 |
| | | 3.0 | 5.0 | 3.0 | 5.0 | 3.0 |
| | Weathering agent (wt%) | 0.1 | 0.1 | 0.1 | 0.1 | 0.1 |
| | Hydrotalcite (wt%) | - | - | - | - | - |
| | Antimist agent (wt%) | - | - | - | - | - |
| | UV absorbent (wt%) | - | - | - | - | - |
| | Layer thickness (μm) | 20 | 20 | 20 | 20 | 20 |

Table 9-2

| | | Ex. 54 | Ex. 55 | Ex. 56 | Ex. 57 | Ex. 58 |
|---|---|---|---|---|---|---|
| Outer layer | Resin blend ratio | i/iii | i/iii | i/iii | i/iii | i/iii |
| | (wt/wt) | =85/15 | =85/15 | =85/15 | =85/15 | =85/15 |
| | Surfactant (a) (wt%) | - | - | - | - | - |
| | Surfactant (b) (wt%) | 3.0 | 3.0 | 3.0 | 3.0 | 3.0 |
| | Antifogging agent-migration-preventing agent (wt%) | - | W-3 | - | W-3 | - |
| | | - | 2.0 | - | 2.0 | - |
| | Antifogging agent (wt%) | - | - | - | - | - |
| | Weathering agent (wt%) | 0.2 | 0.2 | 0.2 | 0.2 | 0.2 |
| | Hydrotalcite (wt%) | 3.0 | 3.0 | 3.0 | 3.0 | 3.0 |
| | Antimist agent (wt%) | - | - | - | - | - |
| | UV absorbent (wt%) | - | - | - | 2.5 | 2.5 |
| | Layer thickness (m) | 20 | 20 | 20 | 20 | 20 |
| Intermediate layer | Resin blend ratio | ← | ii/iii | ii/iii | ii/iii | ii/iii |
| | (wt/wt) | | =85/15 | =85/15 | =85/15 | =85/15- |
| | Surfactant (a) (wt%) | - | - | - | - | 3.0 |
| | Surfactant (b) (wt%) | 3.0 | 3.0 | 3.0 | 3.0 | - |
| | Antifogging agent-migration-preventing agent (wt%) | - | W-3 | - | W-3 | - |
| | | - | 2.0 | - | 2.0 | - |
| | Antifogging agent (wt%) | - | - | - | - | - |
| | | - | - | - | - | 0.2 |
| | Weathering agent (wt%) | 0.2 | 0.2 | 0.2 | 0.2 | 10.0 |
| | Hydrotalcite (wt%) | 7.0 | 10.0 | 10.0 | 10.0 | 0.1 |
| | Antimist agent (wt%) | - | 0.1 | 0.1 | 0.1 | 2.5 |
| | UV absorbent (wt%) | - | - | - | 2.5 | 60 |
| | Layer thickness (m) | 60 | 60 | 60 | 60 | |

Table 9-2 (continued)

| | | Ex. 54 | Ex. 55 | Ex. 56 | Ex. 57 | Ex. 58 |
|---|---|---|---|---|---|---|
| Inner layer | Resin blend ratio | ← | ii/iii | ii/iii | ii/iii | ii/iii |
| | (wt/wt) | - | =85/15 | =85/15 | =85/15 | =85/15 |
| | Surfactant (a) (wt%) | 3.0 | - | - | - | - |
| | Surfactant (b) (wt%) | - | 3.0 | 3.0 | 3.0 | 3.0 |
| | Antifogging agent-migration-preventing agent (wt%) | - | W-3 | - | W-3 | - |
| | | | 2.0 | - | 2.0 | - |
| | | TBO-1 | TBO-1 | TBO-1 | TBO-1 | TBO-1 |
| | Antifogging agent (wt%) | 3.0 | 3.0 | 3.0 | 3.0 | 3.0 |
| | Weathering agent (wt%) | 0.1 | 0.1 | 0.1 | 0.1 | 0.1 |
| | Hydrotalcite (wt%) | - | - | - | - | - |
| | Antimist agent (wt%) | - | 0.1 | 0.1 | 0.1 | 0.1 |
| | UV absorbent (wt%) | - | - | - | 0.2 | 0.2 |
| | Layer thickness (m) | 20 | 20 | 20 | 20 | 20 |

Table 9-3

| | | Ex. 59 | Ex. 60 | Ex. 61 | Ex. 62 |
|---|---|---|---|---|---|
| Outer layer | Resin blend ratio | i/iii | i/iii | i/iii | i/iii |
| | (wt/wt) | =85/15 | =85/15 | =85/15 | =85/15 |
| | Surfactant (a) (wt%) | - | - | - | - |
| | Surfactant (b) (wt%) | 3.0 | 3.0 | 3.0 | 3.0 |
| | Antifogging agent- | W-3 | - | W-3 | - |
| | migration-preventing agent (wt%) | 2.0 | - | 2.0 | - |
| | Antifogging agent (wt%) | - | - | - | - |
| | Weathering agent (wt%) | 0.2 | 0.2 | 0.2 | 0.2 |
| | Hydrotalcite (wt%) | 3.0 | 3.0 | 3.0 | 3.0 |
| | Antimist agent (wt%) | - | - | - | - |
| | UV absorbent (wt%) | - | - | - | - |
| | Layer thickness (μm) | 26 | 26 | 30 | 30 |

Table 9-3 (continued)

| | | Ex. 59 | Ex. 60 | Ex. 61 | Ex. 62 |
|---|---|---|---|---|---|
| Intermediate layer | Resin blend ratio | ii/iii | ii/iii | ii/iii | ii/iii |
| | (wt/wt) | =85/15 | =85/15 | =85/15 | =85/15 |
| | Surfactant (a) (wt%) | - | - | - | - |
| | Surfactant (b) (wt%) | 3.0 | 3.0 | 3.0 | 3.0 |
| | Antifogging agent- | W-3 | - | W-3 | - |
| | migration-preventing agent (wt%) | 2.0 | - | 2.0 | - |
| | Antifogging agent (wt%) | - | - | - | - |
| | | - | - | - | - |
| | Weathering agent (wt%) | 0.2 | 0.2 | 0.2 | 0.2 |
| | Hydrotalcite (wt%) | 10.0 | 10.0 | 10.0 | 10.0 |
| | Antimist agent (wt%) | 0.1 | 0.1 | 0.1 | 0.1 |
| | UV absorbent (wt%) | - | - | - | - |
| | Layer thickness (μm) | 78 | 78 | 90 | 90 |
| Inner layer | Resin blend ratio | ii/iii | ii/iii | ii/iii | ii/iii |
| | (wt/wt) | =85/15 | =85/15 | =85/15 | =85/15 |
| | Surfactant (a) (wt%) | - | - | - | - |
| | Surfactant (b) (wt%) | 3.0 | 3.0 | 3.0 | 3.0 |
| | Antifogging agent-migration-preventing agent (wt%) | W-3 | - | W-3 | - |
| | | 2.0 | - | 2.0 | - |
| | Antifogging agent (wt%) | TBO-1 | TBO-1 | TBO-1 | TBO-1 |
| | | 3.0 | 3.0 | 3.0 | 3.0 |
| | Weathering agent (wt%) | 0.1 | 0.1 | 0.1 | 0.1 |
| | Hydrotalcite (wt%) | - | - | - | - |
| | Antimist agent (wt%) | 0.1 | 0.1 | 0.1 | 0.1 |
| | UV absorbent (wt%) | - | - | - | - |
| | Layer thickness (μm) | 26 | 26 | 30 | 30 |

Table 10-1

| | Ex. 49 | Ex. 50 | Ex. 51 | Ex. 52 | Ex. 53 | Ex. 54 | Ex. 55 |
|---|---|---|---|---|---|---|---|
| Extrudability | ○ | ○ | ○ | ○ | ○ | ○ | ○ |
| Initial antifog properties | ○ | ○ | ○ | ○ | ○ | ○ | ○ |
| Prolonged antifog properties | ○ | ○ | ○ | ○ | △~○ | △~○ | ○ |

Table 10-2

| | Ex. 56 | Ex. 57 | Ex. 58 | Ex. 59 | Ex. 60 | Ex. 61 | Ex. 62 |
|---|---|---|---|---|---|---|---|
| Extrudability | ○ | ○ | ○ | ○ | ○ | ○ | ○ |
| Initial antifog properties | ○ | ○ | ○ | ○ | ○ | ○ | ○ |
| Prolonged antifog properties | ○ | ○ | ○ | ○ | ○ | ○ | ○ |

INDUSTRIAL UTILITY

The novel triblock oligomer of the present invention can be blended in a thermoplastic resin as an antifogging agent, and the thus prepared resin composition exhibits excellent and stable antistatic performance and antifogging performance immediately after the extrusion and for a prolonged period.

The thermoplastic resin composition of the present invention contains the triblock oligomer as described above, and therefore, the resin composition exhibits antistatic and antifogging performance and such performance lasts for a prolonged period at a stable level.

The antifog extruded/molded article of the present invention exhibits antistatic and antifogging performance as early as immediately after its extrusion, and such antistatic and antifogging performance continues at a level higher than the conventional articles. The antifog extruded/molded article containing the triblock oligomer of the present invention as an antifogging agent is particularly excellent in such performance.

**Claims**

**1.** A triblock oligomer (A) which has a structure represented by the following general formula (I):

$$A—B—C \qquad (I)$$

wherein A has a structure represented by the following general formula (II):

$$R^1—X— \qquad (II)$$

wherein $R^1$ represents a straight chain or branched alkyl group or alkenyl group containing 10 to 40 carbon atoms, or a homopolymer or a copolymer of an $\alpha$-olefin containing 2 to 4 carbon atoms, and X represents oxygen atom, OC(=O), C(=O)O, OC(=O)O, NHC(=O), or C(=O)NH;

B has a structure represented by the following general formula (III):

$$-\!\!\left(R^2-O\right)_m\!\!-\!\!\left(R^3-O\right)_n\!\!- \qquad \cdots\cdots(III)$$

wherein $R^2$ and $R^3$ represent a straight chain or branched alkylene group containing 1 to 4 carbon atoms and $R^2$ and $R^3$ are different from each other, m is an integer of 1 to 30, and n is an integer of 0 to 29 with the proviso that $m + n \leqq 30$; and

C has the structure represented by the following general formula (IV):

$$—R^4—Y—R^5 \qquad (IV)$$

wherein $R^4$ represents a straight chain or branched alkylene group containing 1 to 4 carbon atoms, Y represents oxygen atom, OC(=O), C(=O)O, OC(=O)O, NHC(=O), or C(=O)NH, and $R^5$ represents hydrogen atom, a straight chain or branched alkyl group, alkenyl group, or aryl group containing 1 to 40 carbon atoms, or a homopolymer or a copolymer of an $\alpha$-olefin containing 2 to 4 carbon atoms; and

which has a weight average molecular weight measured by gel permeation chromatography in the range of 100 to 8000.

2. A triblock oligomer (A) according to claim 1 which has a weight average molecular weight measured by gel permeation chromatography of 500 to 8000.

3. A triblock oligomer (A) according to claim 1 or 2 wherein said triblock oligomer (A) is a reaction product of a higher fatty acid (B) containing 10 to 40 carbon atoms or a polyolefin having a carboxylic acid group (C) with a polyoxyalkylene compound (D) represented by the following general formula (V):

$$Z\!\left(R^2-O\right)_m\!\left(R^3-O\right)_n R^4-O-R^5 \quad \cdots\cdots(V)$$

wherein $R^2$, $R^3$ and $R^4$ represent a straight chain or branched alkylene group containing 1 to 4 carbon atoms and $R^2$ and $R^3$ are different from each other, $R^5$ represents a straight chain or branched alkyl group, alkenyl group, or aryl group containing 1 to 40 carbon atoms, or a homopolymer or a copolymer of an $\alpha$-olefin containing 2 to 4 carbon atoms, Z represents OH or $NH_2$, m is an integer of 1 to 30, and n is an integer of 0 to 29 with the proviso that $m + n \leqq 30$; or a polyoxyalkylene compound (E) represented by the following general formula (VI):

$$Z\!\left(R^2-O\right)_m\!\left(R^3-O\right)_n R^4-Z \quad \cdots\cdots(VI)$$

wherein $R^2$, $R^3$ and $R^4$ represent a straight chain or branched alkylene group containing 1 to 4 carbon atoms and $R^2$ and $R^3$ are different from each other, Z represents OH or $NH_2$, m is an integer of 1 to 30, and n is an integer of 0 to 29 with the proviso that $m + n \leqq 30$.

4. A triblock oligomer (A) according to claim 3 wherein said higher fatty acid (B) is a higher fatty acid containing 10 to 40 carbon atoms obtained by oxidation or hydrolysis of a natural wax.

5. An antifogging agent characterized in that said agent comprises a triblock oligomer (A) of claim 1 or 2.

6. A thermoplastic resin composition characterized in that said composition comprises a thermoplastic resin (F) and 0.1 to 20 parts by weight of the triblock oligomer (A) of claim 1 or 2 per 100 parts by weight of the thermoplastic resin (F).

7. A thermoplastic resin composition characterized in that said composition comprises a thermoplastic resin (F), 0.1 to 20 parts by weight of the triblock oligomer (A) of claim 1 or 2, and 0.01 to 30 parts by weight of a surfactant (G) per 100 parts by weight of the thermoplastic resin (F).

8. A thermoplastic resin composition characterized in that said composition comprises a thermoplastic resin (F), 0.1 to 20 parts by weight of the triblock oligomer (A) of claim 1 or 2, 0.01 to 30 parts by weight of a surfactant (G), and 0.01 to 30 parts by weight of an agent for preventing migration of the antifogging agent (H) selected from the group consisting of a hydrocarbon resin, a modified polyolefin, an oxidized polyolefin and a natural wax per 100 parts by weight of the thermoplastic resin (F).

9. A thermoplastic resin composition according to any one of claims 6 to 8 wherein said thermoplastic resin (F) is at least one thermoplastic resin selected from the group consisting of a polyolefin, a polyvinyl chloride, and an ethylene-vinyl acetate copolymer.

10. An antifog extruded/molded article comprising a thermoplastic resin (F) and an antifogging agent (J) wherein ratio (O/C) of number of oxygen atoms to number of carbon atoms on the surface of the extruded/molded article is at least 10/100, characterized in that

said antifogging agent (J) is dispersed in the surface region of at least 5 μm thick in the conditions such that:

the average particle diameter is in the range of 0.05 to 0.5 μm;
ratio Lw/Lh of average particle diameter in the direction of major axis (Lw) to average particle diameter in the direction of minor axis (Lh) of the dispersed particles is up to 3.0; and
average distance between gravity center of the dispersed particles is up to 1.5 μm.

**11.** An antifog extruded/molded article according to claim 10 wherein said antifogging agent (J) contains within its molecule at least one of the functional groups represented by the following formula (J-1) to (J-5):

$$-(R^6-O)_p-R^7 \quad (J-1)$$

wherein $R^6$ represents a straight chain or branched alkylene group containing 1 to 4 carbon atoms, $R^7$ represents hydrogen atom or a straight chain or branched alkyl group containing 1 to 22 carbon atoms, and p is an integer of 1 to 30;

$$-OH; \quad (J-2)$$

$$-SO_3X \quad (J-3)$$

wherein X represents hydrogen atom or Na, K or Li;

$$-N^+(R)_3Q^- \quad (J-4)$$

wherein the three R in the formula may be the same or different, and may represent hydrogen atom or an alkyl group containing 1 to 3 carbon atoms, and Q represents Cl, Br or I;

$$—N^+(R)_2COO^- \quad (J-5)$$

wherein the two R in the formula may be the same or different, and may represent hydrogen atom or an alkyl group containing 1 to 3 carbon atoms.

**12.** An antifog extruded/molded article according to claim 10 or 11 wherein said antifogging agent (J) has a weight average molecular weight measured by gel permeation chromatography of 100 to 8,000, and an absolute value of the difference ($dX = |Xf - Xj|$) between solubility parameter value of said thermoplastic resin (F) (Xf) and solubility parameter value of said antifogging agent (J) (Xj) of 0 to 1 $(cal/ml)^{1/2}$.

**13.** An antifog extruded/molded article according to claim 10 or 11 wherein said antifogging agent (J) has a weight average molecular weight measured by gel permeation chromatography of 100 to 5,000.

**14.** An antifog extruded/molded article according to any one of claims 10 to 13 wherein said thermoplastic resin (F) is a polyolefin, and said antifogging agent (J) has a value of solubility parameter of 7 to 9 $(cal/ml)^{1/2}$.

**15.** An antifog extruded/molded article according to any one of claims 10 to 14 wherein said antifogging agent (J) has a structure represented by the following general formula (I):

$$A—B—C \quad (I)$$

wherein A has a structure represented by the following general formula (II):

$$R^1—X— \quad (II)$$

wherein $R^1$ represents a straight chain or branched alkyl group or alkenyl group containing 10 to 40 carbon atoms, or a homopolymer or a copolymer of an α-olefin containing 2 to 4 carbon atoms, and X represents oxygen atom, OC(=O), C(=O)O, OC(=O)O, NHC(=O), or C(=O)NH;

B has a structure represented by the following general formula (III):

$$-\!\left(R^2\!-\!O\right)_m\!\left(R^3\!-\!O\right)_n\!- \qquad \cdots\cdots(III)$$

wherein $R^2$ and $R^3$ represent a straight chain or branched alkylene group containing 1 to 4 carbon atoms and $R^2$ and $R^3$ are different from each other, m is an integer of 1 to 30, and n is an integer of 0 to 29 with the proviso that $m + n \leqq 30$; and

C has the structure represented by the following general formula (IV):

$$—R^4—Y—R^5 \qquad (IV)$$

wherein $R^4$ represents a straight chain or branched alkylene group containing 1 to 4 carbon atoms, Y represents oxygen atom, OC(=O), C(=O)O, OC(=O)O, NHC(=O), or C(=O)NH, and $R^5$ represents hydrogen atom, a straight chain or branched alkyl group, alkenyl group, or aryl group containing 1 to 40 carbon atoms, or a homopolymer or a copolymer of an $\alpha$-olefin containing 2 to 4 carbon atoms; and has a weight average molecular weight measured by gel permeation chromatography in the range of 100 to 8000.

**16.** An antifog extruded/molded article according to any one of claims 10 to 15 wherein said antifogging agent (J) is a reaction product of a higher fatty acid (B) containing 10 to 40 carbon atoms or a polyolefin having a carboxylic acid group (C) with a polyoxyalkylene compound (D) represented by the following general formula (V):

$$Z\!\left(R^2\!-\!O\right)_m\!\left(R^3\!-\!O\right)_n\!R^4—O—R^5 \qquad \cdots\cdots(V)$$

wherein $R^2$, $R^3$ and $R^4$ represent a straight chain or branched alkylene group containing 1 to 4 carbon atoms and $R^2$ and $R^3$ are different from each other, $R^5$ represents a straight chain or branched alkyl group, alkenyl group, or aryl group containing 1 to 40 carbon atoms, or a homopolymer or a copolymer of an $\alpha$-olefin containing 2 to 4 carbon atoms, Z represents OH or $NH_2$, m is an integer of 1 to 30, and n is an integer of 0 to 29 with the proviso that $m + n \leqq 30$; or a polyoxyalkylene compound (E) represented by the following general formula (VI):

$$Z\!\left(R^2\!-\!O\right)_m\!\left(R^3\!-\!O\right)_n\!R^4—Z \qquad \cdots\cdots(VI)$$

wherein $R^2$, $R^3$ and $R^4$ represent a straight chain or branched alkylene group containing 1 to 4 carbon atoms and $R^2$ and $R^3$ are different from each other, Z represents OH or $NH_2$, m is an integer of 1 to 30, and n is an integer of 0 to 29 with the proviso that $m + n \leqq 30$.

**17.** An antifog extruded/molded article according to any one of claims 10 to 16 wherein said antifogging agent (J) is a reaction product of a polyolefin having a carboxylic acid group (C) or a higher fatty acid containing at least 16 carbon atoms or a derivative thereof (B-1) with a polyoxyalkylene compound (D) represented by the following general formula (XVIII):

$$L\!\left(R^6—O\right)_p\!—R^7 \qquad (XVIII)$$

wherein L represents OH or $NH_2$, $R^6$ represents a straight chain or branched alkylene group containing 1 to 4 carbon atoms, $R^7$ represents a straight chain or branched alkyl group containing 1 to 22 carbon atoms, and p is an integer of 1 to 30.

**18.** An antifog extruded/molded article according to claim 16 or 17 wherein said higher fatty acid (B) is a higher fatty acid containing 10 to 40 carbon atoms obtained by oxidation or hydrolysis of a natural wax.

**19.** An antifog extruded/molded article according to any one of claims 10 to 18 characterized in that said extruded/molded article comprises a thermoplastic resin (F), and 0.1 to 20 parts by weight of said antifogging agent (J) per 100 parts by weight of the thermoplastic resin (F).

**20.** An antifog extruded/molded article according to any one of claims 10 to 18 characterized in that said extruded/molded article comprises a thermoplastic resin (F), 0.1 to 20 parts by weight of said antifogging agent (J), and 0.01 to 30 parts by weight of a surfactant (G) per 100 parts by weight of the thermoplastic resin (F).

**21.** An antifog extruded/molded article according to any one of claims 10 to 18 characterized in that said composition comprises a thermoplastic resin (F), 0.1 to 20 parts by weight of said antifogging agent (J), 0.01 to 30 parts by weight of a surfactant (G), and 0.01 to 30 parts by weight of an agent for preventing migration of the antifogging agent (H) selected from the group consisting of a hydrocarbon resin, a modified polyolefin, an oxidized polyolefin and a natural wax per 100 parts by weight of the thermoplastic resin (F).

**22.** An antifog extruded/molded article according to any one of claims 10 to 21 wherein said thermoplastic resin (F) is at least one thermoplastic resin selected from the group consisting of a polyolefin, a polyvinyl chloride, and an ethylene-vinyl acetate copolymer.

**23.** An antifog extruded/molded article according to any one of claims 10 to 22 wherein said article is a film.

**24.** An antifog extruded/molded article according to claim 23 wherein said film is a film for agricultural purpose.

# INTERNATIONAL SEARCH REPORT

International application No.
PCT/JP98/01446

**A. CLASSIFICATION OF SUBJECT MATTER**
Int.Cl⁶ C08G65/32, C09K3/18, C08J5/18, A01G9/14

According to International Patent Classification (IPC) or to both national classification and IPC

**B. FIELDS SEARCHED**

Minimum documentation searched (classification system followed by classification symbols)
Int.Cl⁶ C08G65/00-65/32, C09K3/18, C08J5/18, A01G9/14

Documentation searched other than minimum documentation to the extent that such documents are included in the fields searched

Electronic data base consulted during the international search (name of data base and, where practicable, search terms used)
CAS ONLINE, WPI/L

**C. DOCUMENTS CONSIDERED TO BE RELEVANT**

| Category* | Citation of document, with indication, where appropriate, of the relevant passages | Relevant to claim No. |
|---|---|---|
| X<br>A | GB, 1157353, A (W.R. Grace and Co.), May 4, 1967 (04. 05. 67), Claims ; page 2, right column, lines 114 to 129 & US, 6837251, A & DE, 1769255, A1 | 1-7, 9<br>8, 10-24 |
| X<br>Y<br>A | JP, 7-228686, A (Dai-ichi Kogyo Seiyaku Co., Ltd.), August 29, 1995 (29. 08. 95), Claims ; Par. No. [0011] (Family: none) | 1-2, 4-7, 9<br>3<br>8, 10-24 |
| X<br>Y<br>A | JP, 6-306190, A (Mitsubishi Kasei Vinyl Co.), November 1, 1994 (01. 11. 94), Claims ; Par. No. [0026] (Family: none) | 1-2, 4-7, 9<br>3<br>8, 10-24 |
| X<br>Y<br>A | JP, 4-293949, A (NOF Corp.), October 19, 1992 (19. 10. 92), Claims ; page 4 (Family: none) | 1-2, 4-7, 9<br>3<br>8, 10-24 |
| X<br>Y<br>A | JP, 57-187353, A (NOF Corp.), November 18, 1982 (18. 11. 82), Claims ; page 3 (Family: none) | 1-2, 4-7, 9<br>3<br>8, 10-24 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| June 17, 1998 (17. 06. 98) | June 30, 1998 (30. 06. 98) |
| Name and mailing address of the ISA/<br>Japanese Patent Office<br>Facsimile No. | Authorized officer<br><br>Telephone No. |

Form PCT/ISA/210 (second sheet) (July 1992)

## INTERNATIONAL SEARCH REPORT

International application No.
PCT/JP98/01446

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP, 56-22341, A (Riken Vitamin Oil Co., Ltd.), March 2, 1981 (02. 03. 81), Claims (Family: none) | 3<br>1-2, 4-24 |
| Y<br>A | JP, 60-120737, A (NOF Corp.), June 28, 1985 (28. 06. 85), Claims (Family: none) | 3<br>1-2, 4-24 |
| A | JP, 48-40680, A (Emery Industries, Inc.), June 14, 1973 (14. 06. 73), Claims & GB, 1411387, A & FR, 2153457, A1 | 1-24 |

Form PCT/ISA/210 (continuation of second sheet) (July 1992)

## INTERNATIONAL SEARCH REPORT

International application No.
PCT/JP98/01446

**Box I Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

Claims 1 to 9 relate to inventions of oligomers, antifogging agents comprising the oligomers, and compositions containing the oligomers respectively. However, claims 10 to 14 relate to inventions of moldings containing antifogging agents in which no specific antifogging agent as described in claims 1 to 9 is used. A conventional antifogging agent per se is not any special technical matter, so that there is no matter common to all of the claims.

Further, there is no other common matter considered as a special technical matter in the sense of the second sentence of Rule 13.2 of the Regulations under the PCT, so that no technical relationship in the sense of Rule 13

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☒ No protest accompanied the payment of additional search fees.

Form PCT/ISA/210 (continuation of first sheet (1)) (July 1992)

INTERNATIONAL SEARCH REPORT

International application No.
PCT/JP98/01446

Continuation of Box No. II of continuation of first sheet (1)

of the Regulations under the PCT can be found among the inventions linked with each other.

Thus, it is apparent that claims 1 to 14 do not comply with the requirement of unity of invention.

Additionally, claims 15 to 24 relate to inventions according to claims 10 to 14, so that claims 15 to 24 as well as claims 1 to 14 do not comply with the requirement of unity of invention.

Form PCT/ISA/210 (extra sheet) (July 1992)